(19) Europäisches Patentamt / European Patent Office / Office européen des brevets

(11) **EP 2 464 017 A1**

(12) **EUROPEAN PATENT APPLICATION**
published in accordance with Art. 153(4) EPC

(43) Date of publication:
**13.06.2012 Bulletin 2012/24**

(51) Int Cl.:
*H03M 7/30* (2006.01)     *H04N 7/30* (2006.01)
*H04N 7/32* (2006.01)

(21) Application number: **10806250.6**

(22) Date of filing: **06.08.2010**

(86) International application number:
**PCT/JP2010/004958**

(87) International publication number:
**WO 2011/016250 (10.02.2011 Gazette 2011/06)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **06.08.2009 JP 2009183791**
**21.08.2009 JP 2009192618**

(71) Applicant: **Panasonic Corporation
Kadoma-shi
Osaka 571-8501 (JP)**

(72) Inventors:
• **SHIBAHARA, Youji
Osaka 540-6207 (JP)**

• **NISHI, Takahiro
Osaka 540-6207 (JP)**
• **SASAI, Hisao
Osaka 540-6207 (JP)**
• **TANIKAWA, Kyoko
Osaka 540-6207 (JP)**
• **NARROSCHKE, Matthias
63225 Langen (DE)**
• **DRUGEON, Virginie
Osaka 540-6207 (JP)**

(74) Representative: **Grünecker, Kinkeldey,
Stockmair & Schwanhäusser
Leopoldstrasse 4
80802 München (DE)**

(54) **ENCODING METHOD, DECODING METHOD, ENCODING DEVICE AND DECODING DEVICE**

(57)    A coding method according to an implementation of the present invention includes: transforming an input signal using a first transform coefficient (S110); transforming, using a second transform coefficient, a first partial signal that is a part of the first transformed output signal (S130b); quantizing the second transformed output signal and a second partial signal that is a part of the first transformed output signal other than the first partial signal (S150b); and entropy coding the quantized coefficient (S160), and the transforming of a first partial signal (S130b) includes: modifying the first partial signal or the second transform coefficient using a predetermined scaling parameter to generate a modified first partial signal or a modified second transform coefficient (S131); and generating the second transformed output signal (S132) by transforming the modified first partial signal using the second transform coefficient or transforming the first partial signal using the modified second transform coefficient.

FIG. 17

**Description**

[Technical Field]

The present invention relates to coding methods of coding audio, still images, and video, and in particular to a coding method including a process of transforming an input signal from a spatial-temporal domain into a frequency domain.

[Background Art]

In order to compress audio data and video data, the audio coding standards and the video coding standards have been developed. The examples of the video coding standards include the ITU-T standards denoted as H. 26x, and the ISO/IEC standards denoted as MPEG-x. The latest video coding standard is the standard denoted as H.264/MPEG-4AVC.

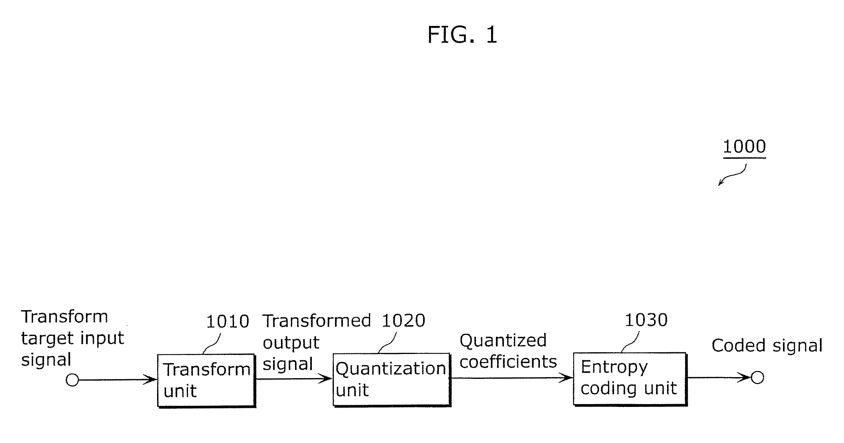

FIG. 1 is a block diagram showing a structure of a conventional coding apparatus 1000. As shown in FIG. 1, the coding apparatus 1000 includes a transform unit 1010, a quantization unit 1020, and an entropy coding unit 1030, and codes audio data and video data at a low bit rate.

The transform unit 1010 generates a transformed output signal with reduced correlation by transforming, from the spatial-temporal domain into the frequency domain, an input signal that is various data, or a transform target input signal that is obtained by performing some processing on the input signal. The transformed output signal generated as above is output to the quantization unit 1020.

The quantization unit 1020 quantizes the transformed output signal provided from the transform unit 1010 and thereby generates quantized coefficients having a small total amount of data. The quantized coefficients generated as above are output to the entropy coding unit 1030.

The entropy coding unit 1030 codes the quantized coefficients provided from the quantization unit 1020, using an entropy coding algorithm, and thereby generates a coded signal having a reduced amount of data. The coded signal generated as above is, for example, recorded on a recording medium or transmitted to a decoding apparatus through a network.

Transform processing which the transform unit 1010 performs is described in detail below.

To the transform unit 1010, an n-point vector (n-dimensional signal) that is a transform target signal (i.e., the transform target input signal) is input as a transform input vector $x^n$. The transform unit 1010 performs predetermined transform processing (a transform T) on the transform input vector $x^n$ and outputs transform output vector $y^n$ as the transformed output signal (cf. Expression 1).

[Math. 1]

$$y^n = T[x^n]$$

(Expression 1)

When the transform T is a linear transform, the transform T can be expressed, as indicated by Expression 2, as a matrix product of the transform input vector $x^n$ and a transform matrix A that is an nxn square matrix. It is to be noted that Expression 3 is an expression for calculating, for each element $y_i$, the transform output vector $y^n$, using a transform coefficient $a_{ik}$ that is an element of the transform matrix A, and is derived from Expressions 1 and 2.

[Math. 2]

$$T[x^n] = Ax^n$$

(Expression 2)

[Math. 3]

$$y_i = \sum_{k=1}^{n} a_{ik} x_k$$

(Expression 3)

The transform matrix A is designed to reduce the correlation of an input signal and concentrate energy into an element having n which is small (on what is called a low-frequency side) among the elements of the transform output vector $y^n$. For designing the transform matrix A, a transform coefficient deriving method or a transforming method called Karhunen Loeve Transform (KLT) is known.

The KLT is a method of deriving an optimum transform matrix or a transforming method using a derived optimum transform matrix, based on the statistical properties of an input signal. The KLT is known as a technique for enabling complete elimination of correlation of an input signal and enabling most efficient energy concentration into a low-frequency band.

In other words, the KLT is ideal transform processing, and a signal transformed by the KLT and to be coded can be coded with good coding efficiency.

[Summary of Invention]

[Technical Problem]

However, the KLT in the above conventional technique has a problem that an amount of computation is large and an amount of data of a transform matrix that is coefficients for use in a transform is large. Details are as follows.

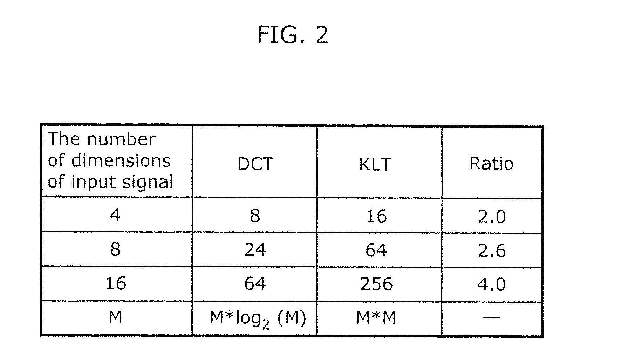

As shown in FIG. 2, in the case of the discrete cosine transform (DCT) using a high-speed algorithm, such as a butterfly operation, the number of multiplications is $M \times Log_2(M)$ where M is the number of dimensions (hereinafter referred to also as the number of inputs) of an input signal. In contrast, in the case of the KLT, the number of multiplications is MxM. For example, in the DCT, the number of multiplications is 8 when the number of inputs is 4, and the number of multiplications is 24 when the number of inputs is 8. In contrast, in the KLT, the number of multiplications is 16 (two times as many as that in the DCT) when the number of inputs is 4, the number of multiplications is 64 (2.6 times as many as that in the DCT) when the number of inputs is 8, and the number of multiplications is 4.0 times as large as that in the DCT when the number of inputs is 16, for example. Since the amount of computation in the KLT is more likely to increase as the size of transform increases, the KLT has a problem of an enormous amount of computation as compared to the DCT.

In the KLT, the transform matrix A is derived based on the statistical properties of a set $S_A$ including the input signal vector $x^n$. For the input signal vector $x^n$ included in the set $S_A$, the transform using the transform matrix A enables the optimum elimination of correlation and the energy compression into the low-frequency band. However, when an input signal vector included in a set $S_B$ having different statistical properties from the designed set $S_A$ is input, a result of transform using the transform matrix A will not be optimum. Conversely, if a transform coefficient is generated at every slight change of the statistical properties of input to keep obtaining the optimum result, the amount of data of transform coefficients will be enormous.

As above, because the KLT has the problem that the amount of computation is large and the amount of data of transform coefficients is large, it used to be hard to utilize the KLT in the conventional coding.

Thus, the present invention has bee devised to solve the above problem and has an object to provide a coding method and a coding apparatus by which an increase in the amount of computation and an increase in the amount of data of transform coefficients are suppressed so that higher coding efficiency can be attained. Furthermore, the present invention has an object to provide a decoding method and decoding apparatus by which a signal coded by the coding method and the coding apparatus according to an implementation of the present invention can be correctly decoded.

[Solution to Problem]

In order to achieve the above object, a coding method according to an aspect of the present invention includes: transforming an input signal using a first transform coefficient to generate a first transformed output signal; transforming, using a second transform coefficient, a first partial signal that is a part of the first transformed output signal, to generate a second transformed output signal, the second transform coefficient being determined based on a statistical property of a set including the first partial signal; quantizing the second transformed output signal and a second partial signal that is a part of the first transformed output signal other than the first partial signal, to generate a quantized coefficient; and entropy coding the quantized coefficient to generate a coded signal, wherein the transforming of a first partial signal includes: modifying the first partial signal or the second transform coefficient using a predetermined scaling parameter to generate a modified first partial signal or a modified second transform coefficient; and generating the second transformed output signal by transforming the modified first partial signal using the second transform coefficient or transforming the first partial signal using the modified second transform coefficient.

With this, the transform processing has two stages: the first transform and the second transform, which suppresses the increase of the amount of computation and the increase of the amount of data of transform coefficients, so that higher coding efficiency can be attained. For example, the transform processing performed at two stages with different accuracy levels requires a smaller amount of computation than in the transform processing performed at one stage with high accuracy and achieves a transform with higher accuracy than in the transform processing performed at one stage with a small amount of computation. Furthermore, in performing the two-stage transform, the second transform can be more appropriate by performing modification using a scaling parameter which is used in quantization.

Furthermore, in the quantizing, the quantized coefficient may be generated by (i) quantizing the second transformed output signal without using the scaling parameter and (ii) quantizing the second partial signal using the scaling parameter.

With this, since the second transformed output signal and the second partial signal are quantized separately, each of the signals can be quantized in a manner appropriate for the signal, which allows an increase in coding efficiency and a decrease in image quality degradation.

Furthermore, it may be possible that, in the modifying, the second partial signal is further modified using the scaling parameter to generate a modified second partial signal, and in the quantizing, the second transformed output signal and the modified second partial signal are quantized.

With this, collectively quantizing the second transformed output signal and the second partial signal can reduce round-off errors which are generated in the quantization, so that computation accuracy can be increased.

Furthermore, in the modifying, a norm calculated from the first transform coefficient may be used as the scaling parameter.

With this, modifying a norm can make the second transform more appropriate even when a norm of the first transformed output signal resulting from the first transform is different at each frequency position.

Furthermore, it may be possible that, in the modifying, the modified first partial signal is generated by multiplying the first partial signal by a reciprocal of the norm, and in the generating of the second transformed output signal, the second transformed output signal is generated by transforming the modified first partial signal using the second transform coefficient.

With this, performing norm modification on the first partial signal can make the second transform more appropriate.

Furthermore, it may be possible that, in the modifying, the modified second transform coefficient is generated by multiplying the second transform coefficient by a reciprocal of the norm, and in the generating of the second transformed output signal, the second transformed output signal is generated by transforming the first partial signal using the modified second transform coefficient.

With this, performing norm modification on the second transform coefficient can lead to a smaller amount of computation than in the case of performing the norm modification on the first partial signal. For example, when one second transform coefficient is determined for a set of a plurality of first partial signals, the norm modification is not performed on each of the first partial signals included in the set, but is performed on the second transform coefficient no more than one time.

Furthermore, in the modifying, a quantization matrix may be used as the scaling parameter.

With this, modifying a quantization matrix in the second transform allows the second transformed output signal to correctly reflect the scaling of the quantization matrix.

Furthermore, it may be possible that, in the modifying, the modified first partial signal is generated by multiplying the first partial signal by a reciprocal of the quantization matrix, in the generating of the second transformed output signal, the modified first partial signal is transformed using the second transform coefficient to generate a transformed first partial signal, and the transforming of a first partial signal further includes multiplying the transformed first partial signal by a modification coefficient calculated from the quantization matrix, to generate the second transformed output signal.

With this, performing quantization matrix modification on the first partial signal can make the second transform more appropriate.

Furthermore, it may be possible that, in the modifying, the modified second transform coefficient is generated by multiplying the second transform coefficient by a reciprocal of the quantization matrix and a modification coefficient calculated from the quantization matrix, and in the generating of the second transformed output signal, the second transformed output signal is generated by transforming the first partial signal using the modified second transform coefficient.

With this, performing quantization matrix modification on the second transform coefficient can lead to a smaller amount of computation than in the case of performing the quantization matrix modification on the first partial signal. For example, when one second transform coefficient is determined for a set of a plurality of first partial signals, the quantization matrix modification is not performed on each of the first partial signals included in the set, but is performed on the second transform coefficient no more than one time.

Furthermore, the second transform coefficient may be a coefficient determined in the Karhunen Loeve transform (KLT).

Furthermore, a decoding method according to an aspect of the present invention includes: entropy decoding a coded signal to generate a decoded quantized coefficient; inverse quantizing the decoded quantized coefficient to generate a decoded transformed output signal; inverse transforming, using a second inverse transform coefficient, a second decoded transformed output signal that is a part of the decoded transformed output signal, to generate a first decoded partial signal; and inverse transforming, using a first inverse transform coefficient, a first decoded transformed output signal that includes the first decoded partial signal and a second decoded partial signal corresponding to a part of the decoded transformed output signal other than the second decoded transformed output signal, to generate a decoded signal, wherein, in the inverse transforming of a second decoded transformed output signal, the first decoded partial signal is generated by (i) inverse transforming the second decoded transformed output signal and modifying an inverse-transformed second decoded transformed output signal using a predetermined scaling parameter or (ii) modifying the second inverse transform coefficient using the predetermined scaling parameter and inverse transforming the second decoded transformed output signal using a modified second inverse transform coefficient.

With this, a coded signal generated using the above coding method can be decoded.

Furthermore, it may be possible that, in the inverse quantizing, the second decoded transformed output signal is generated by inverse quantizing, without using the scaling parameter, a first decoded quantized coefficient that is a part of the decoded quantized coefficient, and the second decoded partial signal is generated by inverse quantizing, using the scaling parameter, a second decoded quantized coefficient that is a part of the decoded quantized coefficient other than the first decoded quantized coefficient.

Furthermore, the coding method may further include generating the second partial signal by modifying, using the scaling parameter, the part of the decoded transformed output signal other than the second decoded transformed output signal.

Furthermore, in the inverse transforming of a second decoded transformed output signal, a norm calculated from the first inverse transform coefficient may be used as the scaling parameter.

Furthermore, it may be possible that, in the inverse transforming of a second decoded transformed output signal, the first decoded partial signal is generated by (i) inverse transforming the second decoded transformed output signal using the second inverse transform coefficient to generate the inverse-transformed second decoded transformed output signal and (ii) multiplying the inverse-transformed second decoded transformed output signal by the norm.

Furthermore, in the inverse transforming of a second decoded transformed output signal, the first decoded partial signal may be generated by (i) multiplying the second inverse transform coefficient by the norm to generate the modified second inverse transform coefficient and (ii) inverse transforming the second decoded transformed output signal using the modified second inverse transform coefficient.

Furthermore, in the inverse transforming of a second decoded transformed output signal, a quantization matrix may be used as the scaling parameter.

Furthermore, in the inverse transforming of a second decoded transformed output signal, the first decoded partial signal may be generated by (i) multiplying the second decoded transformed output signal by a reciprocal of a modification coefficient calculated from the quantization matrix, to generate a post-inverse-modified second decoded transformed output signal, (ii) inverse transforming the post-inverse-modified second decoded transformed output signal using the second inverse transform coefficient to generate the inverse-transformed second decoded transformed output signal, and (iii) multiplying the inverse-transformed second decoded transformed output signal by the quantization matrix.

Furthermore, in the inverse transforming of a second decoded transformed output signal, the first decoded partial signal may be generated by (i) multiplying the second inverse transform coefficient by the quantization matrix and a reciprocal of a modification coefficient calculated from the quantization matrix, to generate the modified second inverse transform coefficient, and (ii) inverse transforming the second decoded transformed output signal using the modified second inverse transform coefficient.

Furthermore, the second inverse transform coefficient may be a coefficient determined by the KLT.

In any one of the above decoding methods, the increase in the amount of computation and the increase in the amount of data of transform coefficients can be suppressed as in the case of the coding method. Furthermore, a signal coded in the above coding method can be decoded correctly.

It is to be noted that the present invention can be implemented not only as the coding method and the decoding method, but also as a coding apparatus and a decoding apparatus that include processing units which perform the respective processing steps included in the coding method and the decoding method. The present invention may also be implemented as a program which causes a computer to execute these steps. Furthermore, the present invention may also be implemented as a recoding medium, such as a computer-readable compact disc-read only memory (CD-ROM), on which the program has been recorded, and information, data, and signals which indicate the program. These program, information, data, and signals may be distributed via a communication network, such as the Internet.

In addition, part or all of the constituents of each of the above coding apparatus and decoding apparatus may be composed of a single system large scale integration (LSI). The system LSI is a super multifunctional LSI manufactured by integrating a plurality of structural units on a single chip and specifically is a computer system which includes a microprocessor, a ROM, a random access memory (RAM) and so on.

[Advantageous Effects of Invention]

With the coding method and the coding apparatus according to an aspect of the present invention, the increase in the amount of computation in the coding process and the increase in the amount of data of transform coefficients can be suppressed. Furthermore, with the decoding method and the decoding apparatus according to an aspect of the present invention, a signal coded in the coding method and the coding apparatus according to an aspect of the present invention can be decoded.

[Brief Description of Drawings]

[Fig. 1]
FIG. 1 is a block diagram showing a structure of a conventional coding apparatus.
[Fig. 2]
FIG. 2 shows comparison in an amount of computation between the DCT and the KLT.
[Fig. 3]

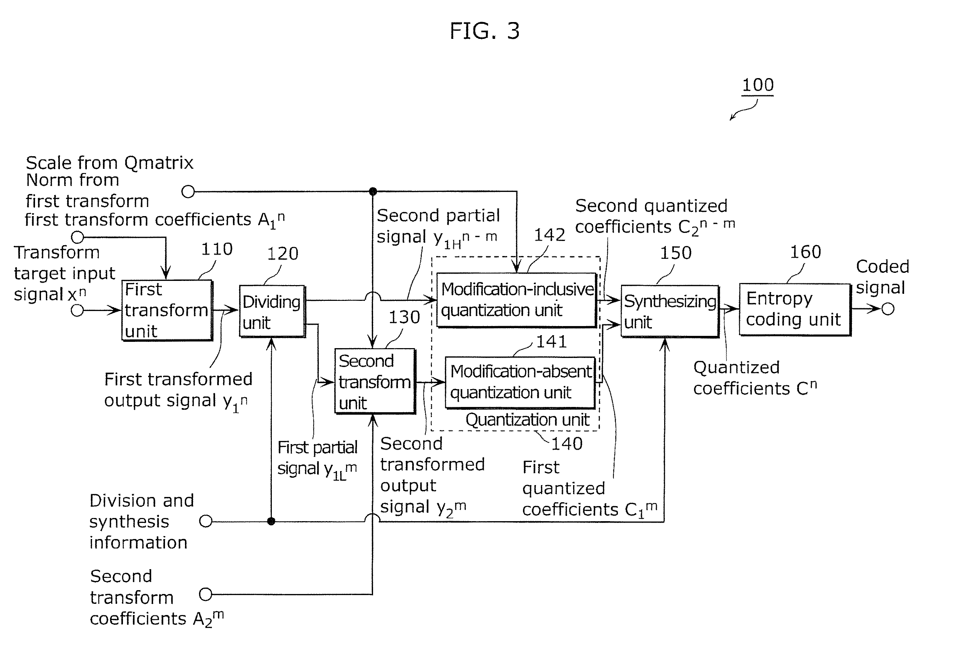

FIG. 3 is a block diagram showing an example of a structure of a coding apparatus according to Embodiment 1.
[Fig. 4]

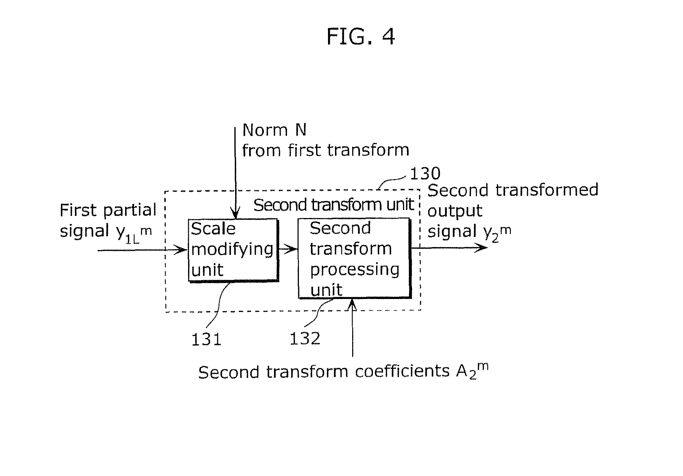

FIG. 4 is a block diagram showing an example of a structure of a second transform unit according to Embodiment 1.
[Fig. 5]

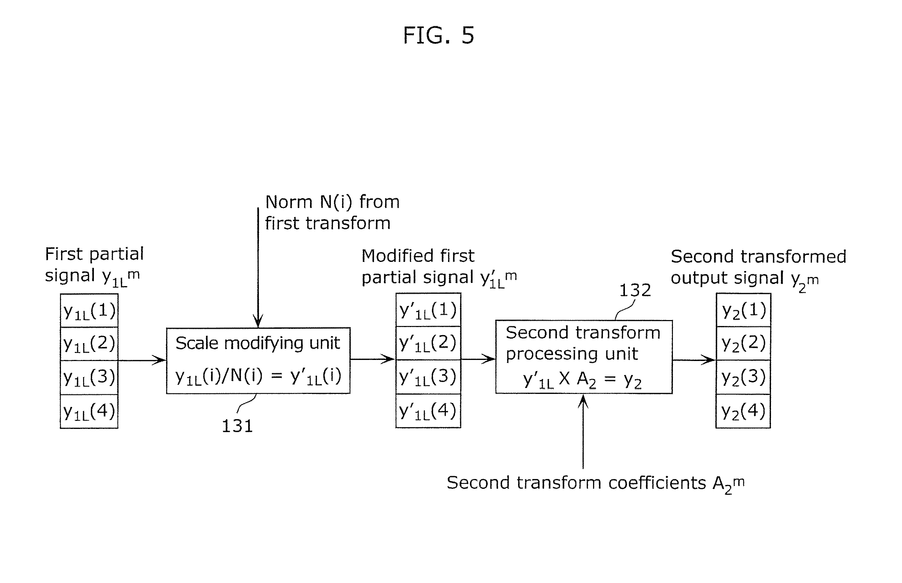

FIG. 5 conceptually shows an example of a data flow in the second transform unit according to Embodiment 1.
[Fig. 6]

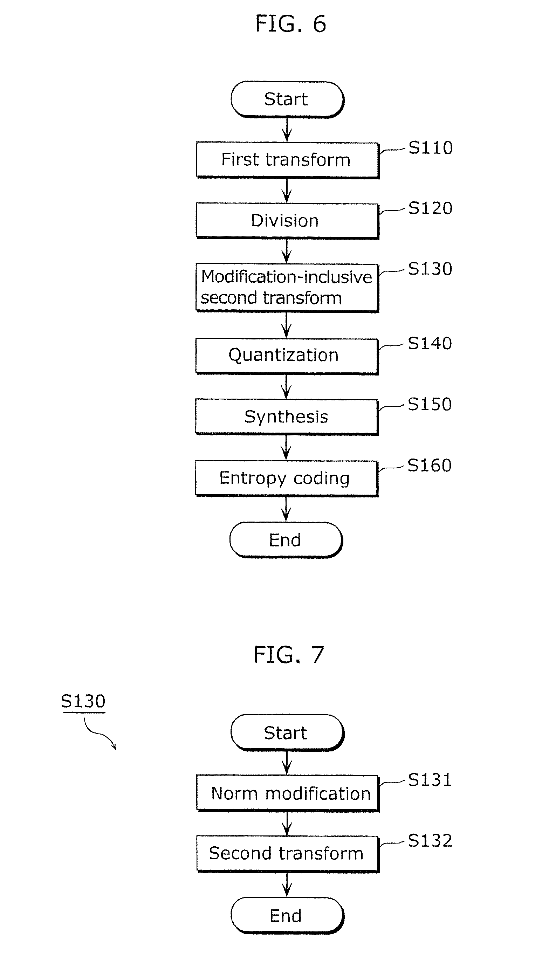

FIG. 6 is a flowchart showing an example of operation of the coding apparatus according to Embodiment 1.
[Fig. 7]
FIG. 7 is a flowchart showing an example of operation of the second transform unit according to Embodiment 1.
[Fig. 8]

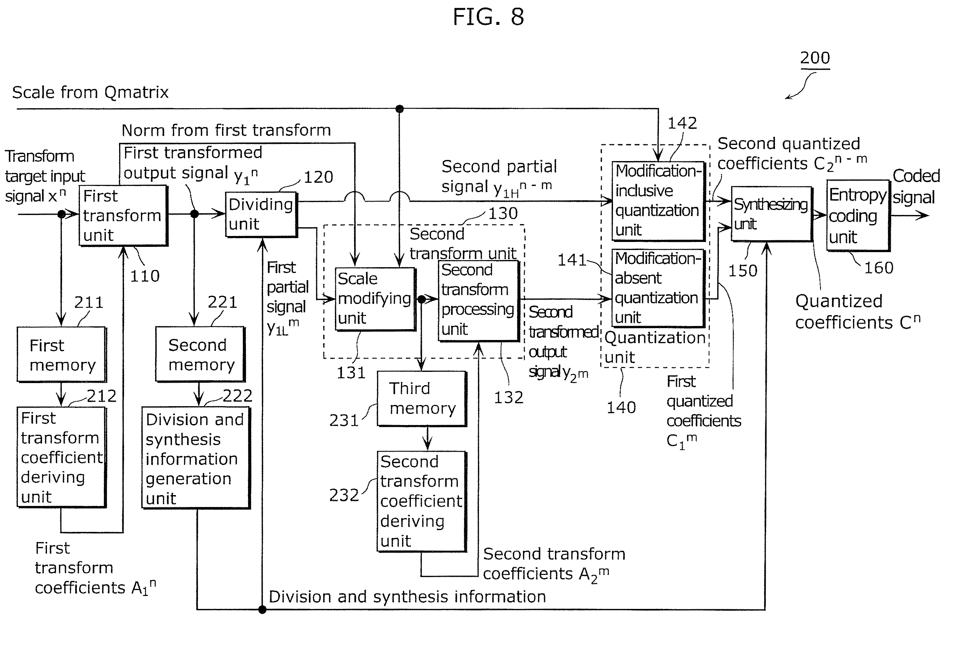

FIG. 8 is a block diagram showing an example of a structure of a coding apparatus according to Variation of Embodiment 1.
[Fig. 9]

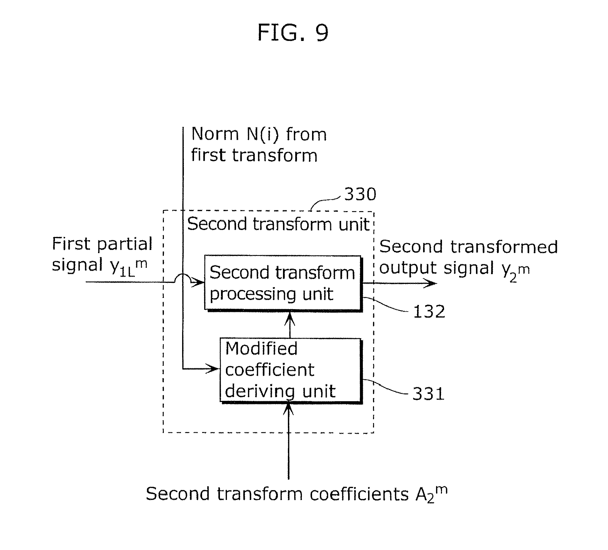

FIG. 9 is a block diagram showing an example of a structure of a second transform unit according to Variation of Embodiment 1.
[Fig. 10]

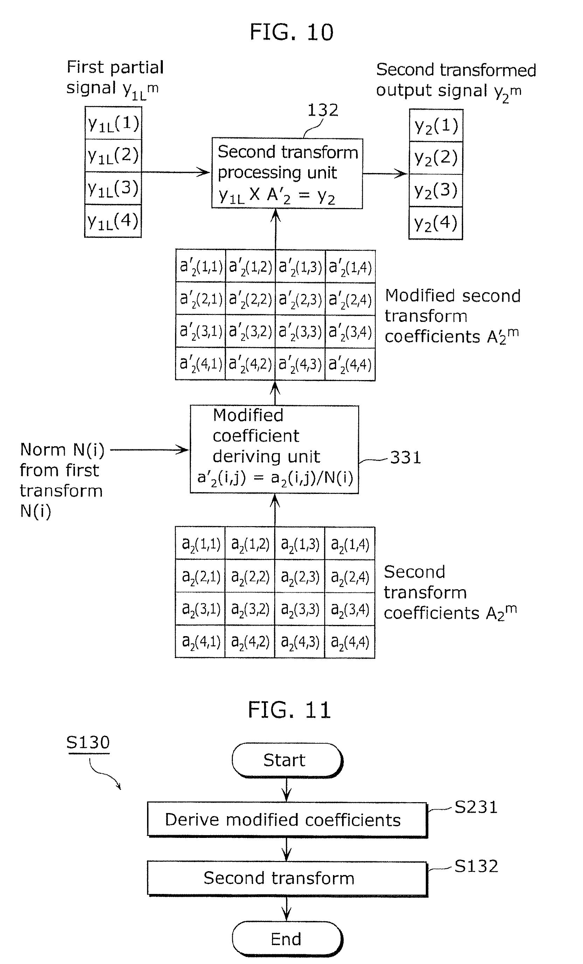

FIG. 10 conceptually shows an example of a data flow in the second transform unit according to Variation of Embodiment 1.
[Fig. 11]
FIG. 11 is a flowchart showing an example of operation of the second transform unit according to Variation of Embodiment 1.
[Fig. 12]

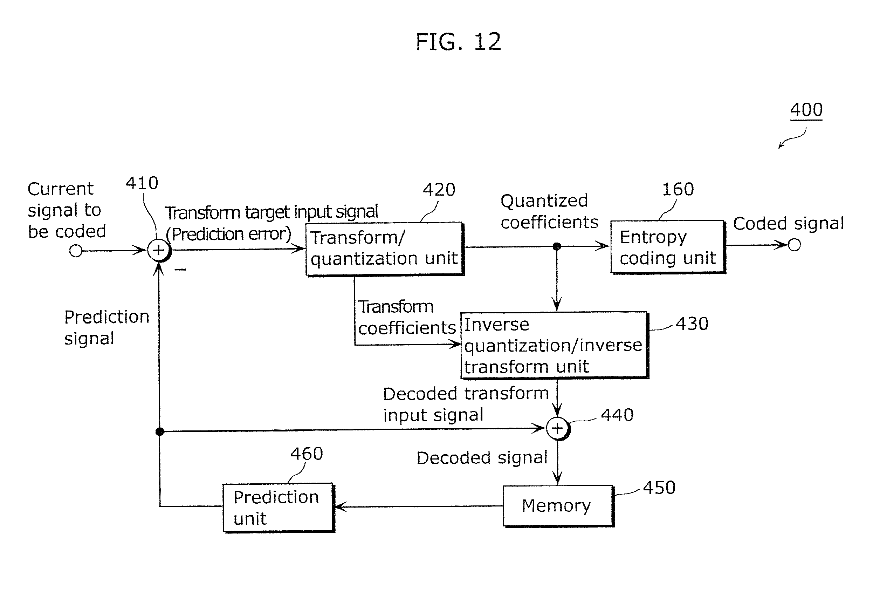

FIG. 12 is a block diagram showing an example of a structure of a coding apparatus according to Variation of Embodiment 1.
[Fig. 13]

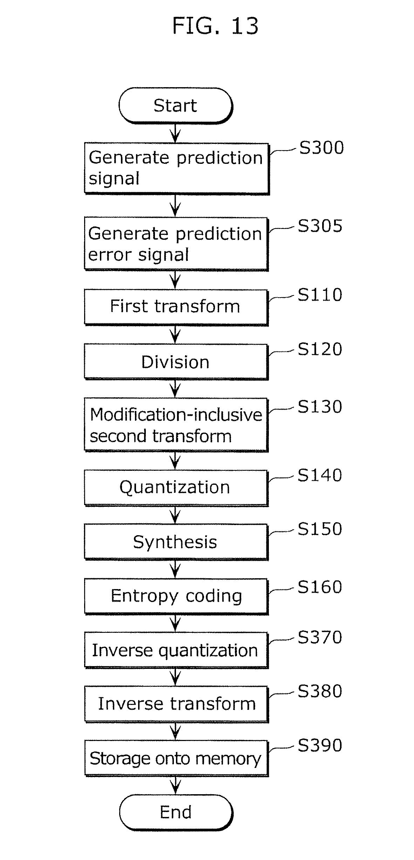

FIG. 13 is a flowchart showing an example of operation of the coding apparatus according to Variation of Embodiment 1.
[Fig. 14]

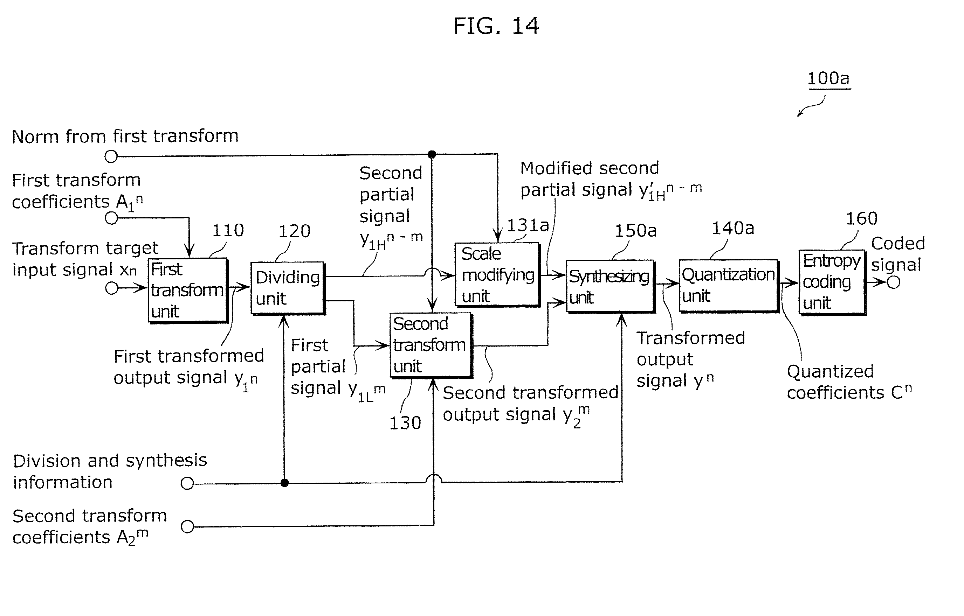

FIG. 14 is a block diagram showing an example of a structure of a coding apparatus according to Variation of Embodiment 1.
[Fig. 15]

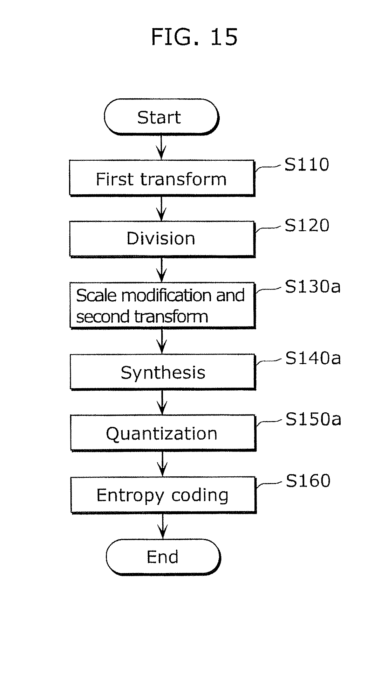

FIG. 15 is a flowchart showing an example of operation of the coding apparatus according to Variation of Embodiment 1.

[Fig. 16]

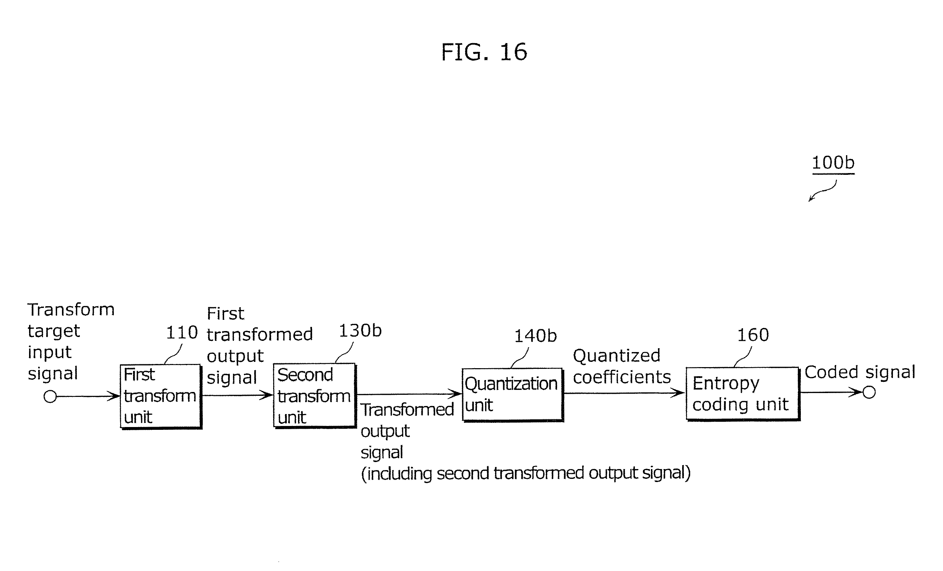

FIG. 16 is a block diagram showing an example of a structure of a coding apparatus according to Variation of Embodiment 1.

[Fig. 17]

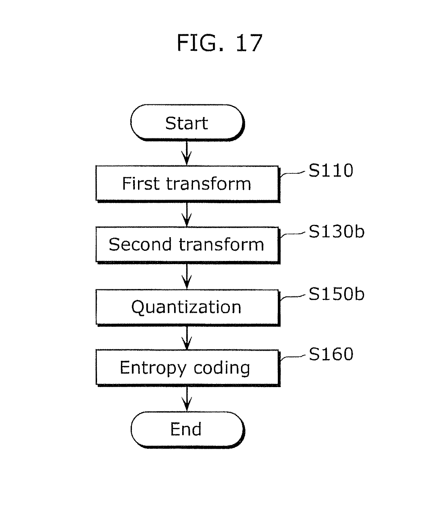

FIG. 17 is a flowchart showing an example of operation of the coding apparatus according to Variation of Embodiment 1.

[Fig. 18]

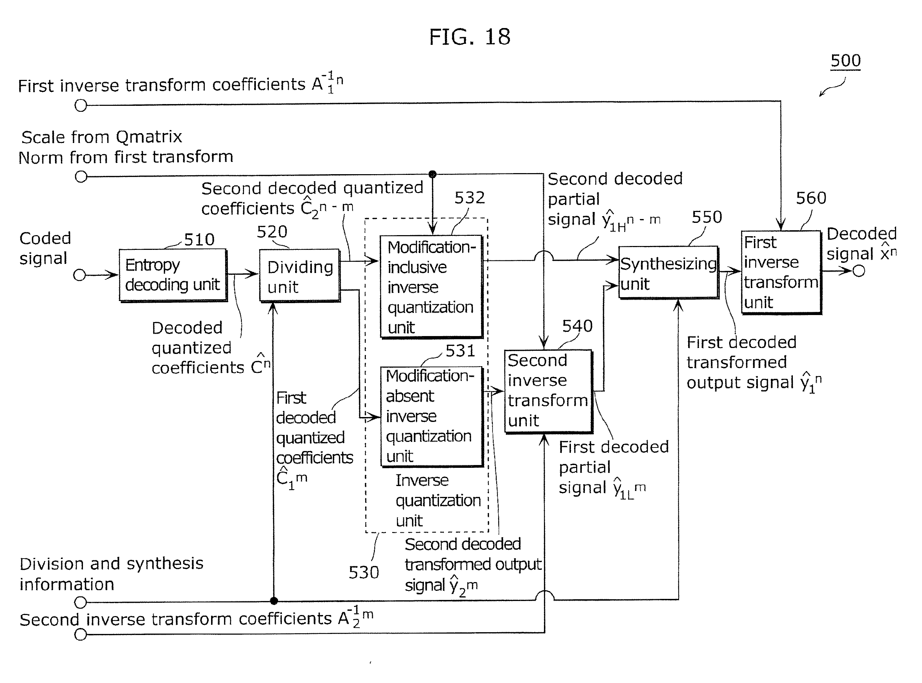

FIG. 18 is a block diagram showing an example of a structure of a decoding apparatus according to Embodiment 2.

[Fig. 19]

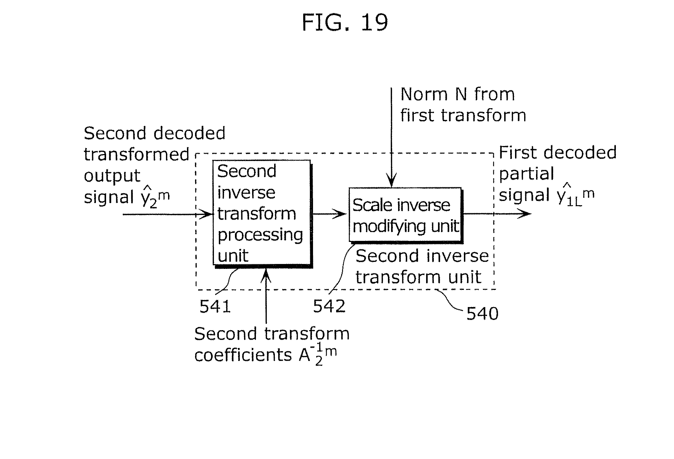

FIG. 19 is a block diagram showing an example of a structure of a second inverse transform unit according to Embodiment 2.

[Fig. 20]

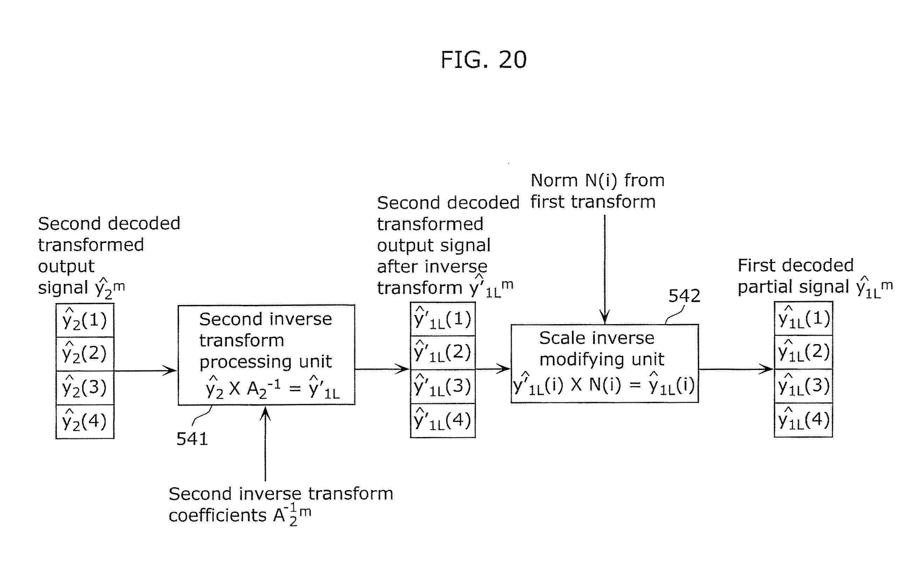

FIG. 20 conceptually shows an example of a data flow in the second inverse transform unit according to Embodiment 2.

[Fig. 21]

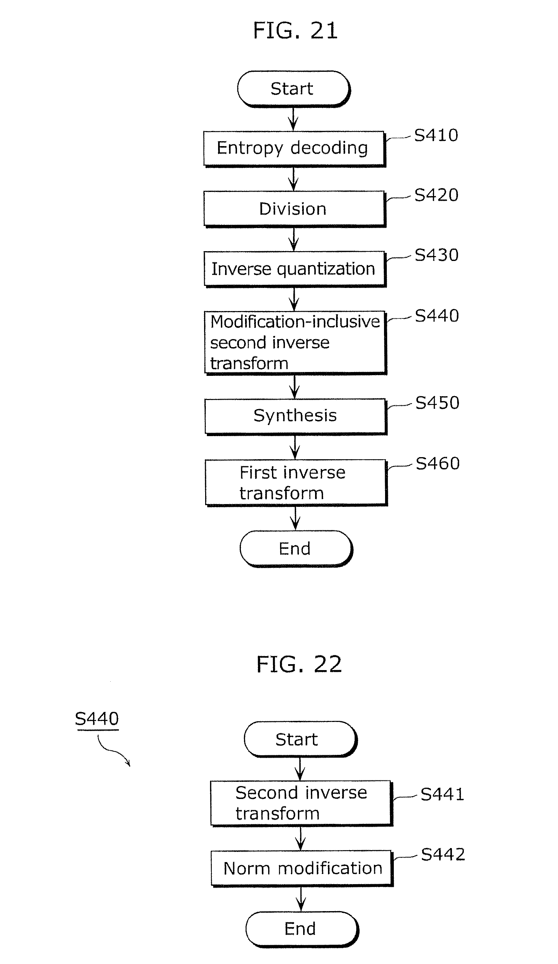

FIG. 21 is a flowchart showing an example of operation of the decoding apparatus according to Embodiment 2.

[Fig. 22]

FIG. 22 is a flowchart showing an example of operation of the second inverse transform unit according to Embodiment 2.

[Fig. 23]

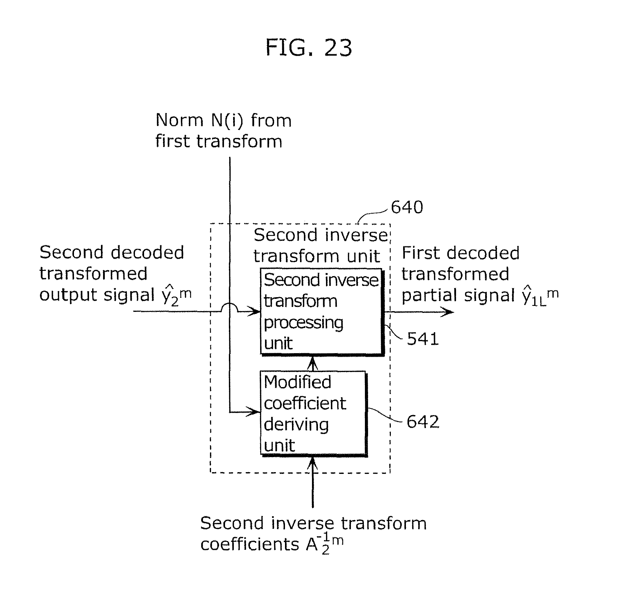

FIG. 23 is a block diagram showing an example of a structure of a second inverse transform unit according to Variation of Embodiment 2.

[Fig. 24]

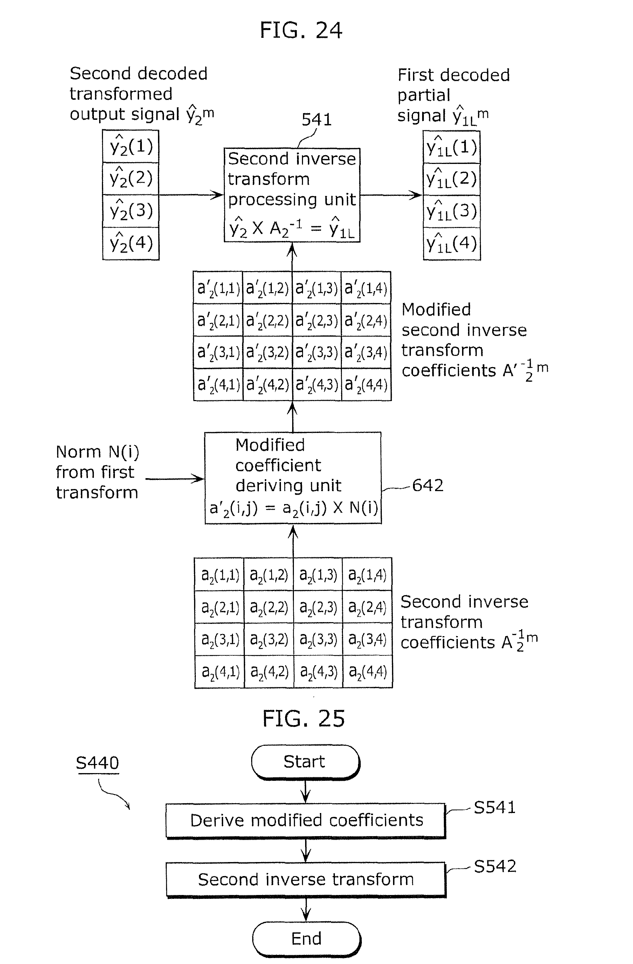

FIG. 24 conceptually shows an example of a data flow in the second inverse transform unit according to Variation of Embodiment 2.

[Fig. 25]

FIG. 25 is a flowchart showing an example of operation of the second inverse transform unit according to Variation of Embodiment 2.

[Fig. 26]

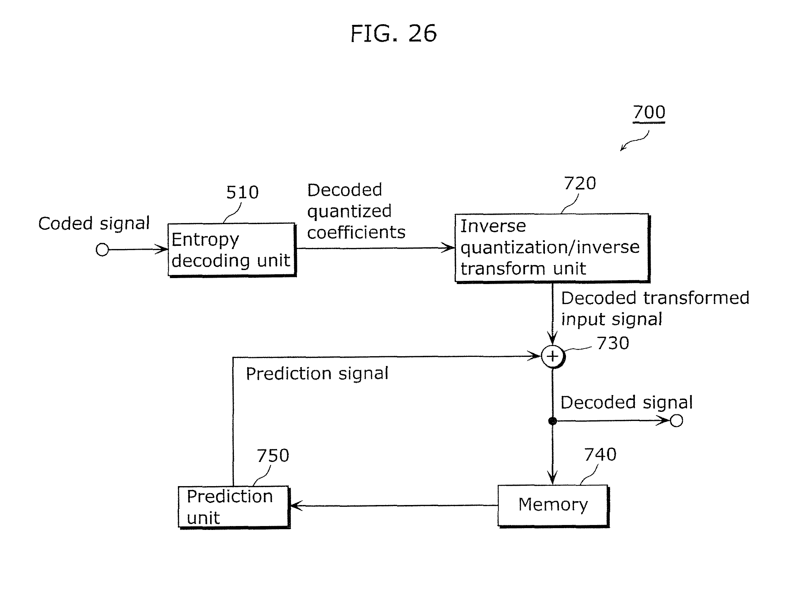

FIG. 26 is a block diagram showing an example of a structure of a decoding apparatus according to Variation of Embodiment 2.

[Fig. 27]

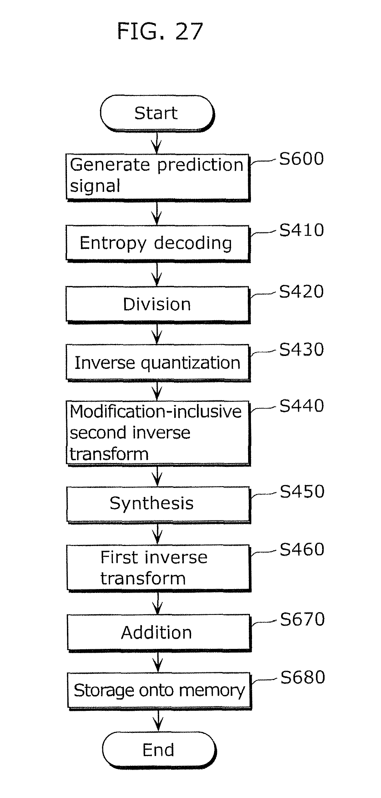

FIG. 27 is a flowchart showing an example of operation of the decoding apparatus according to Variation of Embodiment 2.

[Fig. 28]

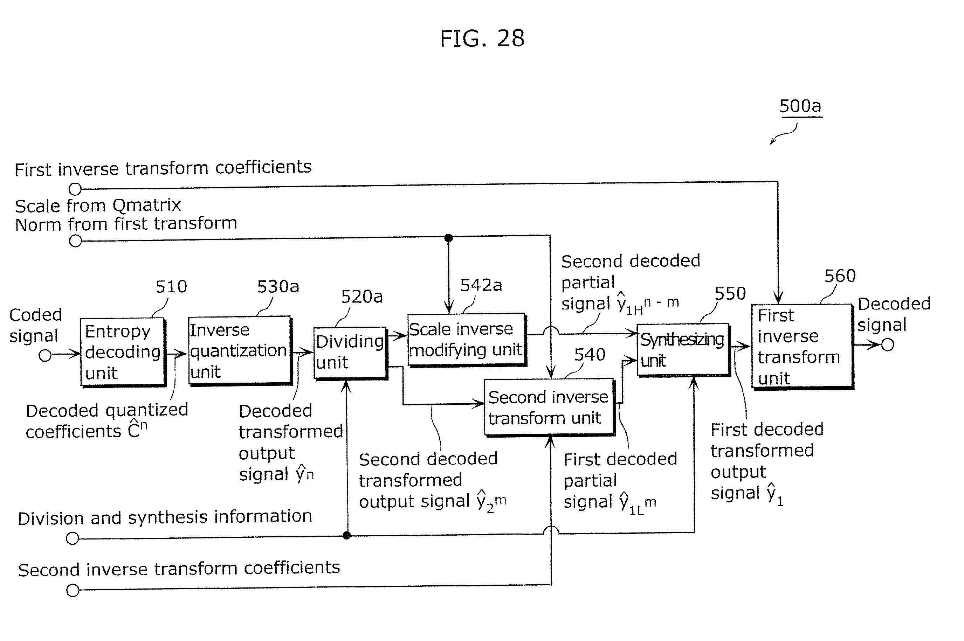

FIG. 28 is a block diagram showing an example of a structure of a decoding apparatus according to Variation of Embodiment 2.

[Fig. 29]

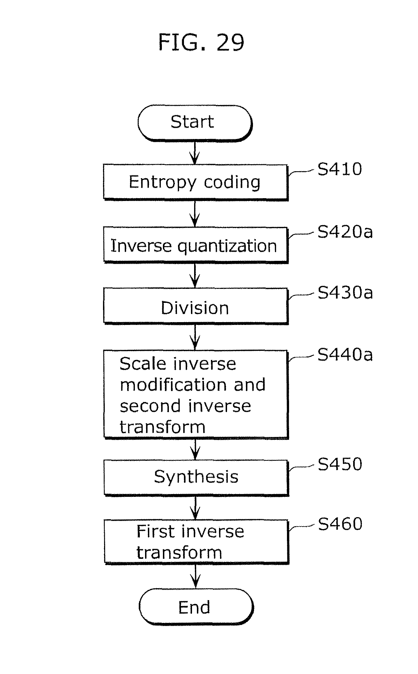

FIG. 29 is a block diagram showing an example of a structure of a decoding apparatus according to Variation of Embodiment 2.

[Fig. 30]

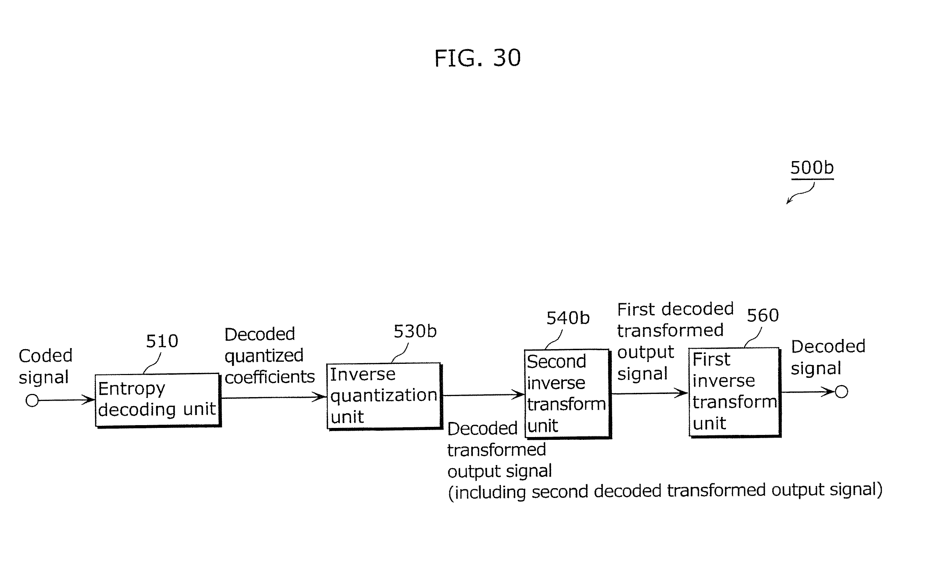

FIG. 30 is a block diagram showing an example of a structure of a decoding apparatus according to Variation of Embodiment 2.

[Fig. 31]

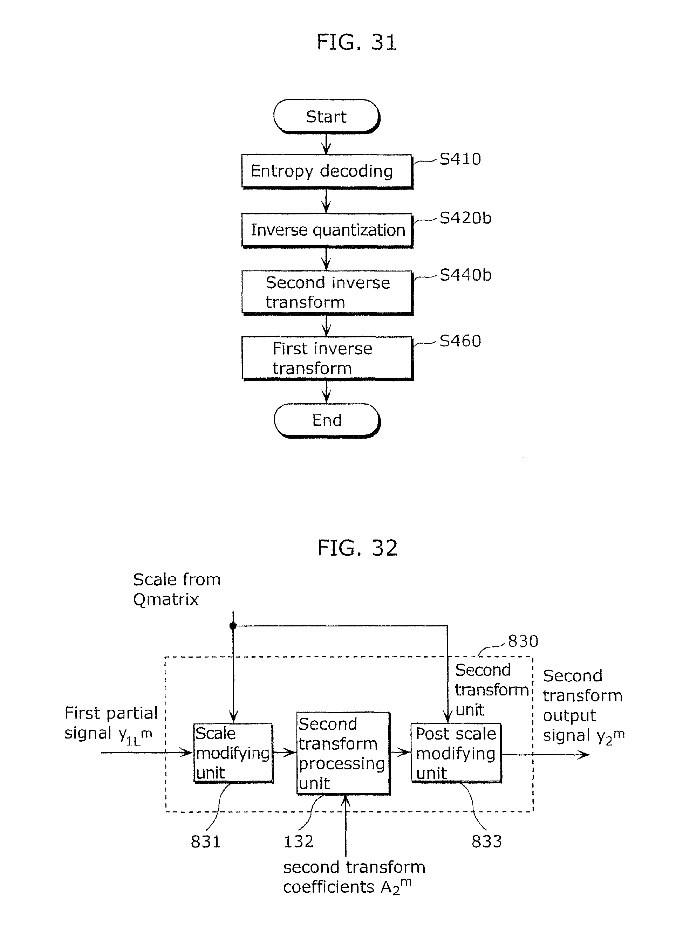

FIG. 31 is a block diagram showing an example of a structure of a decoding apparatus according to Variation of Embodiment 2.

[Fig. 32]

FIG. 32 is a block diagram showing an example of a structure of a second transform unit according to Embodiment 3.

[Fig. 33]

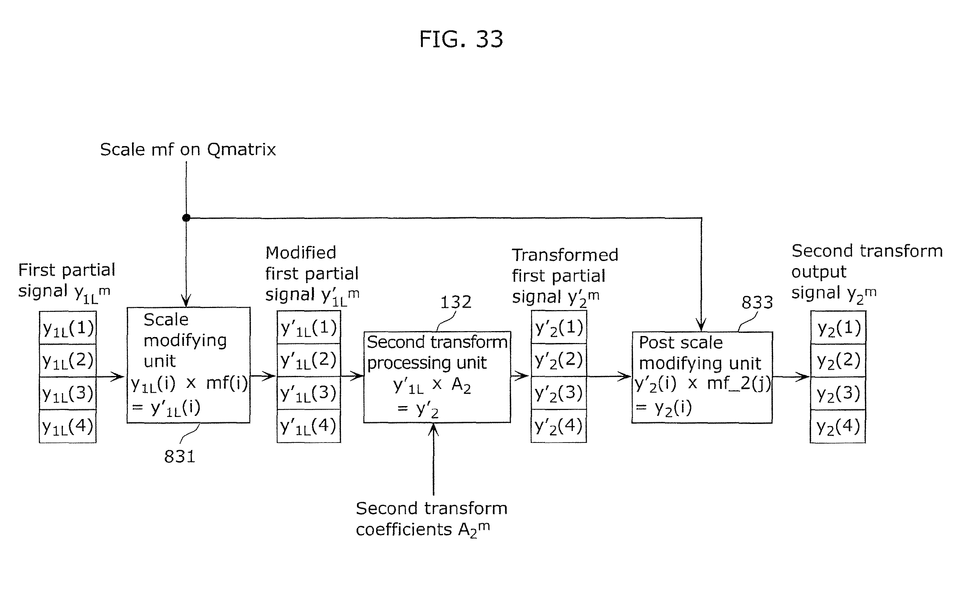

FIG. 33 conceptually shows an example of a data flow in the second transform unit according to Embodiment 3.

[Fig. 34]

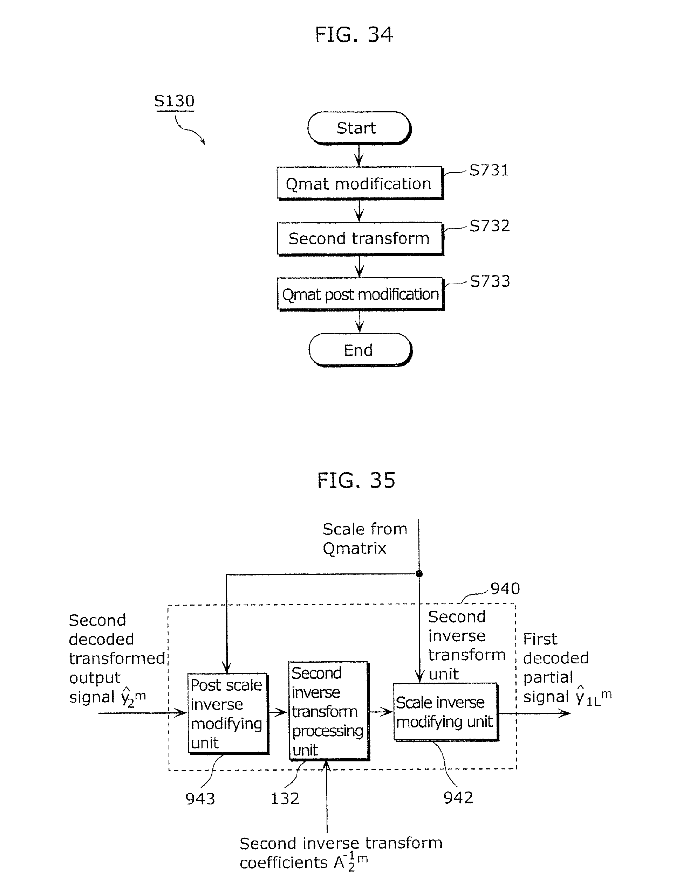

FIG. 34 is a flowchart showing an example of operation of the second transform unit according to Embodiment 3.

[Fig. 35]

FIG. 35 is a block diagram showing an example of a structure of a second inverse transform unit according to Embodiment 4.

[Fig. 36]

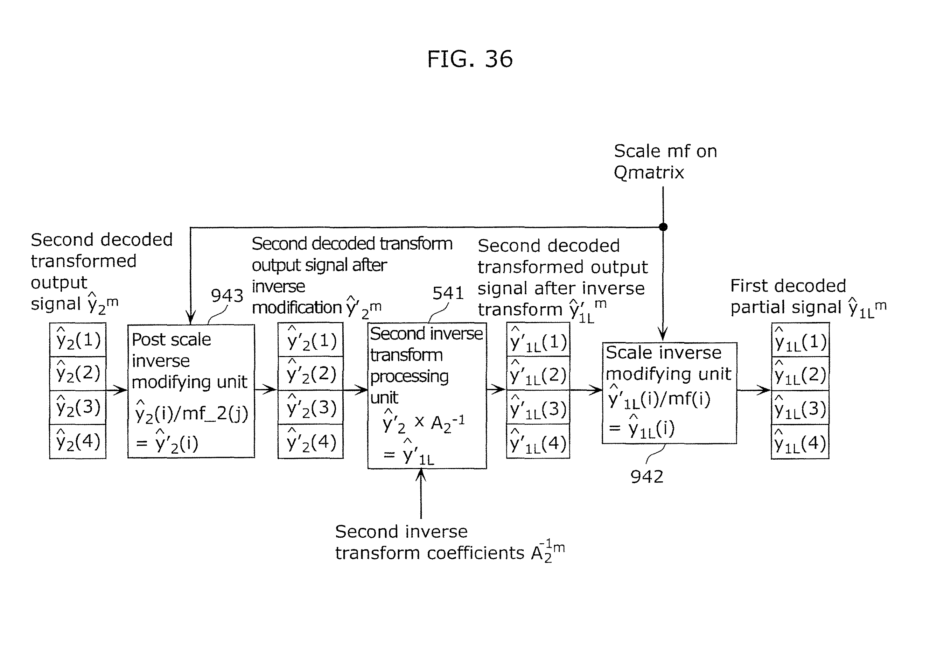

FIG. 36 conceptually shows an example of a data flow in the second inverse transform unit according to Embodiment 4.

[Fig. 37]

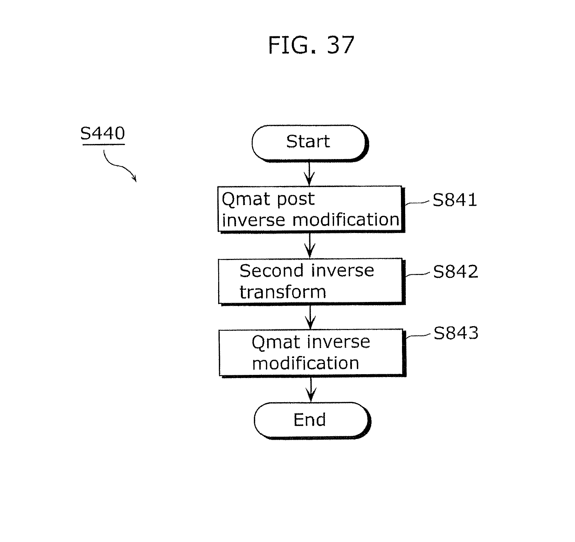

FIG. 37 is a flowchart showing an example of operation of the second inverse transform unit according to Embodiment 4.

[Fig. 38]

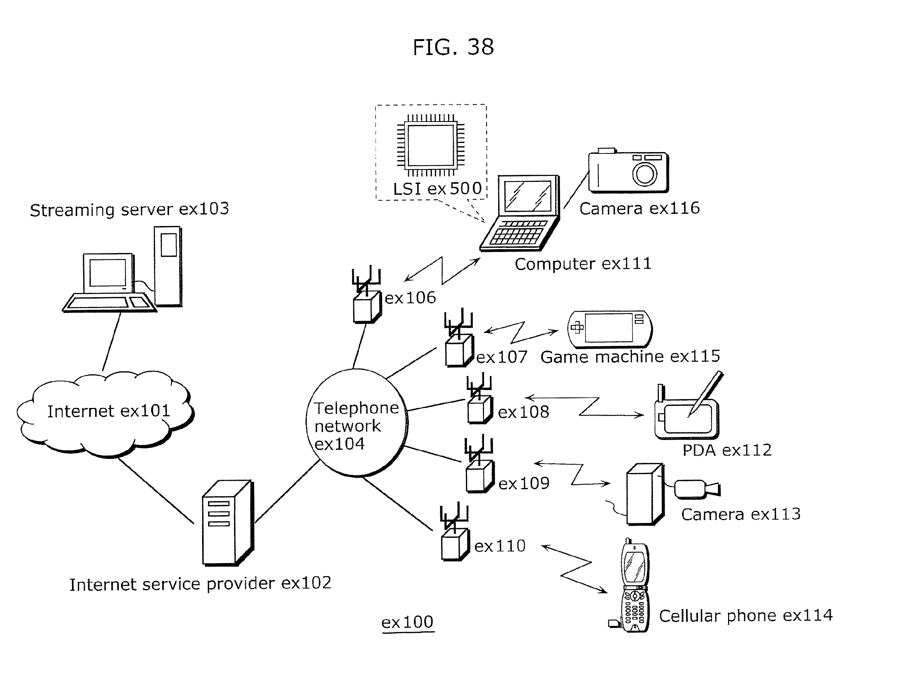

FIG. 38 schematically illustrates an overall configuration of a content providing system for implementing content distribution services.

[Fig. 39]

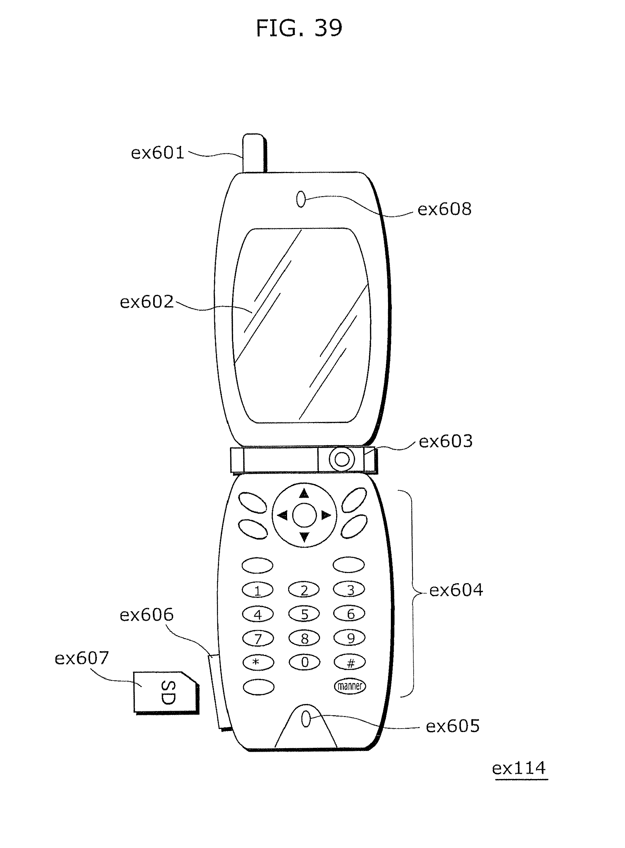

FIG. 39 is an external view of a cellular phone.

[Fig. 40]

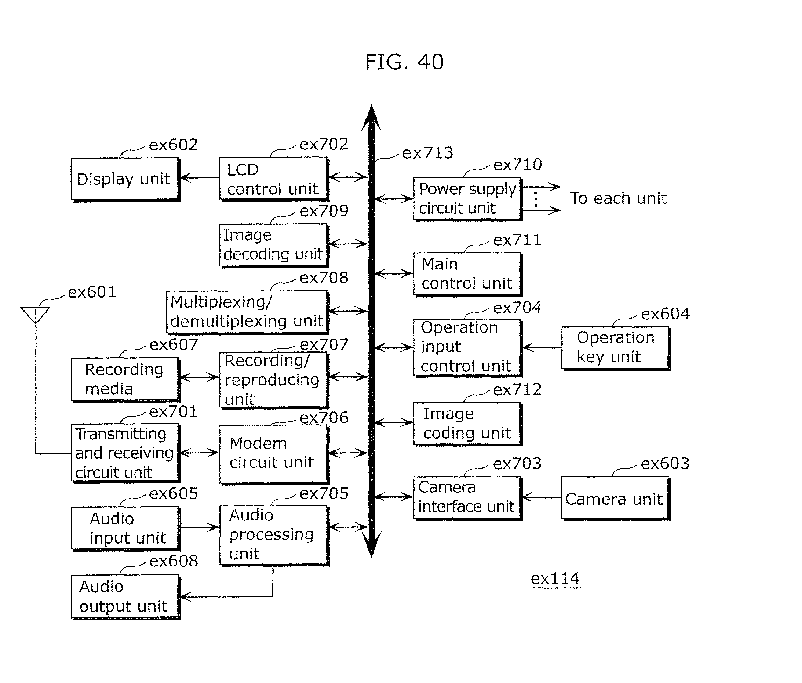

FIG. 40 shows an example of a configuration of the cellular phone.

[Fig. 41]

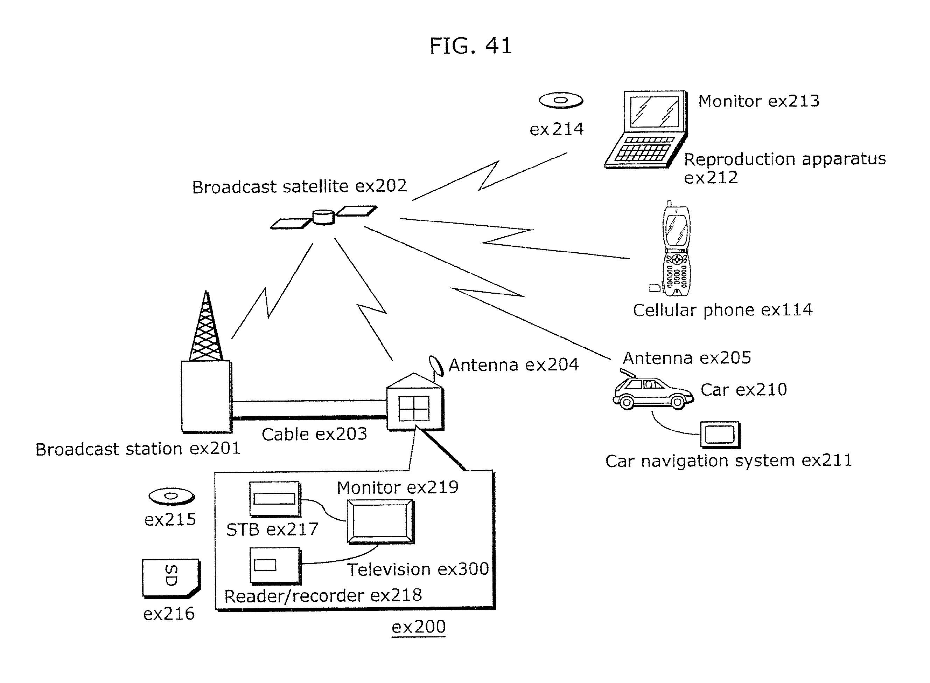

FIG. 41 schematically illustrates an example of an overall configuration of a digital broadcasting system.

[Fig. 42]

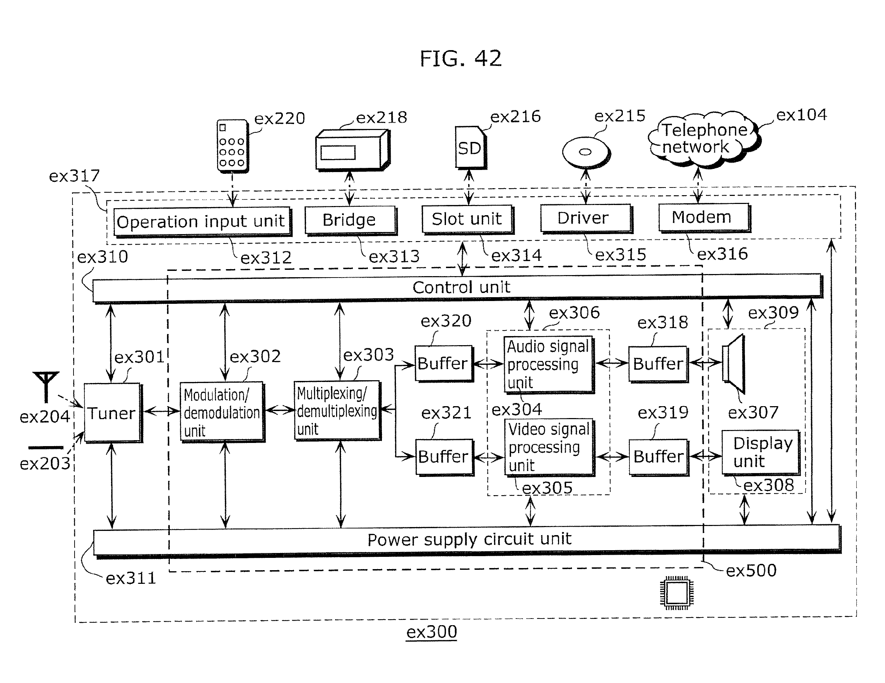

FIG. 42 is a block diagram illustrating an example of a configuration of a television.

[Fig. 43]

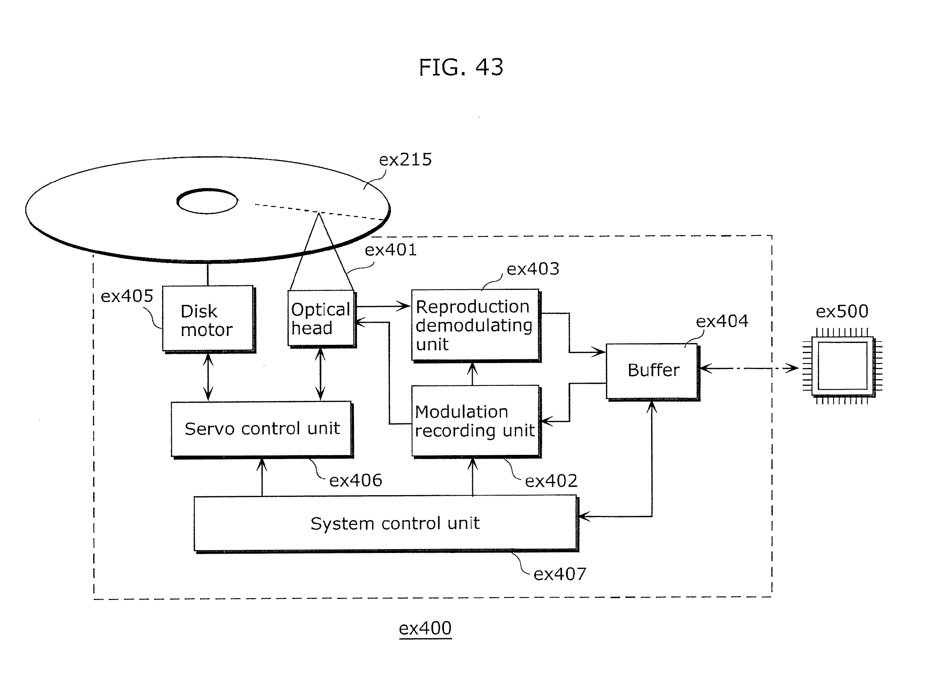

FIG. 43 is a block diagram illustrating an example of a configuration of an information reproducing/recording unit that reads and writes information from or on a recording medium that is an optical disk.

[Fig. 44]

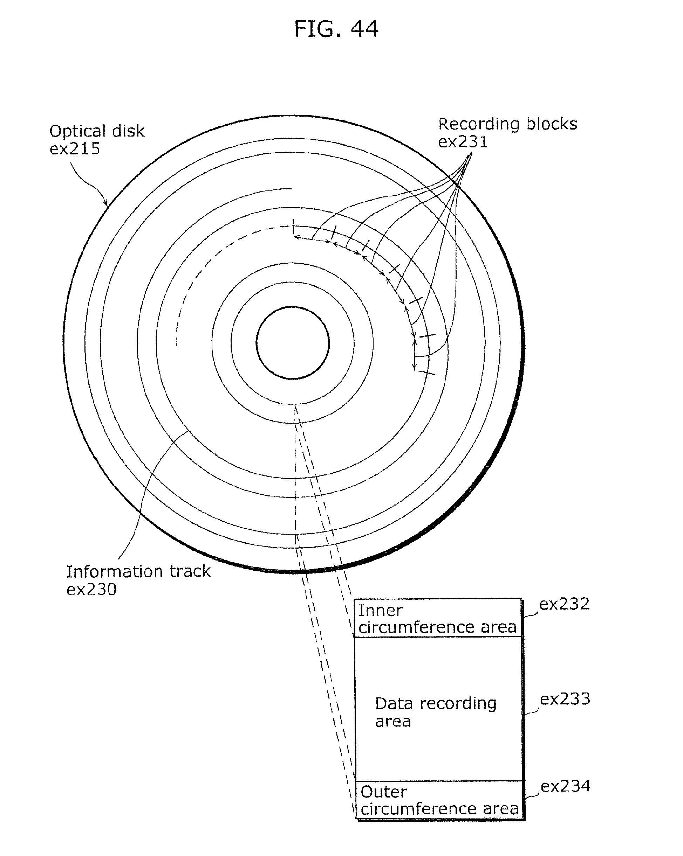

FIG. 44 shows an example of a configuration of a recording medium that is an optical disk.

[Fig. 45]

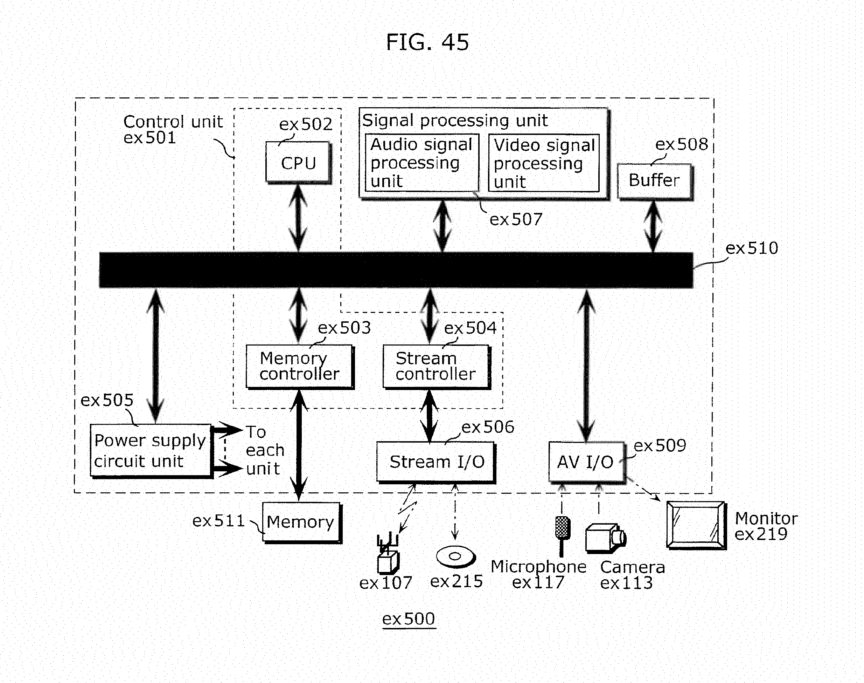

FIG. 45 is a block diagram illustrating an example of a configuration of an integrated circuit for implementing the video coding method and the video decoding method according to Embodiments.

[Description of Embodiments]

With reference to the drawings, the coding method, decoding method, coding apparatus, and decoding apparatus according to the present invention are described in detail below based on embodiments.

(Embodiment 1)

A coding apparatus according to Embodiment 1 generates a coded signal by performing a transform, quantization, and entropy coding on an input signal. The transform include a first transform and a second transform, and the second transform is performed on a first partial signal that is a part of a first transformed output signal generated by performing the first transform on the input signal. The coding apparatus according to Embodiment 1 is characterized by modifying, before the second transform, second transform coefficients or the first partial signal using a norm calculated from first transform coefficients. First, an example of a structure of the coding apparatus according to Embodiment 1 is described below with reference to FIG. 3. It is to be noted that a transform matrix and a transform coefficient are synonymously used in some parts herein.

It is to be noted that even a transform which can be achieved by means other than a simple matrix operation, such as a butterfly operation and an operation using shifts and addition, is represented in form of matrix in some parts herein. It should not be construed that such matrix representation excludes various transforms with a reduced amount of computation, such as a butterfly operation and an operation using shifts and addition or an operation using a lifting construction.

FIG. 3 is a block diagram showing an example of a structure of a coding apparatus 100 according to Embodiment 1. To the coding apparatus 100, an input signal that is various data, such as audio data, still image data, and video data, is input as a current signal to be coded. The coding apparatus 100 includes a first transform unit 110, a dividing unit 120, a second transform unit 130, a quantization unit 140, a synthesizing unit 150, and an entropy coding unit 160 and codes the received current signal.

To the first transform unit 110, the current signal is input as a transform target input signal. The transform target input signal is represented by, for example, a vector $x^n$ as indicated in Expression 4. For example, the current signal is composed of a plurality of transform target input signals $x^n$.

[Math. 4]

(Expression 4) $$x^n = (x_1, x_2, \ldots, x_n)'$$

The first transform unit 110 generates a first transformed output signal $y_1^n$ with reduced correlation, by transforming the received transform target input signal $x^n$ from the spatial-temporal domain to the frequency domain using a first transform matrix $A_1^n$ that is coefficients of a square matrix composed of a plurality of elements. The first transformed output signal $y_1^n$ generated as above is output to the dividing unit 120.

For example, the first transform unit 110 generates the first transformed output signal $y_1^n$ by transforming the transform target input signal $x^n$ using the first transform matrix $A_1^n$. The transform using the first transform matrix $A_1^n$ is referred to as a first transform $T_1$. The first transform $T_1$ is processing (orthogonal transform) of transforming the transform target input signal $x^n$ that is a signal in the spatial-temporal domain, into the first transformed output signal $y_1^n$ that is a signal in the frequency domain. For example, the first transform unit 110 performs ordinary the DCT as the first transform $T_1$.

The dividing unit 120 divides the first transformed output signal $y_1^n$ provided from the first transform unit 110, into a first partial signal $y_{1L}^m$ and a second partial signal $y_{1H}^{n-m}$ so that correlation energy of the first partial signal $y_{1L}^m$ is larger than correlation energy of the second partial signal $y_{1H}^{n-m}$. The first partial signal $y_{1L}^m$ is output to the second transform unit 130. The second partial signal $y_{1H}^{n-m}$ is output to a modification-inclusive quantization unit 142 included in the quantization unit 140.

For example, using division and synthesis information that is information indicating how to divide the first transformed output signal $y_1^n$, the dividing unit 120 divides the first transformed output signal $y_1^n$ having n elements (i.e., having the number of dimensions n), into the first partial signal $y_{1L}^m$ having m elements (i.e., having the number of dimensions m) and the second partial signal $y_{1H}^{n-m}$ having n-m elements (i.e., having the number of dimensions n-m). Here, m is a natural number smaller than n. For example, the dividing unit 120 divides the first transformed output signal $y_1^n$ at a predetermined position for division so that each of the first partial signal $y_{1L}^m$ and the second partial signal $y_{1H}^{n-m}$ include the predetermined number of elements.

When the current signal represents image data and so on, the data which are input to the first transform unit 110 and the dividing unit 120 are two-dimensional data, and the dividing unit 120 rearranges the two-dimensional data and outputs the first partial signal $y_{1L}^m$ as one-dimensional data. At this time, it is preferable to rearrange the elements in order from a high-frequency band to a low-frequency band, specifically, in descending order of distribution, that is, in descending order of energy.

The second transform unit 130 generates a second transformed output signal $y_2^m$ by transforming the first partial signal $y_{1L}^m$ using a second transform matrix $A_2^m$. The transform using the second transform matrix $A_2^m$ is referred to as a second transform $T_2$. In short, the second transform unit 130 generates the second transformed output signal $y_2^m$ by performing the second transform $T_2$ on the first partial signal $y_{1L}^m$. The second transformed output signal $y_2^m$ generated as above is output to a modification-absent quantization unit 141 included in the quantization unit 140.

Specifically, the second transform unit 130 modifies the first partial signal $y_{1L}^m$ or the second transform matrix $A_2^m$ and transforms, using the second transform matrix $A_2^m$, a first partial signal $y'_{1L}^m$ resulting from the modification, or transforms the first partial signal $y_{1L}^m$ using a second transform matrix $A'_2^m$ resulting from the modification, to generate the second transformed output signal $y_2^m$. To modify the first partial signal $y_{1L}^m$ or the second transform matrix $A_2^m$, a predetermined scaling parameter is used.

Here, the predetermined scaling parameter is a parameter to be used by the quantization unit 140 and is, for example, a parameter for determining a level scale. The level scale is a parameter for dividing a signal to be quantized (specifically, the second partial signal $y_{1H}^{n-m}$ and the second transformed output signal $y_2^m$), and corresponds to what is called a quantization step. The level scale is a value which is determined according to a quantization matrix for weighting quantization accuracy depending on a frequency position and a norm modification value that is a value for modifying a norm of the signal to be quantized.

[Math. 5]

(Expression 5) $\quad LevelScale(k,i,j) = weightScale(i,j) * normAdjust(k,i,j)$

For example, as indicated by Expression 5, the level scale LevelScale(k, i ,j) is determined by multiplying the value weightScale(i, j) of an element in the quantization matrix by the norm modification value normAdjust(k, i, j). In Embodiment 1, as will be described below, the second transform unit 130 modifies the first partial signal $y_{1L}^m$ or the second transform matrix $A_2^m$ using the norm modification value as the predetermined scaling parameter.

It is to be noted that i and j are parameters indicating frequency positions of the elements included in the signal. Furthermore, k is a parameter which is derived from a quantization parameter value qp, and has a relationship k=qp%6. In other words, k is a remainder from dividing the quantization parameter value qp by 6.

The quantization unit 140 includes the modification-absent quantization unit 141 and the modification-inclusive quantization unit 142 and generates the second quantized coefficients $C_2^{n-m}$ by quantizing the second partial signal $y_{1H}^{n-m}$ and generates the first quantized coefficients $C_1^m$ by quantizing the second transformed output signal $y_2^m$.

The modification-absent quantization unit 141 generates the first quantized coefficients $C_1^m$ by quantizing the second transformed output signal $y_2^m$ without using the norm modification value that is the above scaling parameter. For example, the modification-absent quantization unit 141 generates the first quantized coefficients $C_1^m$ by dividing the second transformed output signal $y_2^m$ by a level scale LevelScale_1 using no norm modification value (cf. Expressions 6 and 7) and shifting down the resultant value by (qp/6-4), followed by rounding off to an integer.

[Math. 6]

(Expression 6) $\quad C_1(i,j) = (y_2(i,j) / LevelScale\_1(k,i,j)) >> (qp/6 - 4)$

[Math. 7]

(Expression 7) $\quad LevelScale\_1(k,i,j) = weightScale(i,j)$

The modification-inclusive quantization unit 142 generates the second quantized coefficients $C_2^{n-m}$ by quantizing the second partial signal $y_{1H}^{n-m}$ using the norm modification value that is the above scaling parameter. For example, the modification-inclusive quantization unit 142 generates the second quantized coefficients $C_2^{n-m}$ by dividing the second partial signal $y_{1H}^{n-m}$ by the level scale LevelScale(k, i, j), as shown in Expression 5, using the norm modification value (cf. Expression 8), and shifting down the resultant value by (qp/6-4), followed by rounding off to an integer.

[Math. 8]

(Expression 8) $\quad C_2(i,j) = (y_{1H}(i,j) / LevelScale(k,i,j)) >> (qp/6 - 4)$

The synthesizing unit 150 generates quantized coefficients $C^n$ by synthesizing the first quantized coefficients $C_1^m$ and the second quantized coefficients $C_2^{n-m}$ using the division and synthesis information. The quantized coefficients $C^n$ generated as above are output to the entropy coding unit 160.

The entropy coding unit 160 generates a coded signal by compression coding, using an entropy coding algorithm,

the quantized coefficients $C^n$ provided from the synthesizing unit 150. The coded signal generated as above is, for example, recorded on a recording medium or transmitted to a decoding apparatus through a network.

The entropy coding unit 160 codes the transform coefficients (or inverse transform coefficients) used in the transform, the level scale used in the quantization, and so on, and describes, as control information, the coded coefficients, level scale, and so on in a header or the like of the coded signal. The level scale is not coded without changes, while the quantization parameter qp or the like is coded. In a decoding apparatus, the quantization parameter qp is obtained by entropy decoding, and the level scale used in the quantization can be generated from the obtained quantization parameter.

As above, the coding apparatus 100 according to Embodiment 1 performs the two-stage transform processing on the transform target input signal $x^n$ that is the current signal to be coded. Specifically, the coding apparatus 100 generates the first transformed output signal $y_1^n$ by performing the first transform $T_1$ on the transform target input signal $x^n$, divides the first transformed output signal $y_1^n$ generated as above, into the first partial signal $y_{1L}^m$ and the second partial signal $y_{1H}^{n-m}$, and performs the second transform $T_2$ on the first partial signal $y_{1L}^m$. Furthermore, in performing the second transform $T_2$, the first partial signal $y_{1L}^m$ or the second transform matrix $A_2^m$ is modified using a norm.

A specific structure of the second transform unit 130 that performs the modification using a norm is described below.

FIG. 4 is a block diagram showing an example of a structure of the second transform unit 130 according to Embodiment 1. FIG. 5 conceptually shows an example of a data flow in the second transform unit 130 according to Embodiment 1.

As shown in FIG. 4, the second transform unit 130 includes a scale modifying unit 131 and a second transform processing unit 132.

The scale modifying unit 131 modifies the received first partial signal $y_{1L}^m$ using the norm calculated from the first transform matrix $A_1^n$. The norm is calculated by the following Expression 9.

[Math. 9]

$$N(i) = \sqrt{\sum_{k=1}^{n} a(i,k)^2}$$

(Expression 9)

Here, a(i,k) is an element included in the first transform matrix $A_1^n$ and located at row i, column k.

Since the norm changes when the first transform matrix $A_1^n$ adaptively changes, the scale modifying unit 131 calculates the norm and modifies the first partial signal $y_{1L}^m$ using the calculated norm. When the first transform matrix $A_1^n$ is a fixed transform matrix, it is sufficient that the scale modifying unit 131 holds the norm in an internal memory or the like.

The scale modifying unit 131 modifies the first partial signal $y_{1L}^m$ according to Expression 10. Specifically, the scale modifying unit 131 generates a modified first partial signal $y'_{1L}^m$ by multiplying the first partial signal $y_{1L}^m$ by the reciprocal of the norm. In other words, the scale modifying unit 131 generates the modified first partial signal $y'_{1L}^m$ by dividing the first partial signal $y_{1L}^m$ by the norm.

[Math. 10]

$$y'_{1L}(i) = y_{1L}(i)/N(i)$$

(Expression 10)

It is to be noted that the multiplication and division using the norm are performed for each element included in the first partial signal $y_{1L}^m$. Specifically, the scale modifying unit 131 generates an element $y'_{1L}(i)$ of the modified first partial signal $y'_{1L}^m$ by multiplying an element $y_{1L}(i)$ of the first partial signal $y_{1L}^m$ by the reciprocal of a norm $N(i)$.

The second transform processing unit 132 generates the second transformed output signal $y_2^m$ by transforming the modified first partial signal $y'_{1L}^m$ using the second transform matrix $A_2^m$.

As described above, in performing the two-stage transform, the coding apparatus 100 according to Embodiment 1 performs the norm modification on the first partial signal which is to be a target for the second transform that is the transform at the second stage.

Conventionally, the norm modification used to be performed in the quantization by the quantization unit 140 (cf. Expressions 5 and 8). However, the coding apparatus 100 according to Embodiment 1 partially transforms the first transformed output signal generated by transforming the current signal to be coded, with the result that the optimum result cannot be obtained even when the modification using the norm calculated from the first transform coefficients is performed in the quantization. Thus, the coding apparatus 100 according to Embodiment 1 performs the norm modification before the second transform so that the second transform can be optimized. This allows a further increase in the coding efficiency.

Subsequently, operation of the coding apparatus 100 according to Embodiment 1 is described with reference to FIG. 6. FIG. 6 is a flowchart showing an example of the operation of the coding apparatus 100 according to Embodiment 1.

First, the current signal of audio data, image data, or the like is input to the coding apparatus 100. The first transform unit 110 generates the first transformed output signal $y_1^n$ by performing the first transform $T_1$ on the transform target input signal $x^n$ using the first transform matrix $A_1$ (S110). Through the first transform $T_1$, the transform target input signal $x^n$ in the spatial-temporal domain is transformed into the first transformed output signal $y_1^n$ in the frequency domain.

Next, the dividing unit 120 divides the first transformed output signal $y_1^n$ into the first partial signal $y_{1L}^m$ and the second partial signal $y_{1H}^{n-m}$ using the division and synthesis information (S120). At this time, the dividing unit 120 divides the first transformed output signal $y_1^n$ so that the correlation energy of the first partial signal $y_{1L}^m$ is larger than the correlation energy of the second partial signal $y_{1H}^{n-m}$. When the transform target input signal $x^n$ and the first transformed output signal $y_1^n$ are two-dimensional signals, the dividing unit 120 rearranges the first partial signal $y_{1L}^m$ in such a way that it becomes a one-dimensional signal.

Next, the second transform unit 130 performs the norm modification on the first partial signal $y_{1L}^m$ and performs the second transform $T_2$ on the modified first partial signal $y'_{1L}^m$, to generate the second transformed output signal $y_2^m$ (S130). Specific operation of the second transform unit 130 will be described below with reference to FIG. 7.

Next, the quantization unit 140 quantizes the second transformed output signal $y_2^m$ and the second partial signal $y_{1H}^{n-m}$ (S140). Specifically, the modification-absent quantization unit 141 generates the first quantized coefficients $C_1^m$ by quantizing the second transformed output signal $y_2^m$ using the level scale including no norm modification value (cf. Expressions 6 and 7). Furthermore, the modification-inclusive quantization unit 142 generates the second quantized coefficients $C_2^{n-m}$ by quantizing the second partial signal $y_{1H}^{n-m}$ using the level scale including the norm modification value (cf. Expressions 5 and 8).

It is to be noted that the processing of the modification-absent quantization unit 141 and the processing of the modification-inclusive quantization unit 142 may be parallelized. Furthermore, the quantization processing of the modification-inclusive quantization unit 142 and the second transform of the second transform unit 130 may be parallelized.

Next, the synthesizing unit 150 generates the quantized coefficients $C^n$ by synthesizing the first quantized coefficients $C_1^m$ and the second quantized coefficients $C_2^{n-m}$ using the division and synthesis information (S150).

At the end, the entropy coding unit 160 generates the coded signal by entropy coding the quantized coefficients $C^n$ (S160).

Subsequently, details of the second transform processing (S130) of the coding apparatus 100 according to Embodiment 1 are described. FIG. 7 is a flowchart showing an example of operation of the second transform unit 130 according to Embodiment 1.

When the first partial signal $y_{1L}^m$ is input to the second transform unit 130, the scale modifying unit 131 generates the modified first partial signal $y'_{1L}^m$ by multiplying the first partial signal $y_{1L}^m$ by the reciprocal of the norm determined from the first transform matrix $A_1^n$ (S131). When the first transform matrix $A_1^n$ adaptively changes, the scale modifying unit 131 calculates the norm and modifies the first partial signal $y_{1L}^m$ using the calculated norm.

Next, the second transform processing unit 132 generates the second transformed output signal $y_2^m$ by performing the second transform $T_2$ on the modified first partial signal $y'_{1L}^m$ using the second transform matrix $A_2^m$ (S132).

In the above-described manner, the second transform unit 130 generates the second transformed output signal $y_2^m$. It is to be noted that the second transform matrix $A_2^m$ is coefficients determined based on statistical properties of the set including the signal which is to be a target for the second transform $T_2$ (the transform target signal).

Although the above describes that the second transform processing unit 132 obtains the predetermined second transform matrix $A_2^m$ and performs the second transform $T_2$ using the obtained second transform matrix $A_2^m$, the second transform matrix $A_2^m$ may be determined based on a received signal. This causes a slight increase in the amount of computation, but allows determination of the optimum second transform matrix $A_2^m$ for the received signal, with the result that the correlation of the second transformed output signal $y_2^m$ generated through the second transform $T_2$ can almost be eliminated. It is therefore possible to further increase the coding efficiency.

The following briefly describes a structure in which the coding apparatus 100 according to Embodiment 1 determines the second transform matrix $A_2^m$,

FIG. 8 is a block diagram showing an example of a structure of a coding apparatus 200 according to Variation of Embodiment 1. As compared to the coding apparatus 100 shown in FIG. 3, the coding apparatus 200 shown in FIG. 8 further includes a first memory 211, a first transform coefficient deriving unit 212, a second memory 221, a division and synthesis information generation unit 222, a third memory 231, and a second transform coefficient deriving unit 232.

The first memory 211 is a memory which holds the transform target input signal $x^n$. For example, when the transform target input signal $x^n$ is audio data or video data, the first memory 211 holds a plurality of transform target input signals $x^n$ which corresponds to data for one frame.

The first transform coefficient deriving unit 212 derives the first transform matrix $A_1^n$ using the plurality of transform target input signals $x^n$ held in the first memory 211. For example, the first transform coefficient deriving unit 212 determines the transform coefficients by the KLT as the second transform coefficient deriving unit 232 does. A method of determining the transform coefficients by the KLT will be described below.

The second memory 221 is a memory which holds the first transformed output signal $y_1^n$. For example, the second memory 221 holds a plurality of first transformed output signals $y_1^n$ which corresponds to data for one frame.

The division and synthesis information generation unit 222 generates the division and synthesis information using the first transformed output signal $y_1^n$ held in the second memory 221. The division and synthesis information is, for example, control information for instructing the dividing unit 120 to divide the first transformed output signal $y_1^n$ into the first partial signal having elements in a low-frequency band and the second partial signal having elements in a high-frequency band. Alternatively, the division and synthesis information is control information for instructing the dividing unit 120 to divide the first transformed output signal $y_1^n$ into the first partial signal having elements with large correlation energy and the second partial signal having elements with small correlation energy.

The division and synthesis information generation unit 222 generates the division and synthesis information in view of energy distribution of the plurality of first transformed output signals $y_1^n$. For example, the division and synthesis information generation unit 222 generates the division and synthesis information for dividing the first transformed output signal $y_1^n$ into the first partial signal having elements with correlation energy larger than a predetermined threshold and the second partial signal having elements with correlation energy smaller than the threshold.

The third memory 231 is a memory which holds the modified first partial signal $y'_{1L}^m$. For example, the third memory 231 holds a plurality of modified first partial signals $y'_{1L}^m$ which corresponds to data for one frame. It is to be noted that, as will be described below, the second transform coefficient deriving unit 232 preferably derives the second transform matrix $A_2^m$ using a set which is smaller than the set used to derive the first transform matrix $A_1^n$. Accordingly, the storage capacity of the third memory 231 may be smaller than that of the first memory 211.

The second transform coefficient deriving unit 232 derives the second transform matrix $A_2^m$ using the plurality of modified first partial signals $y'_{1L}^m$ held in the third memory 231. The second transform matrix $A_2^m$ is, for example, coefficients determined by the KLT.

The KLT is a method of designing a transform in which a transform target signal can be completely uncorrelated, based on the statistical properties of the set including the transform target signal.

Specifically, the KLT is to determine a transform in which non-diagonal elements of a variance-covariance matrix of the transform target signal are 0, and is equivalent to solving an eigenvalue problem of the variance-covariance matrix. The derived eigenvector becomes a basis function, and the eigenvalue becomes magnitude (i.e., energy) of the axis of each element of the transform coefficients.

When both of the first transform coefficient deriving unit 212 and the second transform coefficient deriving unit 232 determine the transform coefficients by the KLT, a set $S_A$ of the transform target signal (the transform target input signal $x^n$) which the first transform coefficient deriving unit 212 uses is larger than a set $S_c$ of the transform target signal (the modified first partial signal $y'_{1L}^m$) which the second transform coefficient deriving unit 232 uses. For example, the set $S_A$ is a set which corresponds to data for one frame, and the set $S_c$ is a set which corresponds to data for a slice or macroblock or data for a sub-frame or sub-band. It is to be noted that it is sufficient that the set $S_c$ includes at least two samples (the modified first partial signal $y'_{1L}^m$).

In the above-described manner, the coding apparatus 200 according to Variation of Embodiment 1 is capable of determining the transform coefficients by the KLT, which allows a further increase in the coding efficiency.

As above, the coding apparatus 200 shown in FIG. 8 generates not only the second transform matrix $A_2^m$, but also the first transform matrix $A_1^n$ and the division and synthesis information. The first transform matrix $A_1^n$ and the division and synthesis information may be predetermined fixed coefficients and may indicate division at a fixed position, respectively, as described above. At this time, when the first transform matrix $A_1^n$ is predetermined fixed coefficients, the coding apparatus 200 is not required to include the first memory 211 and the first transform coefficient deriving unit 212. When the division and synthesis information indicates division at a fixed position, the coding apparatus 200 is not required to include the second memory 221 and the division and synthesis information generation unit 222.

As above, the coding apparatus 100 according to Embodiment 1 performs the two-stage transform processing on the transform target input signal; it modifies, using the norm, the first partial signal that is a part of the first transformed output signal generated through the first transform at the first stage, and thereafter performs, on the modified first partial signal, the second transform at the second stage. At this time, the second transform coefficients that are used in the second transform are determined based on the set which includes the modified first partial signal. This allows the second transform to be optimized, with the result that the coding efficiency can be increased.

It is to be noted that not performing the norm modification on the first partial signal $y_{1L}{}^m$ but performing the norm modification on the second transform matrix $A_2{}^m$ can also produce the same effects. The following describes the case where the norm modification is performed on the second transform matrix $A_2{}^m$,

FIG. 9 is a block diagram showing an example of a structure of a second transform unit 330 according to Variation of Embodiment 1. FIG. 10 conceptually shows an example of a data flow in the second transform unit 330 according to Variation of Embodiment 1.

As shown in FIG. 9, the second transform unit 330 includes a modified coefficient deriving unit 331 and a second transform processing unit 132.

The modified coefficient deriving unit 331 derives modified coefficients by modifying the second transform matrix $A_2{}^m$ using the norm calculated from the first transform matrix $A_1{}^n$. The norm is calculated by Expression 9.

Specifically, the modified coefficient deriving unit 331 modifies the second transform matrix $A_2{}^m$ according to Expression 11. Specifically, the modified coefficient deriving unit 331 generates a modified second transform matrix $A'_2{}^m$ by multiplying the second transform matrix $A_2{}^m$ by the reciprocal of the norm. In other words, the modified coefficient deriving unit 331 generates the modified second transform matrix $A'_2{}^m$ that is modified coefficients, by dividing the second transform matrix $A_2{}^m$ by the norm.

[Math. 11]

(Expression 11) $\qquad a'_2(i, j) = a_2(i, j)/N(i)$

It is to be noted that the multiplication and division using the norm are performed for each element included in the second transform matrix $A_2{}^m$. Specifically, the modified coefficient deriving unit 331 generates an element $a'_2(i, j)$ of the modified second transform matrix $A'_2{}^m$ by multiplying an element $a_2(i, j)$ of the second transform matrix $A_2{}^m$ by the reciprocal of the norm $N(i)$.

The second transform processing unit 132 generates the second transformed output signal $y_2{}^m$ by transforming the first partial signal $y_{1L}{}^m$ using the modified second transform matrix $A'_2{}^m$.

FIG. 11 is a flowchart showing an example of operation of the second transform unit 130 according to Variation of Embodiment 1.

First, the modified coefficient deriving unit 331 modifies the second transform matrix $A_2{}^m$ according to Expression 11 using the norm calculated from the first transform matrix $A_1{}^n$, to derive the modified second transform matrix $A'_2{}^m$ that is modified coefficients (S231).

Next, the second transform processing unit 132 generates the second transformed output signal $y_2{}^m$ by transforming the first partial signal $y_{1L}{}^m$ using the modified second transform matrix $A'_2{}^m$.

It is to be noted that the modified coefficients are derived for each set $S_c$ used to derive the second transform matrix $A_2{}^m$, for example. This allows the amount of computation to be smaller than in the case where the modification is performed every time the first partial signal $y_{1L}{}^m$ is input as shown in FIG. 5.

As above, modifying not the first partial signal $y_{1L}{}^m$ but the second transform matrix $A_2{}^m$ can also produce the same effects of increasing the coding efficiency.

The coding method according to an implementation of the present invention may be applied to prediction coding. FIG. 12 is a block diagram showing an example of a structure of a coding apparatus 400 according to Variation of Embodiment 1. To the coding apparatus 400, the current signal of audio data, video data, or the like is input.

The coding apparatus 400 shown in FIG. 12 includes a subtractor 410, a transform/quantization unit 420, the entropy coding unit 160, an inverse quantization/inverse transform unit 430, an adder 440, a memory 450, a prediction unit 460. Processing units which perform the same operation as those in the coding apparatus 100 shown in FIG. 3 are denoted with the same reference numerals and are not described below.

The subtractor 410 generates a prediction error signal by calculating a difference between a current signal to be coded and a prediction signal generated by the prediction unit 460; that is, calculating a prediction error. The prediction error signal generated as above is input to the transform/quantization unit 420 as a transform target input signal.

To the transform/quantization unit 420, the prediction error signal is input as a transform target input signal. The transform/quantization unit 420 performs, on the prediction error signal, the transform processing and the quantization processing described with reference to FIGS. 3 and 4. In other words, as compared to the structure shown in FIGS. 3 and 4, the transform/quantization unit 420 is only different in that it receives not the current signal but the prediction error signal and therefore has the same detailed structure. Specifically, the transform/quantization unit 420 includes, for example, the first transform unit 110, the dividing unit 120, the second transform unit 130, the quantization unit 140, and the synthesizing unit 150.

The entropy coding unit 160 operates as described above and therefore is not described here.

The inverse quantization/inverse transform unit 430 generates a decoded transformed output signal by inverse quantizing the quantized coefficients provided from the transform/quantization unit 420. Furthermore, the inverse quantization/inverse transform unit 430 generates a decoded transformed input signal by inverse transforming the decoded transformed output signal generated as above. The decoded transformed input signal generated as above is output to the adder 440.

While the decoded transformed input signal is generated by reconstructing the transform target input signal provided to the transform/quantization unit 420, the decoded transformed input signal is not completely the same as the transform target input signal because the transform/quantization unit 420 performs lossy processing on the transform target input signal. Specifically, the decoded transformed input signal includes a quantization error.

The inverse transform processing which the inverse quantization/inverse transform unit 430 performs is processing opposite to the transform processing which the transform/quantization unit 420 performs. The inverse quantization/ inverse transform unit 430 therefore receives, from the transform/quantization unit 420, the transform coefficients used in the transform processing.

For example, assume that the transform/quantization unit 420 performs a transform T on the transform target input signal $x^n$ using a transform matrix A that is an nxn square matrix. At this time, the transformed output signal $y^n$ which the transform/quantization unit 420 generates is represented by Expression 1. More specifically, the transform/ quantization unit 420 generates the transformed output signal $y^n$ according to Expressions 2 and 3.

At this time, an inverse transform $T^{-1}$ which the inverse quantization/inverse transform unit 430 performs is transform processing which uses a matrix $A^{-1}$ that is opposite to the transform matrix A. The inverse transform $T^{-1}$ that is performed on a decoded transformed output signal $\hat{y}^n$ provided to the inverse quantization/inverse transform unit 430 is represented by Expression 12.

[Math. 12]

(Expression 12)
$$T^{-1}[\hat{y}^n] = A^{-1}\hat{y}^n$$

Accordingly, the decoded transformed input signal $\hat{x}^n$ which the inverse quantization/inverse transform unit 430 outputs is represented by Expression 13.

[Math. 13]

(Expression 13)
$$\hat{x}^n = T^{-1}[\hat{y}^n]$$

The adder 440 generates a decoded signal by adding the decoded transformed input signal and the prediction signal. The decoded signal generated as above is stored in the memory 450 and is referred to in generating the prediction signal for the following input signal to be coded.

The memory 450 is an example of a storage unit, such as a memory in which the decoded signal is stored.

The prediction unit 460 generates the prediction signal by predicting the current signal with reference to the decoded signal (the already coded signal) which has been coded and decoded before and is stored in the memory 450. The prediction signal generated as above is output to the subtractor 410 and the adder 440. It is to be noted that control information used to generate the prediction signal, such as a prediction mode (including intra prediction or inter prediction), is output to the entropy coding unit 160 and coded by the entropy coding unit 160.

Subsequently, operation of the above coding apparatus 400 is described with reference to FIG. 13.

FIG. 13 is a flowchart showing an example of operation of the coding apparatus 400 according to Variation of Embodiment 1.

First, the current signal of audio data, video data, or the like is input to the coding apparatus 400. The prediction unit 460 generates the prediction signal with reference to the coded signal stored in the memory 450 (S300). The prediction signal generated as above is output to the subtractor 410. The subtactor 410 then generates the prediction error signal by calculating a prediction error that is a difference between the current signal and the prediction signal (S305).

Next, the transform/quantization unit 420 performs the first transform on the prediction error signal (S110). After that, the transform/quantization unit 420 treats the prediction error signal with the division, the second transform, the quantization, and the synthesis as described with reference to FIG. 6, thereby generating the quantized coefficients (S120 to S150). Furthermore, the entropy coding unit 160 generates the coded signal by entropy coding the quantized coefficients (S160).

Furthermore, the inverse quantization/inverse transform unit 430 generates the decoded transformed output signal by inverse quantizing the quantized coefficients (S370). Next, the inverse quantization/inverse transform unit 430 generates the decoded transformed input signal by performing the inverse transform processing on the decoded transformed output signal (S380). The inverse transform processing is processing opposite to the transform processing which the transform/quantization unit 420 performs.

It is to be noted that the entropy coding which the entropy coding unit 160 performs and at leaset one of the inverse quantization and the inverse transform which the inverse quantization/inverse transform unit 430 performs may be performed in any order or may be performed in parallel.

At the end, the adder 440 generates the decoded signal by adding the decoded transformed input signal and the prediction signal and stores the decoded signal onto the memory 450 (S390).

As above, the coding apparatus 400 may perform the above transform processing on, as the transform target signal, the prediction error signal that is a difference between the current signal and the prediction signal generated by predicting the current signal. This allows a reduction in the amount of information to be coded, with the result that the coding efficiency can be further increased.

It may be possible that the second transform processing unit 132 adaptively determines the transform coefficients based on the statistical properties of the input signal and performs, using the determined transform coefficients, not the KLT but other transform that reduces the correlation, as the second transform.

Although the coding apparatus 100 according to Embodiment 1 synethesizes the first quantized coefficients and the second quantized coefficients before entropy coding them, it may entropy code the first quantized coefficients and the second quantized coefficients without synthesizing them. This means that the entropy coding unit 160 may code, as separate data, the first quantized coefficients provided from the modification-absent quantization unit 141 and the second quantized coefficients provided from the modification-inclusive quantization unit 142.

Furthermore, it may also be possible that the quantization unit 140 does not include the modification-absent quantization unit 141 and the modification-inclusive quantization unit 142 and has instead a structure therein of switching between modification and non-modification.

Furthermore, although the above coding apparatus 100 according to Embodiment 1 quantizes the second partial signal $y_{1H}^{n-m}$ and the second transformed output signal $y_2^m$ before synthesizing them, it may synethesize the second partial signal $y_{1H}^{n-m}$ and the second transformed output signal $y_2^m$ before quantizing them. This means that the above coding apparatus 100 according to Embodiment 1 may not separately quantize two signals but quantize one synthesized signal.

FIG. 14 is a block diagram showing an example of a structure of a coding apparatus 100a according to Variation of Embodiment 1 of the present invention.

The coding apparatus 100a shown in FIG. 14 includes the first transform unit 110, the dividing unit 120, the second transform unit 130, a scale modifying unit 131a, a quantization unit 140a, a synthesizing unit 150a, and the entropy coding unit 160. Processing units which perform the same operation as those in the coding apparatus 100 shown in FIG. 3 are denoted with the same reference numerals and are not described below.

The scale modifying unit 131a modifies the second partial signal $y_{1H}^{n-m}$ using the norm from the first transform matrix $A_1$. Specifically, the scale modifying unit 131a generates a modified second partial signal $y'_{1H}^{n-m}$ by multiplying the second partial signal $y_{1H}^{n-m}$ by the reciprocal of the norm (cf. Expression 10 where $y'_{1L}(i)$ is replaced by $y'_{1H}(i)$ and $y_{1L}(i)$ is replaced by $y_{1H}(i)$). In other words, the scale modifying unit 131a generates the modified second partial signal $y'_{1H}^{n-m}$ by dividing the second partial signal $y_{1H}^{n-m}$ by the norm.

The synthesizing unit 150a generates the transformed output signal $y^n$ by synthesizing the modified second partial signal $y'_{1H}^{n-m}$ provided from the scale modifying unit 131a and the second transformed output signal $y_2^m$ resulting from the transform by the second transform unit 130. It is to be noted that the second transformed output signal $y_2^m$ results from the second transform $T_2$, which includes the modification using the norm, by the second transform unit 130 as described above.

The quantization unit 140a generates the quantized coefficients $C^n$ by quantizing the transformed output signal $y^n$. For example, the quantization unit 140a quantizes the transformed output signal $y^n$ without using the norm modification value, as the modification-absent quantization unit 141 does. Specifically, the quantization unit 140a generates the

quantized coefficients $C^n$ by dividing the transformed output signal $y^n$ by the level scale LevelScale_1 using no norm modification value and shifting down the resultant value by (qp/6-4), followed by rounding off to an integer (cf. Expressions 6 and 7 where $C_1(i, j)$ is replaced by $C(i, j)$ and $y_2(i, j)$ is replaced by $y(i, j)$).

FIG. 15 is a flowchart showing an example of operation of the coding apparatus 100a shown in FIG. 14.

First, the first transform unit 110 generates the first transformed output signal $y_1^n$ by performing the first transform $T_1$ on the received transform target input signal $x^n$ (S110). Next, the dividing unit 120 generates the first partial signal $y_{1L}^m$ and the second partial signal $y_{1H}^{n-m}$ by dividing the first transformed output signal $y_1^n$ generated as above (S120). Specific processing of the first transform and the division is the same as that shown in FIG. 6 and is therefore not described here.

Next, the second transform unit 130 performs the second transform on the first partial signal $y_{1L}^m$, and the scale modifying unit 131a performs the scale modification on the second partial signal $y_{1H}^{n-m}$ (S130a). Specifically, the second transform unit 130 performs the second transform $T_2$ on the first partial signal $y_{1L}^m$ using the second transform matrix $A_2^m$. For example, as shown in FIG. 7, the second transform unit 130 generates the second transformed output signal $y_2^m$ by performing the norm modification on the first partial signal $y_{1L}^m$ and performing the second transform $T_2$ on the modified first partial signal $y'_{1L}^m$. Furthermore, the scale modifying unit 131a generates the modified second partial signal $y'_{1H}^{n-m}$ by modifying the second partial signal $y_{1H}^{n-m}$ using the norm from the first transform matrix $A_1^n$.

It is to be noted that the scale modification and the second inverse transform may be performed in any order or may be performed in parallel. Such parallel processing allows an increase in the speed of the coding process.

Next, the synthesizing unit 150a generates the transformed output signal $y^n$ by synthesizing the second transformed output signal $y_2^m$ and the modified second partial signal $y'_{1H}^{n-m}$ (S140a). The quantization unit 140a then generates the quantized coefficients $C^n$ by quantizing the transformed output signal $y^n$ (S150a).

At the end, the entropy coding unit 160 generates the coded signal by entropy coding the quantized coefficients $C^n$ (S160).

As above, the coding apparatus 100a according to Variation of Embodiment 1 synthesizes the signals which result from the division, before quantizing them and is therefore capable of reducing round-off errors and thereby increasing computation accuracy as compared to the case of quantizing each of the signals which result from the division.

It is to be noted that although the above coding apparatus 100 according to Embodiment 1 divides the first transformed output signal into the first partials signal and the second partial signal and synthesizes them after the second transform, it may not explicitly divide the first transformed output signal but may substantially divide the first transformed output signal. In other words, it is sufficient that a part of the first transformed output signal which is to be a target for the second transform is determined.

For example, as in the coding apparatus 100b shown in FIG. 16, the dividing unit 120 and the synthesizing unit 150 may not be provided. FIG. 16 is a block diagram showing an example of a structure of a coding apparatus 100b according to Variation of Embodiment 1 of the present invention.

The coding apparatus 100b includes the first transform unit 110, a second transform unit 130b, a quantization unit 140b, and the entropy coding unit 160. Processing units which perform the same operation as those in the coding apparatus 100 shown in FIG. 3 are denoted with the same reference numerals and are not described below.

The second transform unit 130b generates the second transformed output signal $y_2^m$ by performing the second transform $T_2$ on the first partial signal $y_{1L}^m$ using the second transform matrix $A_2$ determined based on the statistical properties of the set including the first partial signal $y_{1L}^m$ that is a part of the first transformed output signal $y_1^n$. Specifically, the second transform unit 130b determines coefficient values which are to be a target for the second transform $T_2$ among coefficient values included in the first transformed output signal $y_1^n$ and performs the second transform $T_2$ on, as the first partial signal $y_{1L}^m$, the signal which includes the determined coefficient values.

Furthermore, the second transform unit 130b generates the modified first partial signal $y'_{1L}^m$ by modifying the first partial signal $y_{1L}^m$ using the predetermined scaling parameter as the second transform unit 130 does. The second transform unit 130b then generates the second transformed output signal $y_2^m$ by performing, on the modified first partial signal $y'_{1L}^m$, the second transform $T_2$ using the second transform matrix $A_2$. The scaling parameter is, for example, the norm from the first transform matrix $A_1^n$, as described above, or a weight scale from a quantization matrix, which will be described below.

Alternatively, the second transform unit 130b may generate the modified second transform matrix $A'_2^m$ by modifying the second transform matrix $A_2^m$ using the predetermined scaling parameter. The second transform unit 130b may then generate the second transformed output signal $y_2^m$ by performing, on the first partial signal $y_{1L}^m$, the second transform $T_2$ using the modified second transform matrix $A'_2^m$.

The quantization unit 140b generates the quantized coefficients $C^n$ by quantizing the first partial signal $y_{1L}^m$ and the second partial signal $y_{1H}^{n-m}$ that is a part of the first transformed output signal $y_1^n$ other than the first partial signal $y_{1L}^m$.

FIG. 17 is a flowchart showing an example of operation of the coding apparatus 100b shown in FIG. 16.

First, the first transform unit 110 generates the first transformed output signal $y_1^n$ by performing the first transform

$T_1$ on the received transform target input signal $x^n$ (S110). Specific processing of the first transform is the same as that shown in FIG. 6 and is therefore not described here.

Next, the second transform unit 130b performs the second transform on the first partial signal $y_{1L}^m$ (S130b). For example, the second transform unit 130b determines, as the first partial signal $y_{1L}^m$, a part of the first transformed output signal $y_1^n$ which is to be a target for the second transform $T_2$, and performs, using the second transform matrix $A_2^m$, the second transform $T_2$ on the determined first partial signal $y_{1L}^m$.

For example, the second transform unit 130b determines the second transform matrix $A_2$ which is to be multiplied by the first partial signal $y_{1L}^m$ included in the first transformed output signal $y_1^n$. Specifically, by setting the coefficient of the second transform matrix $A_2$ at 1 by which the second partial signal $y_{1H}^{n-m}$ included in the first transformed output signal $y_1^n$ is multiplied, it is possible to substantially perform the second transform $T_2$ on the first partial signal $y_{1L}^m$ only.

Next, the quantization unit 140b generates the quantized coefficients $C^n$ by quantizing the transformed output signal $y^n$ including the second transformed output signal $y_2^m$ (S150b).

At the end, the entropy coding unit 160 generates the coded signal by entropy coding the quantized coefficients $C^n$ (S160).

As above, the coding apparatus 100b according to Variation of Embodiment 1 is also capable of suppressing the increase in the amount of computation in the coding process and the increase in the amount of data of transform coefficients, by performing a two-stage transform partially.

(Embodiment 2)

A decoding apparatus according to Embodiment 2 generates a decoded signal by performing entropy decoding, inverse quantization and inverse transform on a coded signal. The inverse transform includes a second inverse transform and a first inverse transform, and the second inverse transform is performed on first decoded quantized coefficients that are a part of decoded quantized coefficients resulting from the entropy decoding. The decoding apparatus according to Embodiment 2 is characterized by modifying, using a norm calculated from first inverse transform coefficients, the first decoded quantized coefficients resulting from the second inverse transform, or second inverse transform coefficients to be used in the second inverse transform. First, an example of a structure of the decoding apparatus according to Embodiment 2 is described below with reference to FIG. 18.

FIG. 18 is a block diagram showing an example of a structure of a decoding apparatus 500 according to Embodiment 2. To the decoding apparatus 500, the coded signal is input that is generated by coding various data, such as audio data, still image data, and video data. As shown in FIG. 18, the decoding apparatus 500 includes an entropy decoding unit 510, a dividing unit 520, an inverse quantization unit 530, a second inverse transform unit 540, a synthesizing unit 550, and a first inverse quantization unit 560.

It is to be noted that the coded signal which is input to the decoding apparatus 500 is a signal generated by transforming and quantizing the input signal indicating various data provided to the coding apparatus. More specifically, the coded signal is a signal generated by transforming the input signal from the spatial-temporal domain into the frequency domain and further transforming a part of the transformed signal. In other words, the coded signal is a signal resulting from the two-stage transform. For example, the coded signal is the signal generated by the coding apparatus 100 according to Embodiment 1.

The entropy decoding unit 510 generates decoded quantized coefficients $C^{\wedge n}$ by entropy decoding the coded signal. The decoded quantized coefficients $C^{\wedge n}$ are output to the dividing unit 520. The coded signal contains, as header information, control information for correctly decoding the coded signal. Accordingly, the entropy decoding unit 510 obtains the control information and outputs it to each processing unit. The control information may include, for example, the division and synthesis information, the first inverse transform coefficients, and the second inverse transform coefficients.

The dividing unit 520 divides the decoded quantized coefficients $C^{\wedge n}$ into first decoded quantized coefficients $C^{\wedge}_1{}^m$ and second decoded quantized coefficients $C^{\wedge}_2{}^{n-m}$ based on the division and synthesis information. The first decoded quantized coefficients $C^{\wedge}_1{}^m$ correspond to the first quantized coefficients $C_1{}^m$ generated by the modification-absent quantization unit 141 according to Embodiment 1, and the second decoded quantized coefficients $C^{\wedge}_2{}^{n-m}$ correspond to the second quantized coefficients $C_2{}^{n-m}$ generated by the modification-inclusive quantization unit 142 according to Embodiment 1.

The division and synthesis information is information indicating how to divide the decoded quantized coefficients $C^{\wedge n}$, and is specifically information indicating how the coding apparatus divided the transform target signal (the first transformed output signal resulting from the first transform) in the transform processing. The division and synthesis information may be included in the coded signal or may be stored in an internal memory or the like included in the decoding apparatus 500. Especially, when the transform target signal is divided at a fixed position, storing the division and synthesis information onto the memory allows a reduction in the coding amount of the coded signal.

The inverse quantization unit 530 includes a modification-absent inverse quantization unit 531 and a modification-inclusive inverse quantization unit 532 and generates a second decoded transformed output signal $\acute{y}_2^m$ by inverse quantizing the first decoded quantized coefficients $C^\wedge{}_1^m$ and generates a second decoded partial signal $y^\wedge{}_{1H}^{n-m}$ by inverse quantizing the second decoded quantized coefficients $C^\wedge{}_2^{n-m}$.

The modification-absent inverse quantization unit 531 generates the second decoded transformed output signal $y^\wedge{}_2^m$ by inverse quantizing the first decoded quantized coefficients $C^\wedge{}_1^m$ without using the predetermined scaling parameter. Here, the predetermined scaling parameter is the same as that described in Embodiment 1 and, for example, is a quantization matrix for determining a level scale or is a norm modification value. In Embodiment 2, as will be described below, the second inverse transform unit 540 performs the modifying process using the norm modification value as the predetermined scaling parameter.

For example, the modification-absent inverse quantization unit 531 generates the second decoded transformed output signal $y^\wedge{}_2^m$ by multiplying the first decoded quantized coefficients $C^\wedge{}_1^m$ by a level scale LevelScale_1 using no norm modification value that is the above scaling parameter (cf. Expression 14). The second decoded transformed output signal $y^\wedge{}_2^m$ generated as above is output to the second inverse transform unit 540.

[Math. 14]

(Expression 14)
$$\hat{y}_2(i, j) = \hat{C}_1(i, j) * \text{LevelScale\_1}(qp\%6, i, j)$$

The level scale LevelScale_1 is indicated by Expression 7. Here, qp%6 represents a remainder from dividing the value of the quantization parameter qp by 6. It is to be noted that the quantization parameter qp is described in a header or the like of the coded signal as the control information for decoding the coded signal. Specifically, the level scale LevelScale_1 is a value determined based on the frequency position and the quantization parameter.

The modification-inclusive inverse quantization unit 532 generates the second decoded partial signal $y^\wedge{}_{1H}^{n-m}$ by inverse quantizing the second decoded quantized coefficients $C^\wedge{}_2^{n-m}$ using the norm modification value that is the above scaling parameter. For example, the modification-inclusive inverse quantization unit 532 generates the second decoded partial signal $y^\wedge{}_{1H}^{n-m}$ by multiplying the second decoded quantized coefficients $C^\wedge{}_2^{n-m}$ by the level scale LevelScale using the norm modification value, and shifting up the resultant value by (qp/6-4) (cf. Expression 15). The second decoded partial signal $y^\wedge{}_{1H}^{n-m}$ generated as above is output to the synthesizing unit 550.

[Math. 15]

(Expression 15)
$$\hat{y}_{1H}(i, j) = (\hat{C}_2(i, j) * \text{LevelScale}(qp\%6, i, j)) << (qp/6 - 4)$$

The level scale LevelScale is indicated by Expression 5.

The second inverse transform unit 540 generates a first decoded partial signal $y^\wedge{}_{1L}^m$ by inverse transforming the second decoded transformed output signal $y^\wedge{}_2^m$ using a second inverse transform matrix $A^{-1}{}_2^m$ and modifying the resultant signal using the norm modification value that is the above scaling parameter. Specifically, the second inverse transform unit 540 generates the first decoded partial signal $y^\wedge{}_{1L}^m$ by modifying a second decoded transformed output signal $y^{\wedge\prime}{}_{1L}^m$ resulting from the inverse transform. In other words, the second inverse transform unit 540 performs, on the second decoded transformed output signal $y^\wedge{}_2^m$, inverse transform processing (a second inverse transform $T_2^{-1}$) that is processing opposite to the transform processing (the second transform $T_2$) which the second transform unit 130 according to Embodiment 1 performs. A more specific structure will be described below.

The synthesizing unit 550 generates a first decoded transformed output signal $y^\wedge{}_1^n$ by synthesizing the first decoded partial signal $y^\wedge{}_{1L}^m$ and the second decoded partial signal $y^\wedge{}_{1H}^{n-m}$ using the division and synthesis information. The first decoded transformed output signal $y^\wedge{}_1^n$ generated as above is output to the first inverse transform unit 560.

The first inverse transform unit 560 generates a decoded signal by inverse transforming the first decoded transformed output signal $y^\wedge{}_1^n$ using a first inverse transform matrix $A^{-1}{}_1^n$. Specifically, the first inverse transform unit 560 performs, on the first decoded transformed output signal $y^\wedge 1^n$, inverse transform processing (a first inverse transform $T_1^{-1}$) that is processing opposite to the transform processing (the first transform $T_1$) which the first transform unit 110 according to Embodiment 1 performs.

For example, the first inverse transform unit 560 performs the first inverse transform $T_1^{-1}$ on the first decoded transformed output signal $\hat{y}_1^n$ using the first inverse transform matrix $A^{-1}{}_1^n$. Specifically, the first inverse transform unit 560 calculates an inverse matrix of the first transform matrix $A_1^n$ and inverse transforms, using the calculated inverse matrix, the first decoded transformed output signal $\hat{y}_1^n$ according to Expression 13.

Here, the first inverse transform matrix $A^{-1}{}_1^n$ is, as described in Embodiment 1, coefficients determined based on the statistical properties of the set including a transform target input signal $y_1^n$ that is a signal which is to be a target for the transform processing, and, for example, is coefficients determined by the KLT. It is to be noted that the first inverse transform unit 560 may perform an inverse DCT as the first inverse transform $T_1^{-1}$, and in this case, the first inverse transform coefficients may be stored in an internal memory or the like included in the first inverse transform unit 560 because the first inverse transform coefficients are fixed coefficients.

The following describes a specific structure of the second inverse transform unit 540 according to Embodiment 2.

FIG. 19 is a block diagram showing an example of a structure of the second inverse transform unit 540 according to Embodiment 2. FIG. 20 conceptually shows an example of a data flow in the second inverse transform unit 540 according to Embodiment 2.

As shown in FIG. 19, the second inverse transform unit 540 includes a second inverse transform processing unit 541 and a scale inverse modifying unit 542.

The second inverse transform processing unit 541 generates the inverse-transformed second decoded transformed output signal $\hat{y}^{\wedge'}{}_{1L}^m$ by inverse transforming the second decoded transformed output signal $\hat{y}_2^m$ using a second inverse transform matrix $A^{-1}{}_2^n$. For example, the second inverse transform processing unit 541 calculates an inverse matrix of the second transform matrix $A_2^n$ and inverse transforms, using the calculated inverse matrix, the second decoded transformed output signal $\hat{y}_2^m$ according to Expression 13.

The scale inverse modifying unit 542 modifies the inverse-transformed second decoded transformed output signal $\hat{y}^{\wedge'}{}_{1L}^m$ using the norm calculated from the first inverse transform matrix $A^{-1}1^n$. The norm is calculated according to Expression 9 as in Embodiment 1.

Since the norm changes when the first inverse transform matrix $A^{-1}{}_1^n$ adaptively changes, such as a case where the first inverse transform matrix $A_1^n$ is included in the coded signal, the scale inverse modifying unit 542 calculates the norm and modifies the inverse-transformed second decoded transformed output signal $\hat{y}^{\wedge'}{}_{1L}^m$ using the calculated norm. When the first inverse transform matrix $A^{-1}{}_1^n$ is fixed coefficients, it is sufficient that the scale inverse modifying unit 542 holds the norm in an internal memory or the like.

The scale inverse modifying unit 542 performs an inverse modifying process that is processing opposite to the processing which the scale modifying unit 131 according to Embodiment 1 performs. Specifically, the scale inverse modifying unit 542 generates the first decoded partial signal $\hat{y}_{1L}^m$ by multiplying, by the norm, the inverse-transformed second decoded transformed output signal $\hat{y}^{\wedge'}{}_{1L}^m$, as indicated by Expression 16.

$$[\text{Math. 16}] \quad \hat{y}_{IL}(i) = \hat{y}'_{IL}(i) * N(i)$$

The multiplication indicated by Expression 16 is performed for each element included in the inverse-transformed second decoded transformed output signal $\hat{y}^{\wedge'}{}_{1L}^m$. Specifically, the scale inverse modifying unit 542 generates an element $\hat{y}_{1L}(i)$ of the first decoded partial signal $\hat{y}_{1L}^m$ by multiplying, by the norm $N(i)$, an element $\hat{y}^{\wedge'}{}_{1L}(i)$ of the inverse-transformed second decoded transformed output signal $\hat{y}^{\wedge'}{}_{1L}^m$.

As above, in performing the two-stage inverse transform, the decoding apparatus 500 according to Embodiment 2 performs the norm inverse modification on the inverse-transformed second decoded transformed output signal $\hat{y}^{\wedge'}{}_{1L}^m$ resulting from the second inverse transform. The norm inverse modification is processing opposite to the norm modification described in Embodiment 1 and herein indicates processing of multiplying the current signal by the norm.

The method of deriving the norm is somewhat different depending on whether each of the first transform and the second transform is of a separable type (where a horizontal transform and a vertical transform are performed sequentially) or of a non-separable type (one transform is performed as a one-dimensional data sequence). Details are described below. It is to be noted that, when the first transform and the second transform are of the same type, that is, either the separable type or the non-separable type, the above-described method of deriving the norm is applicable. Here describes a case where the first transform is of the separable type and the second transform is of the non-separable type.

Assume that, for an MxM block signal, the norm from the horizontal transform of the first transform is $N_H(j)$ and the norm from the vertical transform of the first transform is $N_V(i)$ $(1 \le i, j \le M)$. Here, $i$ represents a horizontal position within the block while j represents a vertical position within the block. In this case, N() in Expression 16 is calculated by $N_H(j)^*N_V(i)$. Here, i is a value obtained by dividing k by M and j is a remainder from dividing k by M where k is a scan order of a block to which an index is assigned in the raster order.

In the case where the first transform is of the non-separable type and the second transform is of the separable type, an amount of norm modification is changed in units of columns or rows in the horizontal or vertical transform of the second transform.

Subsequently, operation of the decoding apparatus 500 according to Embodiment 2 is described with reference to FIG. 21. FIG. 21 is a flowchart showing an example of the operation of the decoding apparatus 500 according to Embodiment 2.

First, a coded signal generated by coding audio data, video data, or the like is input to the decoding apparatus 500. The entropy decoding unit 510 obtains the decoded quantized coefficients $C^{\wedge n}$ by entropy decoding the received coded signal (S410). In the case where the coded signal contains control information such as the division and synthesis information, the first inverse transform matrix $A^{-1}{}_1{}^n$, and the second inverse transform matrix $A^{-1}{}_2{}^m$, the entropy decoding unit 510 obtains the control information and outputs the obtained control information to each processing unit.

Next, the dividing unit 520 divides the decoded quantized coefficients $C^{\wedge n}$ into first decoded quantized coefficients $C^{\wedge}{}_1{}^m$ and second decoded quantized coefficients $C^{\wedge}{}_2{}^{n-m}$ based on the division and synthesis information (S420). At this time, the dividing unit 520 divides the decoded quantized coefficients $C^{\wedge n}$ using the division and synthesis information received from the entropy decoding unit 510 or the division and synthesis information read from the internal memory, for example.

Next, the inverse quantization unit 530 inverse quantizes the first decoded quantized coefficients $C^{\wedge}{}_1{}^m$ and the second decoded quantized coefficients $C^{\wedge}{}_2{}^{n-m}$ (S430). Specifically, the modification-absent inverse quantization unit 531 generates the second decoded transformed output signal $y^{\wedge}{}_2{}^m$ by inverse quantizing the first decoded quantized coefficients $C^{\wedge}{}_1{}^m$. Furthermore, the modification-inclusive inverse quantization unit 532 generates the second decoded partial signal $y^{\wedge}{}_{1H}{}^{n-m}$ by inverse quantizing the second decoded quantized coefficients $C^{\wedge}{}_2{}^{n-m}$. It is to be noted that the processing which the modification-absent inverse quantization unit 531 performs and the processing which the modification-inclusive inverse quantization unit 532 performs may be performed in any order or may be performed in parallel.

Next, the second inverse transform unit 540 generates the first decoded partial signal $y^{\wedge}{}_{1L}{}^m$ by inverse transforming the second decoded transformed output signal $y^{\wedge}{}_2{}^m$ and modifying the signal using the norm (S440). Specific operation of the second inverse transform unit 540 will be described below with reference to FIG. 22.

Next, the synthesizing unit 550 generates the first decoded transformed output signal $y^{\wedge}{}_1{}^n$ by synthesizing the first decoded partial signal $y^{\wedge}{}_{1L}{}^m$ and the second decoded partial signal $y^{\wedge}{}_{1H}{}^{n-m}$ using the division and synthesis information (S450).

At the end, the first inverse transform unit 560 generates the decoded signal $x^{\wedge n}$ by inverse transforming the first decoded transformed output signal $y^{\wedge}{}_1{}^n$ using the first inverse transform matrix $A^{-1}{}_1{}^n$ (S460).

Subsequently, details of the second inverse transform processing (S440) of the decoding apparatus 500 according to Embodiment 2 are described. FIG. 22 is a flowchart showing an example of operation of the second inverse transform unit 540 according to Embodiment 2.

The second inverse transform processing unit 541 generates the inverse-transformed second decoded transformed output signal $y^{\wedge'}{}_{1L}{}^m$ by inverse transforming the second decoded transformed output signal $y^{\wedge}{}_2{}^m$ using the second inverse transform matrix $A^{-1}{}_2{}^m$ (S441).

Next, the scale inverse modifying unit 542 generates the first decoded partial signal $y^{\wedge}{}_{1L}{}^m$ by multiplying, by the norm, the inverse-transformed second decoded transformed output signal $y^{\wedge'}{}_{1L}{}^m$ (S442). When the first inverse transform matrix $A^{-1}{}_1{}^n$ adaptively changes, the scale inverse modifying unit 542 calculates the norm from the first inverse transform matrix $A^{-1}{}_1{}^n$ and modifies, using the calculated norm, the inverse-transformed second decoded transformed output signal $y^{\wedge'}{}_{1L}{}^m$.

As above, in the decoding apparatus 500 according to Embodiment 2, the second inverse transform unit 540 performs the norm inverse modification on the transformed second decoded transformed output signal generated by performing the second inverse transform on the second decoded transformed output signal.

It is to be noted that not performing the norm inverse modification on the inverse-transformed second decoded transformed output signal $y^{\wedge'}{}_{1L}{}^m$ but performing the norm inverse modification on the second inverse transform matrix $A^{-1}{}_2{}^m$ can also produce the same effects.

FIG. 23 is a block diagram showing an example of a structure of a second inverse transform unit 640 according to Variation of Embodiment 2. FIG. 24 conceptually shows an example of a data flow in the second inverse transform unit 640 according to Embodiment 2.

As shown in FIG. 23, the second inverse transform unit 640 includes the second inverse transform processing unit 541 and a modified coefficient deriving unit 642.

The modified coefficient deriving unit 642 modifies the second inverse transform matrix $A^{-1}{}_2{}^m$ using the norm calculated from the first inverse transform matrix $A^{-1}{}_1{}^n$. The norm is calculated by Expression 9. Specifically, the modified coefficient deriving unit 642 modifies the second inverse transform matrix $A^{-1}{}_2{}^m$ according to Expression 17. In other words, the modified coefficient deriving unit 642 generates a modified second inverse transform matrix $A'^{-1}{}_2{}^m$ by multiplying the second inverse transform matrix $A^{-1}{}_2{}^m$ by the norm.

$$[\text{Math. 17}] \quad a'_2(i,j) = a_2(i,j) * N(i)$$

The second inverse transform processing unit 541 generates the first decoded partial signal $\hat{y}_{1L}{}^m$ by inverse transforming the second decoded transformed output signal $\hat{y}_2{}^m$ using the modified second inverse transform matrix $A'^{-1}{}_2{}^m$.

FIG. 25 is a flowchart showing an example of operation of the second inverse transform unit 640 according to Variation of Embodiment 2.

First, the modified coefficient deriving unit 642 derives the modified second inverse transform matrix $A'^{-1}{}_2{}^m$ that is modified coefficients, by modifying, using the norm calculated from the first inverse transform matrix $A^{-1}{}_1{}^n$, the second inverse transform matrix $A^{-1}{}_2{}^m$ according to Expression 17 (S541).

Next, the second inverse transform processing unit 541 generates the first decoded partial signal $\hat{y}_{1L}{}^m$ by inverse transforming the second decoded transformed output signal $\hat{y}_2{}^m$ using the modified second inverse transform matrix $A'^{-1}{}_2{}^m$ (S542).

It is to be noted that the modified coefficients are derived for each set $S_c$ used to derive the second inverse transform matrix $A^{-1}{}_2{}^m$, for example. This allows the amount of computation to be smaller than in the case where the modification is performed every time the second decoded transformed output signal $\hat{y}_2{}^m$ is input as shown in FIG. 20.

As above, performing the norm inverse modification not on the second decoded transformed output signal $\hat{y}_2{}^m$ but on the second inverse transform matrix $A^{-1}{}_2{}^m$ can also produce the same effects of increasing the coding efficiency.

The present invention may be applied to prediction decoding in which a coded signal resulting from prediction coding is decoded.

FIG. 26 shows an example of a structure of a decoding apparatus 700 according to Variation of Embodiment 2. To the decoding apparatus 700, a coded signal resulting from prediction coding is input. The coded signal resulting from the prediction coding is, for example, the coded signal provided from the coding apparatus 400 shown in FIG. 12, and is a signal generated by transforming and quantizing the prediction error signal.

The decoding apparatus 700 shown in FIG. 26 includes the entropy decoding unit 510, an inverse quantization/inverse transform unit 720, an adder 730, a memory 740, and a prediction unit 750. Processing units which perform the same operation as those in the decoding apparatus 500 shown in FIG. 18 are denoted with the same reference numerals and are not described below.

The inverse quantization/inverse transform unit 720 operates as described above and therefore is not described here. For example, the inverse quantization/inverse transform unit 720 includes the dividing unit 520, the inverse quantization unit 530, the second inverse transform unit 540, the synthesizing unit 550, and the first inverse transform unit 560 which are shown in FIG. 18.

The adder 730 generates a decoded signal by adding the decoded transformed input signal provided from the inverse quantization/inverse transform unit 720 and the prediction signal generated by the prediction unit 750.

The memory 740 is an example of a storage unit, such as a memory in which the decoded signal is stored.

The prediction unit 750 generates a prediction signal with reference to the previously decoded signal stored in the memory 740. The prediction signal generated as above is output to the adder 730. For example, the prediction unit 750 generates the prediction signal based on the control information received from the entropy decoding unit 510.

Subsequently, operation of the above decoding apparatus 700 is described with reference to FIG. 27.

FIG. 27 is a flowchart showing an example of operation of the decoding apparatus 700 according to Variation of Embodiment 2.

First, a coded signal resulting from prediction coding of an input signal of audio data, video data, or the like is input to the decoding apparatus 700. Specifically, the coded signal is a signal generated by performing the transform, the quantization, and the entropy coding on a prediction error signal that is a difference between the input signal and the prediction signal.

The prediction unit 750 generates the prediction signal based on the already decoded signal stored in the memory 740 (S600).

Subsequently, as described with reference to FIG. 21, the inverse quantization/inverse transform unit 720 generates a decoded prediction error signal by performing the entropy decoding, the division, inverse quantization, the modification-inclusive second inverse transform, the synthesis, and the first inverse transform on the coded signal (S410 to S460). The decoded prediction error signal is a signal generated by inverse transforming the first decoded transformed output signal $y^{\wedge n}_1$ and corresponds to the prediction error signal.

Next, the adder 730 generates a decoded signal by adding the prediction signal and the decoded prediction error signal (S670). The adder 730 stores, as a reference signal, the decoded signal generated as above, onto the memory 740, and provides, as an output signal, the decoded signal to outside (S680).

In the case where the control information contained in the coded signal is necessary in generating the prediction signal, the prediction signal is generated (S600) after the entropy decoding process (S410). Furthermore, the generation of a prediction signal (S600) and the dividing process (S420) to the first inverse transform (S460) may be parallelized.

In the above-described manner, the decoding apparatus 700 is capable of decoding the coded signal generated by coding the prediction error signal.

The coded signal to be decoded may be a signal generated by quantizing and entropy coding the second partial signal and the second transformed output signal separately without synthesizing these signals. In other words, when the entropy decoding and the inverse quantization result in the second decoded partial signal and the second decoded transformed output signal, the decoding apparatus 500 is not required to include the dividing unit 520.

Furthermore, it may also be possible that the inverse quantization unit 530 does not include the modification-absent inverse quantization unit 531 and the modification-inclusive inverse quantization unit 532 and has instead a structure therein of switching between modification and non-modification.

Furthermore, although the above decoding apparatus 500 according to Embodiment 2 divides the decoded quantized coefficients $C^{\wedge n}$ into the first decoded quantized coefficients $C^{\wedge m}_1$ and the second decoded quantized coefficients $C^{\wedge n-m}_2$ before inverse quantizing them, it may inverse quantize the decoded quantized coefficients $C^{\wedge n}$ before dividing them. This means that the above decoding apparatus 500 according to Embodiment 2 may not separately inverse quantize two signals but may inverse quantize one yet-to-be-divided signal.

FIG. 28 shows an example of a structure of a decoding apparatus 500a according to Variation of Embodiment 2 of the present invention.

The decoding apparatus 500a shown in FIG. 28 includes the entropy decoding unit 510, a dividing unit 520a, an inverse quantization unit 530a, the second inverse transform unit 540, a scale inverse modifying unit 542a, the synthesizing unit 550, and the first inverse transform unit 560. Processing units which perform the same operation as those in the decoding apparatus 500 shown in FIG. 18 are denoted with the same reference numerals and are not described below.

The inverse quantization unit 530a generates the decoded transformed output signal $y^{\wedge n}$ by inverse quantizing the decoded quantized coefficients $C^{\wedge n}$ generated by the entropy decoding unit 510. Specifically, the inverse quantization unit 530a generates the decoded transformed output signal $y^{\wedge n}$ by multiplying the decoded quantized coefficients $C^{\wedge n}$ by the level scale LevelScale_1 using no norm modification value (cf. Expression 14 where $C^{\wedge}_1(i, j)$ is replaced by $C^{\wedge}(i, j)$ and $y^{\wedge}_2(i, j)$ is replaced by $y^{\wedge}(i, j)$). The decoded transformed output signal $y^{\wedge n}$ generated as above includes the second decoded transformed output signal $y^{\wedge m}_2$ and an yet-to-be-modified second decoded partial signal $y^{\wedge \prime n-m}_{1H}$.

The dividing unit 520a divides the decoded transformed output signal $y^{\wedge n}$ generated by the inverse quantization unit 530a, into the second decoded transformed output signal $y^{\wedge m}_2$ and the yet-to-be-modified second decoded partial signal $y^{\wedge \prime n-m}_{1H}$ based on the division and synthesis information. The second decoded transformed output signal $y^{\wedge m}_2$ corresponds to the second transformed output signal $y^m_2$ generated by the second transform unit 130 according to Variation of Embodiment 1. The yet-to-be-modified second decoded partial signal $y^{\wedge \prime n-m}_{1H}$ corresponds to the modified second partial signal $y^{\prime n-m}_{1H}$ generated by the scale modifying unit 131a according to Variation of Embodiment 1.

The scale inverse modifying unit 542a generates the second decoded partial signal $y^{\wedge n-m}_{1H}$ by modifying, using the predetermined scaling parameter, the yet-to-be-modified second decoded partial signal $y^{\wedge \prime n-m}_{1H}$ provided from the dividing unit 520a. Specifically, the scale inverse modifying unit 542a performs an inverse modification process (scale inverse modification) that is processing opposite to the processing which the scale modifying unit 131a according to Variation of Embodiment 1 performs. More specifically, the scale inverse modifying unit 542a generates the second decoded partial signal $y^{\wedge n-m}_{1H}$ by multiplying the yet-to-be-modified second decoded partial signal $y^{\wedge \prime n-m}_{1H}$ by the norm (cf. Expression 16 where $y^{\wedge}_{1L}(i)$ is replaced by $y^{\wedge}_{1H}(i)$ and $y^{\wedge \prime}_{1L}(i)$ is replaced by $y^{\wedge \prime}_{1H}(i)$).

FIG. 29 is a flowchart showing an example of operation of the decoding apparatus 500a shown in FIG. 28.

First, the coded signal generated by coding audio data, video data, or the like is input to the decoding apparatus 500a. The entropy decoding unit 510 then generates the decoded quantized coefficients $C^{\wedge n}$ by entropy decoding the received coded signal (S410).

Next, the inverse quantization unit 530a generates the decoded transformed output signal $y^{\wedge n}$ by inverse quantizing the decoded quantized coefficients $C^{\wedge n}$ (S420a). Next, the dividing unit 520a divides the decoded transformed output signal $y^{\wedge n}$ into the second decoded transformed output signal $y^{\wedge m}_2$ and the yet-to-be-modified second decoded partial signal $y^{\wedge \prime n-m}_{1H}$ (S430a).

Next, the second inverse transform unit 540 performs the second inverse transform $T^{-1}_2$ on the second decoded transformed output signal $y^{\wedge m}_2$, and the scale inverse modifying unit 542a performs the scale inverse modification on the yet-to-be-modified second decoded partial signal $y^{\wedge'}{}_{1H}{}^{n-m}$ (S440a). For example, as shown in FIG. 22, the second inverse transform unit 540 generates the first decoded partial signal $y^{\wedge}{}_{1L}{}^{m}$ by inverse transforming the second decoded transformed output signal $y^{\wedge}{}_{2}{}^{m}$ using the second inverse transform matrix $A^{-1}{}_{2}{}^{m}$ and then performing the norm modification on the inverse-transformed second decoded transformed output signal $y^{\wedge'}{}_{1L}{}^{m}$. Furthermore, the scale inverse modifying unit 542a generates the second decoded partial signal $y^{\wedge}{}_{1H}{}^{n-m}$ by performing the norm inverse modification on the yet-to-be-modified second decoded partial signal $y^{\wedge'}{}_{1H}{}^{n-m}$.

Subsequently, as in the operation in the flowchart shown in FIG. 21, the synthesizing unit 550 generates the first decoded transformed output signal $y^{\wedge}{}_{1}{}^{n}$ by synthesizing the first decoded partial signal $y^{\wedge}{}_{1L}{}^{m}$ and the second decoded partial signal $y^{\wedge}{}_{1H}{}^{n-m}$ (S450). The first inverse transform unit 560 then generates the decoded signal $x^{\wedge n}$ by performing the first inverse transform on the first decoded transformed output signal $y^{\wedge}{}_{1}{}^{n}$ (S460).

As above, according to the decoding apparatus 500a according to Variation of Embodiment 2 is capable of decoding the coded signal generated by, on the coding side, synthesizing the signals resulting from division, and then quantizing them in order to reduce round-off errors and increase computation accuracy.

Although the above decoding apparatus 500 according to Embodiment 2 divides the decoded quantized coefficients into the first decoded quantized coefficients and the second decoded quantized coefficients and synthesizes them after the second inverse transform, it is not required to explicitly divide the decoded quantized coefficients. In other words, it is sufficient that a part of the decoded quantized coefficients which is to be a target for the second inverse transform is determined.

Thus, for example, as in a decoding apparatus 500b shown in FIG. 30, the dividing unit 520 and the synthesizing unit 550 may not be provided. FIG. 30 is a block diagram showing an example of a structure of the decoding apparatus 500b according to Embodiment 2 of the present invention.

The decoding apparatus 500b includes the entropy decoding unit 510, an inverse quantization unit 530b, a second inverse transform unit 540b, and the first inverse transform unit 560. Processing units which perform the same operation as those in the decoding apparatus 500 shown in FIG. 18 are denoted with the same reference numerals and are not described below.

The inverse quantization unit 530b generates the decoded transformed output signal $y^{\wedge n}$ by inverse quantizing the decoded quantized coefficients $C^{\wedge n}$. For example, the inverse quantization unit 530b generates the second decoded transformed output signal $y^{\wedge}{}_{2}{}^{m}$ by inverse quantizing, without using the predetermined scaling parameter (for example, the norm), the first decoded quantized coefficients $C^{\wedge}{}_{1}{}^{m}$ that are a part of the decoded quantized coefficients $C^{\wedge n}$, and generates the second decoded partial signal $y^{\wedge}{}_{1H}{}^{n-m}$ by inverse quantizing, using the scaling parameter, the second decoded quantized coefficients $C^{\wedge}{}_{2}{}^{n-m}$ that are a part of the decoded quantized coefficients $C^{\wedge n}$ other than the first decoded quantized coefficients $C^{\wedge}{}_{1}{}^{m}$. Specifically, out of the coefficients included in the scaling parameter, the coefficient value by which the first decoded quantized coefficients $C^{\wedge}{}_{1}{}^{m}$ are multiplied is set at 1, which makes it possible to control the applicability of modification for each part of the decoded quantized coefficients $C^{\wedge n}$.

The inverse quantization unit 530b may generate the decoded transformed output signal $y^{\wedge n}$ by multiplying the decoded quantized coefficients $C^{\wedge n}$ by the level scale LevelScale_1 using no norm modification value, as in the case of the inverse quantization unit 530a shown in FIG. 28.

The second inverse transform unit 540b performs the second inverse transform $T_2{}^{-1}$ only on the second decoded transformed output signal $y^{\wedge}{}_{2}{}^{m}$ out of the decoded transformed output signal $y^{\wedge n}$. For example, the second inverse transform unit 540b generates the first decoded partial signal $y^{\wedge}{}_{1L}{}^{m}$ by inverse transforming the second decoded transformed output signal $y^{\wedge}{}_{2}{}^{m}$ using the second inverse transform matrix $A^{-1}{}_{2}{}^{m}$, and modifying the signal using the scaling parameter, as in the case of the second inverse transform unit 540. The scaling parameter is, for example, the norm from the first inverse transform matrix $A^{-1}{}_{1}{}^{n}$ or a weight scale from a quantization matrix, which will be described below.

FIG. 31 is a flowchart showing an example of operation of the decoding apparatus 500b shown in FIG. 30.

First, the entropy decoding unit 510 generates the decoded quantized coefficients $C^{\wedge n}$ by entropy decoding the received coded signal (S410). Next, the inverse quantization unit 530b generates the decoded transformed output signal $y^{\wedge n}$ by inverse quantizing the decoded quantized coefficients $C^{\wedge n}$ (S420b).

Specifically, the inverse quantization unit 530b performs the inverse quantization using the scaling parameter only on the second decoded quantized coefficients $C^{\wedge}{}_{2}{}^{n-m}$ that are a part of the decoded quantized coefficients $C^{\wedge n}$ which is not to be a target for the second inverse transform $T_2{}^{-1}$. The inverse quantization unit 530b then performs, without using the scaling parameter, the inverse quantization on the first decoded quantized coefficients $C^{\wedge}{}_{1}{}^{n}$ that are a part of the decoded quantized coefficients $C^{\wedge n}$ which is to be a target for the second inverse transform $T_2{}^{-1}$. For example, out of the norm that is the scaling parameter, the norm value by which the first decoded quantized coefficients $C^{\wedge}{}_{1}{}^{m}$ are multiplied is set at 1, which allows the inverse quantization unit 530b to inverse quantize the first decoded quantized coefficients $C^{\wedge}{}_{1}{}^{m}$ without substantially using the scaling parameter.

Next, the second inverse quantization unit 540b generates the first decoded partial signal $y^{\wedge}{}_{1L}{}^{m}$ by inverse quantizing the second decoded transformed output signal $y^{\wedge}{}_{2}{}^{m}$ that is a part of the decoded transformed output signal $y^{\wedge n}$ which is to be a target for the second inverse transform (S440b). The second inverse transform unit 540b then outputs the first decoded transformed output signal $y^{\wedge}_1{}^n$ which includes the first decoded partial signal $y^{\wedge}_{1L}{}^m$ generated as above and the second decoded partial signal $y^{\wedge}_{1H}{}^{n-m}$.

At the end, the first inverse transform unit 560 generates the decoded signal $x^{\wedge n}$ by performing the first inverse transform $T_1{}^{-1}$ on the first decoded transformed output signal $y^{\wedge}_1{}^n$ using the first inverse transform matrix $A^{-1}{}_1{}^n$ (S460).

As above, the decoding apparatus 500b according to Variation of Embodiment 2 is also capable of decoding the coded signal generated through the two-stage transform in order to suppress the increase in the amount of computation and the increase in the amount of data of transform coefficients.

(Embodiment 3)

As compared to the coding apparatus according to Embodiment 1 which modifies, before the second transform, the second transform coefficients or the first partial signal using the norm calculated from the first transform coefficients, a coding apparatus according to Embodiment 3 is characterized by reflecting the scaling of the quantization matrix into the second transform coefficients or the first partial signal before the second transform. In other words, the coding apparatus according to Embodiment 3 is characterized by modifying the second transform coefficients or the first partial signal using the quantization matrix.

The coding apparatus according to Embodiment 3 is different from the coding apparatus 100 according to Embodiment 1 shown in FIG. 3 in that the second transform unit 130 is replaced by a second transform unit 830. The other structure is the same as that in the coding apparatus 100 shown in FIG. 3 and therefore not described below.

FIG. 32 is a block diagram showing an example of a structure of the second transform unit 830 according to Embodiment 3. FIG. 33 conceptually shows an example of a data flow in the second transform unit 830 according to Embodiment 3.

As shown in FIG. 32, the second transform unit 830 includes a scale modifying unit 831, the second transform processing unit 132, and a post scale modifying unit 833.

The scale modifying unit 831 modifies the first partial signal $y_{1L}{}^m$ using the quantization matrix to be used in the quantization unit 140. Specifically, the scale modifying unit 831 modifies the first partial signal $y_{1L}{}^m$ according to Expressions 18 and 19. More specifically, the scale modifying unit 831 generates the modified first partial signal $y'_{1L}{}^m$ by multiplying the first partial signal $y_{1L}{}^m$ by a reciprocal mf of the quantization matrix. In other words, the scale modifying unit 831 generates the modified first partial signal $y'_{1L}{}^m$ by dividing the first partial signal $y_{1L}{}^m$ by the quantization matrix.

[Math. 18]

(Expression 18) $\quad y'_{1L}(i) = y_{1L}(i) * mf(i)$

[Math. 19]

(Expression 19) $\quad mf(i) = 1/f(i)$

In the expressions, $f(i)$ is a value of each element of the weight scale (weightScale) derived from the quantization matrix.

The second transform processing unit 132 generates a transformed first partial signal $y'_2{}^m$ by transforming the modified first partial signal $y'_{1L}{}^m$ using the second transform matrix $A_2{}^m$.

The post scale modifying unit 833 generates the second transformed output signal $y_2{}^m$ by multiplying the transformed first partial signal $y'_2{}^m$ by a modification coefficient mf_2 calculated from the quantization matrix. Specifically, the post scale modifying unit 833 generates the second transformed output signal $y_2{}^m$ by modifying the transformed first partial signal $y'_2{}^m$ according to Expressions 20 and 21.

[Math. 20]

(Expression 20) $$y_2(i) = y'_2(i) * mf\_2(j)$$

[Math 21]

(Expression 21) $$mf\_2(j) = 1/S(i)$$

In the expression, S(i) is an element of a matrix represented by Expression 22.
[Math. 22]

(Expression 22) $$S = \frac{1}{\sqrt{mf(1)^2 + \cdots + mf(4)^2}} \begin{bmatrix} mf(1) & 0 & \cdots & 0 \\ 0 & mf(2) & \ddots & \vdots \\ \vdots & \ddots & \ddots & 0 \\ 0 & \cdots & 0 & mf(4) \end{bmatrix}$$

With the above structure, the coding apparatus according to Embodiment 3 is capable of reflecting the scaling of the quantization matrix into the first partial signal that is a signal on which the second transform has not yet been performed, which allows a further increase in the coding efficiency.

It is to be noted that the second transform unit 830 is not required to include the post scale modifying unit 833 and instead, the modification-absent quantization unit 141 may have a like function of the above-described post scale modifying unit 833.

Next, operation of the coding apparatus according to Embodiment 3 is described. From the operation of the coding apparatus 100 according to Embodiment 1 shown in FIG. 6, the operation of the coding apparatus according to Embodiment 3 is different in the second transform processing. The other operation is the same as that in the coding apparatus 100 shown in FIG. 6 and therefore not described below.

FIG. 34 is a flowchart showing an example of operation of the second transform unit 830 according to Embodiment 3. The processing shown in FIG. 34 is an example of the modification-inclusive second transform (S130) shown in FIG. 6.

First, when the first partial signal $y_{1L}{}^m$ is input to the second transform unit 830, the scale modifying unit 831 generates the modified first partial signal $y'_{1L}{}^m$ by multiplying the first partial signal $y_{1L}{}^m$ by the reciprocal of the quantization matrix according to Expressions 18 and 19 (S731).

Next, the second transform processing unit 132 generates the transformed first partial signal $y'_2{}^m$ by performing, using the second transform matrix $A_2{}^m$, the second transform $T_2$ on the modified first partial signal $y'_{1L}m$ (S732).

Next, the post scale modifying unit 833 generates the second transformed output signal $y_2{}^m$ by multiplying the transformed first partial signal $y'_2{}^m$ by the modification coefficient according to Expressions 20 to 22 (S733).

In the above-described manner, the second transform unit 830 generates the second transformed output signal $y_2{}^m$. It is to be noted that the second transform matrix $A_2{}^m$ is coefficients determined based on statistical properties of the set including the signal which is to be a target for the second transform $T_2$ (the transform target signal).

As in the case of Embodiment 1, not the first partial signal $y_{1L}{}^m$ but the second transform matrix $A_2{}^m$ may be modified in Embodiment 3. In other words, the second transform unit 830 may include the modified coefficient deriving unit 331, as shown in FIG. 9, instead of the scale modifying unit 831 and the post scale modifying unit 833.

At this time, the modified coefficient deriving unit 331 modifies the second transform matrix $A_2{}^m$ using the

quantization matrix. Specifically, the modified coefficient deriving unit 331 modifies the second transform matrix $A_2{}^m$ according to Expression 23. As indicated by Expression 23, the modified coefficient deriving unit 331 multiplies each element $a_2(i, j)$ of the second transform matrix $A_2{}^m$ by the reciprocal $mf(i)$ of an element of the quantization matrix and the modification coefficient $mf\_2(j)$ calculated from the quantization matrix.

[Math. 23]

$$(\text{Expression 23}) \quad a'_2(i, j) = a_2(i, j) * mf(i) * mf\_2(j)$$

As above, modifying not the first partial signal $y_{1L}{}^m$ but the second transform matrix $A_2{}^m$ can also produce the same effects of increasing the coding efficiency.

It is to be noted that Embodiment 1 and Embodiment 3 may be combined. Specifically, the second transform unit 830 may perform both the norm modification and the quantization matrix modification on the first partial signal $y_{1L}{}^m$ or the second transform matrix $A_2{}^m$.

For example, in the case of modifying the first partial signal $y_{1L}{}^m$, the scale modifying unit 831 modifies the first partial signal $y_{1L}{}^m$ according to Expression 24. Specifically, the scale modifying unit 831 generates the modified first partial signal $y'_{1L}{}^m$ by multiplying each element $y_{1L}(i)$ of the first partial signal $y_{1L}{}^m$ by the reciprocal of the norm $N(i)$ calculated from the first transform matrix $A_1{}^n$ and the reciprocal $mf(i)$ of an element of the quantization matrix.

[Math. 24]

$$(\text{Expression 24}) \quad y_2(i) = y'_2(i)/N(i) * mf(i)$$

Furthermore, in the case of modifying the second transform matrix $A_2{}^m$, the modified coefficient deriving unit 331 modifies the second transform matrix $A_2{}^m$ according to Expression 25. Specifically, the modified coefficient deriving unit 331 generates the modified second transform matrix $A'_2{}^m$ by multiplying each element $a_2(i, j)$ of the second transform matrix $A_2{}^m$ by the reciprocal of the norm $N(i)$ calculated from the first transform matrix $A_1{}^n$, the reciprocal $mf(i)$ of an element of the quantization matrix, and the modification coefficient $mf\_2(j)$ calculated from the quantization matrix.

[Math. 25]

$$(\text{Expression 25}) \quad a'_2(i, j) = a_2(i, j)/N(i) * mf(i) * mf\_2(j)$$

Even with the above structure, the second transform which is more appropriate can be applied to the first partial signal.

(Embodiment 4)

As compared to the decoding apparatus according to Embodiment 2 which modifies, using the norm calculated from the first inverse transform coefficients, the first decoded quantized coefficients resulting from the second inverse transform, or the second inverse transform coefficients, a decoding apparatus according to Embodiment 4 is characterized by reflecting the scaling of the quantization matrix into the first decoded quantized coefficients resulting from the second inverse transform, or the second inverse transform coefficients. In other words, the decoding apparatus according to Embodiment 4 is characterized by modifying, using the quantization matrix, the first decoded quantized coefficients resulting from the second inverse transform, or the second inverse transform coefficients.

The decoding apparatus according to Embodiment 4 is different from the decoding apparatus 500 according to Embodiment 2 shown in FIG. 18 in that the second inverse transform unit 540 is replaced by a second inverse transform unit 940. The other structure is the same as that in the decoding apparatus 500 shown in FIG. 18 and therefore not described below.

FIG. 35 is a block diagram showing an example of a structure of the second inverse transform unit 940 according to Embodiment 4. FIG. 36 conceptually shows an example of a data flow in the second transform unit 940 according to Embodiment 4.

As shown in FIG. 35, the second inverse transform unit 940 includes the second inverse transform processing unit 541, a scale inverse modifying unit 942, and a post scale inverse modifying unit 943, and performs processing opposite to the transform processing, described in Embodiment 3, which the second transform unit 830 performs.

The post scale inverse modifying unit 943 performs processing (post scale inverse modification processing) opposite to the processing which the post scale modifying unit 833 performs. Specifically, the post scale inverse modifying unit 943 generates an inverse-modified second decoded transformed output signal $y^{\wedge'}_2{}^m$ by multiplying the second decoded transformed output signal $y^{\wedge}_2{}^m$ by the reciprocal of the modification coefficient mf_2 calculated from the quantization matrix. This is equivalent to division of the second decoded transformed output signal $y^{\wedge}_2{}^m$ by the modification coefficient mf_2 as indicated by Expression 26.

[Math. 26]

$$\hat{y}'_2(i) = \hat{y}_2(i)/mf\_2(j)$$

(Expression 26)

The modification coefficient mf_2(j) is represented by Expressions 21 and 22.

The second inverse transform processing unit 541 performs processing (the second inverse transform $T_2{}^{-1}$) opposite to the processing which the second transform processing unit 132 performs. Specifically, the second inverse transform processing unit 541 generates the inverse-transformed second decoded transformed output signal $y^{\wedge'}_{1L}{}^m$ by performing the second inverse transform $T_2{}^{-1}$ on the inverse-modified second decoded transformed output signal $y^{\wedge'}_2{}^m$ using the second inverse transform matrix $A^{-1}_2{}^m$.

The scale inverse modifying unit 942 performs processing (scale inverse modification processing) opposite to the processing which the scale modifying unit 831 performs. Specifically, the scale inverse modifying unit 942 generates the first decoded partial signal $y^{\wedge}_{1L}{}^m$ by multiplying the inverse-transformed second decoded transformed output signal $y^{\wedge'}_{1L}{}^m$ by the quantization parameter. This is equivalent to division of the second decoded transformed output signal $y^{\wedge}_2{}^m$ by the modification coefficient mf as indicated by Expression 27.

[Math. 27]

$$\hat{y}_{1L}(i) = \hat{y}'_{1L}(i)/mf(i)$$

(Expression 27)

Next, operation of the decoding apparatus according to Embodiment 4 is described. From the operation of the decoding apparatus 500 according to Embodiment 2 shown in FIG. 21, the operation of the decoding apparatus according to Embodiment 4 is different in the second inverse transform processing. The other operation is the same as that in the decoding apparatus 500 shown in FIG. 21 and therefore not described below.

FIG. 37 is a flowchart showing an example of operation of the second inverse transform unit 940 according to Embodiment 4. The processing shown in FIG. 37 is an example of the modification-inclusive second inverse transform (S440) shown in FIG. 21.

First, when the second decoded transformed output signal $y^{\wedge}_2{}^m$ is input to the second inverse transform unit 940, the post scale inverse modifying unit 943 generates the inverse-modified second decoded transformed output signal $y^{\wedge'}_2{}^m$ by multiplying the second decoded transformed output signal $y^{\wedge}_2{}^m$ by the reciprocal of the modification coefficient mf_2 according to Expression 26 (S841).

Next, the second inverse transform processing unit 541 generates the inverse-transformed second decoded transformed output signal $y^{\wedge'}_{1L}{}^m$ by performing the second inverse transform $T_2{}^{-1}$ on the inverse-modified second decoded

28

transformed output signal $y^{\wedge'}{}_2{}^m$ using the second inverse transform matrix $A^{-1}{}_2{}^m$ (S842).

Next, the scale inverse modifying unit 942 generates the first decoded partial signal $y^{\wedge}{}_{1L}{}^m$ by multiplying the inverse-transformed second decoded transformed output signal $y^{\wedge'}{}_{1L}{}^m$ by the quantization matrix (S843).

In the above-described manner, the second inverse transform unit 940 generates the first decoded partial signal $y^{\wedge}{}_{1L}{}^m$. It is to be noted that the second inverse transform matrix $A^{-1}{}_2{}^m$ is coefficients determined based on statistical properties of the set including the signal which is to be a target for the second transform $T_2$ (the transform target signal).

As in the case of Embodiment 2, not the inverse-transformed second decoded transformed output signal $y^{\wedge'}{}_{1L}{}^m$ but the second inverse transform matrix $A^{-1}{}_2{}^m$ may be modified in Embodiment 4. In other words, the second inverse transform unit 940 may include the modified coefficient deriving unit 642, as shown in FIG. 23, instead of the scale inverse modifying unit 942 and the post scale inverse modifying unit 943.

At this time, the modified coefficient deriving unit 642 modifies the second inverse transform matrix $A^{-1}{}_2{}^m$ using the quantization matrix. Specifically, the modified coefficient deriving unit 642 modifies the second inverse transform matrix $A^{-1}{}_2{}^m$ according to Expression 28. As indicated by Expression 28, the modified coefficient deriving unit 642 divides each element $a_2(i, j)$ of the second inverse transform matrix $A^{-1}{}_2{}^m$ by the reciprocal mf(i) of an element of the quantization matrix and the modification coefficient mf_2(j) calculated from the quantization matrix.

[Math. 28]

$$a'_2(i, j) = a_2(i, j)/mf(i)/mf\_2(j)$$

(Expression 28)

As above, modifying not the inverse-transformed second decoded transformed output signal $y^{\wedge'}{}_{1L}{}^m$ but the second inverse transform matrix $A^{-1}{}_2{}^m$ can also produce the same effects of increasing the coding efficiency.

It is to be noted that Embodiment 2 and Embodiment 4 may be combined. Specifically, the second inverse transform unit 940 may perform both the norm inverse modification and the quantization matrix inverse modification on the inverse-transformed second decoded transformed output signal $y^{\wedge'}{}_{1L}{}^m$ or the second inverse transform matrix $A^{-1}{}_2{}^m$.

For example, in the case of modifying the inverse-transformed second decoded transformed output signal $y^{\wedge'}{}_{1L}{}^m$, the scale inverse modifying unit 942 modifies the inverse-transformed second decoded transformed output signal $y^{\wedge'}{}_{1L}{}^m$ according to Expression 29. Specifically, the scale inverse modifying unit 942 generates the first decoded partial signal $y^{\wedge}{}_{1L}{}^m$ by multiplying each element $y^{\wedge'}{}_{1L}(i)$ of the inverse-transformed second decoded transformed output signal $y^{\wedge'}{}1L^m$ by the norm N(i) calculated from the first inverse transform matrix $A^{-1}{}_1{}^n$, following by division by the reciprocal mf(i) of an element of the quantization matrix.

[Math. 29]

$$\hat{y}_{1L}(i) = \hat{y}'_{1L}(i) * N(i)/mf(i)$$

(Expression 29)

Furthermore, in the case of modifying the second inverse transform matrix $A^{-1}{}_2{}^m$, the modified coefficient deriving unit 642 modifies the second inverse transform matrix $A^{-1}{}_2{}^m$ according to Expression 30. Specifically, the modified coefficient deriving unit 642 generates the modified second inverse transform matrix $A'^{-1}{}_2{}^m$ by multiplying each element $a_2(i, j)$ of the second inverse transform matrix $A^{-1}{}_2{}^m$ by the norm N(i) calculated from the first inverse transform matrix $A^{-1}{}_1{}^n$, following by division by the reciprocal mf(i) of an element of the quantization matrix and the modification coefficient mf_2(j) calculated from the quantization matrix.

[Math. 30]

(Expression 30) $$a'_2(i,j) = a_2(i,j) * N(i)/mf(i)/mf\_2(j)$$

Even with the above structure, the second transform which is more appropriate can be applied to the second decoded transformed output signal.

(Embodiment 5)

The processing described in each of Embodiments can be simply implemented in an independent computer system, by recording, in a recording medium, a program for implementing the configurations of the video coding method and the video decoding method described in Embodiments. The recording media may be any recording media as long as the program can be recorded, such as a magnetic disk, an optical disk, a magnetic optical disk, an IC card, and a semiconductor memory.

Hereinafter, the applications to the video coding method and the video decoding method described in Embodiments and systems using thereof will be described.

FIG. 38 illustrates an overall configuration of a content providing system ex100 for implementing content distribution services. The area for providing communication services is divided into cells of desired size, and base stations ex107 to ex110 which are fixed wireless stations are placed in each of the cells.

The content providing system ex100 is connected to devices, such as a computer ex111, a personal digital assistant (PDA) ex112, a camera ex113, a cellular phone ex114 and a game machine sex115, via the Internet ex101, an Internet service provider ex102, a telephone network ex104, as well as the base stations ex107 to ex110, respectively.

However, the configuration of the content providing system ex100 is not limited to the configuration shown in FIG. 38, and a combination in which any of the elements are connected is acceptable. In addition, each device may be directly connected to the telephone network ex104, rather than via the base stations ex107 to ex110 which are the fixed wireless stations. Furthermore, the devices may be interconnected to each other via a short distance wireless communication and others.

The camera ex113, such as a digital video camera, is capable of capturing video. A camera ex116, such as a digital video camera, is capable of capturing both still images and video. Furthermore, the cellular phone ex114 may be the one that meets any of the standards such as Global System for Mobile Communications (GSM), Code Division Multiple Access (CDMA), Wideband-Code Division Multiple Access (W-CDMA), Long Term Evolution (LTE), and High Speed Packet Access (HSPA). Alternatively, the cellular phone ex114 may be a Personal Handyphone System (PHS).

In the content providing system ex100, a streaming server ex103 is connected to the camera ex113 and others via the telephone network ex104 and the base station ex109, which enables distribution of images of a live show and others. In such a distribution, a content (for example, video of a music live show) captured by the user using the camera ex113 is coded as described above in Embodiments, and the coded content is transmitted to the streaming server ex103. On the other hand, the streaming server ex103 carries out stream distribution of the transmitted content data to the clients upon their requests. The clients include the computer ex111, the PDA ex112, the camera ex113, the cellular phone ex114, and the game machine ex115 that are capable of decoding the above-mentioned coded data. Each of the devices that have received the distributed data decodes and reproduces the coded data.

The captured data may be coded by the camera ex113 or the streaming server ex103 that transmits the data, or the coding processes may be shared between the camera ex113 and the streaming server ex103. Similarly, the distributed data may be decoded by the clients or the streaming server ex103, or the decoding processes may be shared between the clients and the streaming server ex103. Furthermore, the data of the still images and video captured by not only the camera ex113 but also the camera ex115 may be transmitted to the streaming server ex103 through the computer ex111. The coding processes may be performed by the camera ex116, the computer ex111, or the streaming server ex103, or shared among them.

Furthermore, the coding and decoding processes may be performed by an LSI ex500 generally included in each of the computer ex111 and the devices. The LSI ex500 may be configured of a single chip or a plurality of chips. Software for coding and decoding video may be synthesized into some type of a recording medium (such as a CD-ROM, a flexible disk, and a hard disk) that is readable by the computer ex111 and others, and the coding and decoding processes may be performed using the software. Furthermore, when the cellular phone ex114 is equipped with a camera, the image data obtained by the camera may be transmitted. The video data is data coded by the LSI ex500 included in the cellular phone ex114.

Furthermore, the streaming server ex103 may be composed of servers and computers, and may decentralize data and process the decentralized data, record, or distribute data.

As described above, the clients may receive and reproduce the coded data in the content providing system ex100. In other words, the clients can receive and decode information transmitted by the user, and reproduce the decoded data in real time in the content providing system ex100, so that the user who does not have any particular right and equipment can implement personal broadcasting.

Each of the devices included in this content providing system may perform coding and decoding using the image coding method and the image decoding method described in Embodiments.

The cellular phone ex114 will be described as an example of such a device.

FIG. 39 illustrates the cellular phone ex114 that uses the image coding method and the image decoding method described in Embodiments. The cellular phone ex114 includes: an antenna ex601 for transmitting and receiving radio waves through the base station ex110; a camera unit ex603 such as a CCD camera capable of capturing moving and still images; a display unit ex602 such as a liquid crystal display for displaying the data such as decoded video captured by the camera unit ex603 or received by the antenna ex601; a main body unit including a set of operation keys ex604; an audio output unit ex608 such as a speaker for output of audio; an audio input unit ex605 such as a microphone for input of audio; a recording medium ex607 for recording coded or decoded data including data of captured moving or still images, data of received e-mails, and data of moving or still images; and a slot unit ex606 for enabling the cellular phone ex114 to attach the recording medium ex607. The recording medium ex607 is a medium that stores a flash memory device within a plastic case, for example, an SD Card. The flash memory device is one type of Electrically Erasable and Programmable Read-Only Memory (EEPROM) which is a non-volatile memory that is electrically rewritable and erasable.

Next, the cellular phone ex114 will be described with reference to FIG. 40. In the cellular phone ex114, a main control unit ex711 designed to control overall each unit of the main body including the display unit ex602 as well as the operation key ex604 is connected mutually, via a synchronous bus ex713, to a power supply circuit unit ex710, an operation input control unit ex704, an image coding unit ex712, a camera interface unit ex703, a liquid crystal display (LCD) control unit ex702, an image decoding unit ex 709, a multiplexing/demultiplexing unit ex708, a recording/reproducing unit ex707, a modem circuit unit ex706, and an audio processing unit ex705.

When a call-end key or a power key is turned ON by a user's operation, the power supply circuit unit ex710 supplies the respective units with power from a battery pack so as to activate the cell phone ex114 that is digital and is equipped with the camera.

In the cellular phone ex114, the audio processing unit ex705 converts the audio signals collected by the audio input unit ex605 in voice conversation mode into digital audio data under the control of the main control unit ex711 including a CPU, ROM, and RAM. Then, the modem circuit unit ex706 performs spread spectrum processing on the digital audio data, and the transmitting and receiving circuit unit ex701 performs digital-to-analog conversion and frequency conversion on the data, so as to transmit the resulting data via the antenna ex601. In addition, in the cellular phone ex114, the transmitting and receiving circuit unit ex701 amplifies the data received by the antenna ex601 in voice conversation mode and performs frequency conversion and the analog-to-digital conversion on the data. Then, the modem circuit unit ex706 performs inverse spread spectrum processing on the data, and the audio processing unit ex705 converts it into analog audio data, so as to output it via the audio output unit ex608.

Furthermore, when an e-mail in data communication mode is transmitted, text data of the e-mail inputted by operating the operation keys ex604 of the main body is sent out to the main control unit ex711 via the operation input control unit ex704. The main control unit ex711 causes the modem circuit unit ex706 to perform spread spectrum processing on the text data, and the transmitting and receiving circuit unit ex701 performs the digital-to-analog conversion and the frequency conversion on the resulting data to transmit the data to the base station ex110 via the antenna ex601.

When image data is transmitted in data communication mode, the image data captured by the camera unit ex603 is supplied to the image coding unit ex712 via the camera interface unit ex703. Furthermore, when the image data is not transmitted, the image data captured by the camera unit ex603 can be displayed directly on the display unit ex602 via the camera interface unit ex703 and the LCD control unit ex702.

The image coding unit ex712 including the image coding apparatus as described for the present invention compresses and codes the image data supplied from the camera unit ex603 using the coding method employed by the image coding apparatus as shown in Embodiments so as to transform the data into coded image data, and sends the data out to the multiplexing/demultiplexing unit ex708. Furthermore, the cellular phone ex114 simultaneously sends out, as digital audio data, the audio collected by the audio input unit ex605 during the capturing with the camera unit ex603 to the multiplexing/demultiplexing unit ex708 via the audio processing unit ex705.

The multiplexing/demultiplexing unit ex708 multiplexes the coded image data supplied from the image coding unit ex712 and the audio data supplied from the audio processing unit ex705, using a predetermined method. Then, the modem circuit unit ex706 performs spread spectrum processing on the multiplexed data obtained by the multiplexing/ demultiplexing unit ex708. After the digital-to-analog conversion and frequency conversion on the data, the transmitting and receiving circuit unit ex701 transmits the resulting data via the antenna ex601.

When receiving data of a video file which is linked to a Web page and others in data communication mode, the modem circuit unit ex706 performs inverse spread spectrum processing on the data received from the base station ex102 via the antenna ex601, and sends out the multiplexed data obtained as a result of the inverse spread spectrum processing to the multiplexing/demultiplexing unit ex708.

In order to decode the multiplexed data received via the antenna ex601, the multiplexing/demultiplexing unit ex708 demultiplexes the multiplexed data into a bit stream of image data and that of audio data, and supplies the coded image data to the image decoding unit ex709 and the audio data to the audio processing unit ex705, respectively via the synchronous bus ex713.

Next, the image decoding unit ex709 including the image decoding apparatus described according to the present invention decodes the bit stream of the image data using a decoding method corresponding to the coding method as described in Embodiments so as to generate reproduced video data, and supplies this data to the display unit ex602 via the LCD control unit ex702. Thus, the video data included in the video file linked to the Web page, for instance, is displayed. Simultaneously, the audio processing unit ex705 converts the audio data into analog audio data, and supplies the data to the audio output unit ex608. Thus, the audio data included in the video file linked to the Web page, for instance, is reproduced.

The present invention is not limited to the above-mentioned system because terrestrial or satellite digital broadcasting has been in the news lately, and at least one of the image coding apparatus and the image decoding apparatus described in Embodiments can be incorporated into a digital broadcasting system as shown in FIG. 41. More specifically, a broadcast station ex201 communicates or transmits, via radio waves to a broadcast satellite ex202, audio data, video data, or a bit stream obtained by multiplexing the audio data and the video data. Upon receipt of the bit stream, the broadcast satellite ex202 transmits radio waves for broadcasting. Then, a home-use antenna ex204 with a satellite broadcast reception function receives the radio waves, and a device, such as a television (receiver) ex300 and a set top box (STB) ex217 decodes a coded bit stream and reproduces the decoded bit stream. Furthermore, a reader/recorder ex218 that reads and decodes such a bit stream obtained by multiplexing image data and audio data that are recorded on storage media ex215 and 216, such as a CD and a DVD may include an image decoding apparatus described in Embodiments. In this case, the reproduced video signals are displayed on the monitor ex219. It is also possible to implement the image decoding apparatus in the set top box ex217 connected to a cable ex203 for a cable television or an antenna ex204 for satellite and/or terrestrial broadcasting, so as to reproduce the video signals on the monitor ex219 of the television ex300. The image decoding apparatus may be included not in the set top box but in the television ex300. Also, a car ex210 having an antenna ex205 can receive signals from the satellite ex202 or the base station ex201 for reproducing video on a display device such as a car navigation system ex211 set in the car ex210.

Furthermore, the video decoding apparatus or the video coding apparatus as shown in Embodiments can be implemented in the reader/recorder ex218 (i) for reading and decoding the video data, the audio data, or the coded bit stream obtained by multiplexing the video data and the audio data, or (ii) for coding the video data, the audio data, or the coded bit stream obtained by multiplexing the video data and the audio data and recording the resulting data as the multiplexed data on the recording medium ex215. Here, the video data and the audio data are recorded on the recording medium ex215, such as a BD and a DVD. In this case, the reproduced video signals are displayed on the monitor ex219, and the reproduced video signals can be reproduced by another device or system, using the recording medium ex215 on which the coded bit stream is recorded. Furthermore, it is also possible to implement the video decoding apparatus in the set top box ex217 connected to the cable ex203 for a cable television or the antenna ex204 for satellite and/or terrestrial broadcasting, so as to display the video signals on the monitor ex219 of the television ex300. The image decoding apparatus may be included not in the set top box but in the television ex300.

FIG. 42 illustrates the television (receiver) ex300 that uses the video decoding method and the video coding method described in Embodiments. The television ex300 includes: a tuner ex301 that obtains or provides a bit stream of video information through the antenna ex204 or the cable ex203, etc. that receives a broadcast; a modulation/demodulation unit ex302 that demodulates the received coded data or modulates data into coded data to be supplied outside; and a multiplexing/demultiplexing unit ex303 that demultiplexes the modulated data into video data and audio data, or multiplexes the coded video data and audio data into data. Furthermore, the television ex300 further includes: a signal processing unit ex306 including an audio signal processing unit ex304 and a video signal processing unit ex305 that decode audio data and video data and code audio data and video data, respectively; a speaker ex307 that provides the decoded audio signal; and an output unit ex309 including a display unit ex308 that displays the decoded video signal, such as a display. Furthermore, the television ex300 includes an interface unit ex317 including an operation input unit ex312 that receives an input of a user operation. Furthermore, the television ex300 includes a control unit ex310 that controls overall each constituent element of the television ex300, and a power supply circuit unit ex311 that supplies power to each of the elements. Other than the operation input unit ex312, the interface unit ex317 may include: a bridge ex313 that is connected to an external device, such as the reader/recorder ex218; a slot unit ex314 for enabling attachment of the recording medium ex216, such as an SD card; a driver ex315 to be connected to an external recording medium, such as a hard disk; and a modem ex316 to be connected to a telephone network. Here, the recording medium ex216 can electrically record information using a non-volatile/volatile semiconductor memory element for storage. The constituent elements of the television ex300 are connected to one another through a synchronous bus.

First, a configuration in which the television ex300 decodes data obtained from outside through the antenna ex204 and others and reproduces the decoded data will be described. In the television ex300, upon receipt of a user operation from a remote controller ex220 and others, the multiplexing/demultiplexing unit ex303 demultiplexes the video data and audio data demodulated by the modulation/demodulation unit ex302, under control of the control unit ex310 including a CPU. Furthermore, the audio signal processing unit ex304 decodes the demultiplexed audio data, and the video signal processing unit ex305 decodes the demultiplexed video data, using the decoding method described in Embodiments, in the television ex300. The output unit ex309 provides the decoded video signal and audio signal outside, respectively. When the output unit ex309 provides the video signal and the audio signal, the signals may be temporarily stored in buffers ex318 and ex319, and others so that the signals are reproduced in synchronization with each other. Furthermore, the television ex300 may read a coded bit stream not through a broadcast and others but from the recording media ex215 and ex216, such as a magnetic disk, an optical disc, and a SD card. Next, a configuration in which the television ex300 codes an audio signal and a video signal, and transmits the data outside or writes the data on a recording medium will be described. In the television ex300, upon receipt of a user operation from the remote controller ex220 and others, the audio signal processing unit ex304 codes an audio signal, and the video signal processing unit ex305 codes a video signal, under control of the control unit ex310 using the coding method as described in Embodiments. The multiplexing/demultiplexing unit ex303 multiplexes the coded video signal and audio signal, and provides the resulting signal outside. When the multiplexing/demultiplexing unit ex303 multiplexes the video signal and the audio signal, the signals may be temporarily stored in buffers ex320 and ex321, and others so that the signals are reproduced in synchronization with each other. Here, the buffers ex318 to ex321 may be plural as illustrated, or at least one buffer may be shared in the television ex300. Furthermore, data may be stored in a buffer other than the buffers ex318 to ex321 so that the system overflow and underflow may be avoided between the modulation/demodulation unit ex302 and the multiplexing/demultiplexing unit ex303, for example.

Furthermore, the television ex300 may include a configuration for receiving an AV input from a microphone or a camera other than the configuration for obtaining audio and video data from a broadcast or a recording medium, and may code the obtained data. Although the television ex300 can code, multiplex, and provide outside data in the description, it may not be capable of coding, multiplexing, and providing outside data but capable of only one of receiving, decoding, and providing outside data.

Furthermore, when the reader/recorder ex218 reads or writes a coded bit stream from or in a recording medium, any of the television ex300 and the reader/recorder ex218 may decode or code the coded bit stream, and the television ex300 and the reader/recorder ex218 may share the decoding or coding.

As an example, FIG. 43 illustrates a configuration of an information reproducing/recording unit ex400 when data is read or written from or in an optical disc. The information reproducing/recording unit ex400 includes constituent elements ex401 to ex407 to be described hereinafter. The optical head ex401 irradiates a laser spot on a recording surface of the recording medium ex215 that is an optical disk to write information, and detects reflected light from the recording surface of the recording medium ex215 to read the information. The modulation recording unit ex402 electrically drives a semiconductor laser included in the optical head ex401, and modulates the laser light according to recorded data. The reproduction demodulating unit ex403 amplifies a reproduction signal obtained by electrically detecting the reflected light from the recording surface using a photo detector included in the optical head ex401, and demodulates the reproduction signal by separating a signal component recorded on the recording medium ex215 to reproduce the necessary information. The buffer ex404 temporarily holds the information to be recorded on the recording medium ex215 and the information reproduced from the recording medium ex215. A disc motor ex405 rotates the recording medium ex215. A servo control unit ex406 moves the optical head ex401 to a predetermined information track while controlling the rotation drive of the disc motor ex405 so as to follow the laser spot. The system control unit ex407 controls overall the information reproducing/recording unit ex400. The reading and writing processes can be implemented by the system control unit ex407 using various information held in the buffer ex404 and generating and adding new information as necessary, and by the modulation recording unit ex402, the reproduction demodulating unit ex403, and the servo control unit ex406 that record and reproduce information through the optical head ex401 while being operated in a coordinated manner. The system control unit ex407 includes, for example, a microprocessor, and executes processing by causing a computer to execute a program for read and write.

Although the optical head ex401 irradiates a laser spot in the description, it may perform high-density recording using near field light.

FIG. 44 schematically illustrates the recording medium ex215 that is the optical disk. On the recording surface of the recording medium ex215, guide grooves are spirally formed, and an information track ex230 records, in advance, address information indicating an absolute position on the disk according to change in a shape of the guide grooves. The address information includes information for determining positions of recording blocks ex231 that are a unit for recording data. An apparatus that records and reproduces data reproduces the information track ex230 and reads the address information so as to determine the positions of the recording blocks. Furthermore, the recording medium ex215 includes a data recording area ex233, an inner circumference area ex232, and an outer circumference area ex234. The data recording area ex233 is an area for use in recording the user data. The inner circumference area ex232 and the outer circumference area ex234 that are inside and outside of the data recording area ex233, respectively are for specific use except for recording the user data. The information reproducing/recording unit 400 reads and writes coded audio data, coded video data, or coded data obtained by multiplexing the coded audio data and the coded video data, from and in the data recording area ex233 of the recording medium ex215.

Although an optical disc having a layer, such as a DVD and a BD is described as an example in the description, the optical disk is not limited to such, and may be an optical disk having a multilayer structure and capable of being recorded on a part other than the surface. Furthermore, the optical disc may have a structure for multidimensional recording/reproduction, such as recording information using light of colors with different wavelengths in the same portion of the optical disc and recording information having different layers from various angles.

Furthermore, the car ex210 having the antenna ex205 can receive data from the satellite ex202 and others, and reproduce video on the display device such as the car navigation system ex211 set in the car ex210, in a digital broadcasting system ex200. Here, a configuration of the car navigation system ex211 will be a configuration, for example, including a GPS receiving unit from the configuration illustrated in FIG. 42. The same will be true for the configuration of the computer ex111, the cellular phone ex114, and others. Furthermore, similarly to the television ex300, a terminal such as the cellular phone ex114 may have 3 types of implementation configurations including not only (i) a transmitting and receiving terminal including both a coding apparatus and a decoding apparatus, but also (ii) a transmitting terminal including only a coding apparatus and (iii) a receiving terminal including only a decoding apparatus.

As such, the video coding method or the video decoding method in Embodiments can be used in any of the devices and systems described. Thus, the advantages described in Embodiments can be obtained.

Furthermore, the present invention is not limited to Embodiments, and various modifications or revisions are possible without departing from the scope of the present invention.

(Embodiment 6)

Each of the video coding method and apparatus and the video decoding method and apparatus in Embodiments is typically achieved in the form of an integrated circuit or a LSI circuit. As an example, FIG. 45 illustrates a configuration of an LSI ex500 that is made into one chip. The LSI ex500 includes elements ex501 to ex509 to be described below, and the elements are connected to each other through a bus ex510. The power supply circuit unit ex505 is activated by supplying each of the elements with power when power is on.

For example, when coding is performed, the LSI ex500 receives an AV signal from a microphone ex117, a camera ex113, and others through an AV IO ex509 under control of a control unit ex501 including a CPU ex502, a memory controller ex503, and a stream controller ex504. The received AV signal is temporarily stored in a memory ex511 outside the LSI ex500, such as an SDRAM. Under control of the control unit ex501, the stored data is subdivided into data portions according to the processing amount and speed as necessary. Then, the data portions are transmitted to a signal processing unit ex507. The signal processing unit ex507 codes an audio signal and/or a video signal. Here, the coding of the video signal is the coding described in Embodiments. Furthermore, the signal processing unit ex507 sometimes multiplexes the coded audio data and the coded video data, and a stream I/O ex506 provides the multiplexed data outside. The provided bit stream is transmitted to a base station ex107, or written into the recording medium ex215. When data sets are multiplexed, the data sets should be temporarily stored in the buffer ex508 so that the data sets are synchronized with each other.

For example, when coded data is decoded, the LSI ex500 temporarily stores, in the memory ex511, the coded data obtained from the base station ex107 through the stream I/O ex506 or read from the recording medium ex215 under control of the control unit ex501. Under control of the control unit ex501, the stored data is subdivided into data portions according to the processing amount and speed as necessary. Then, the data portions are transmitted to the signal processing unit ex507. The signal processing unit ex507 decodes audio data and/or video data. Here, the decoding of the video signal is the decoding described in Embodiments. Furthermore, a decoded audio signal and a decoded video signal may be temporarily stored in the buffer ex508 and others so that the signals can be reproduced in synchronization with each other. Each of the output units, such as the cellular phone ex114, the game machine ex115, and the television ex300 provides the decoded output signal through, for example, the memory 511 as necessary.

Although the memory ex511 is an element outside the LSI ex500 in the description, it may be included in the LSI ex500. The buffer ex508 is not limited to one buffer, but may be composed of buffers. Furthermore, the LSI ex500 may be made into one chip or a plurality of chips.

The name used here is LSI, but it may also be called IC, system LSI, super LSI, or ultra LSI depending on the degree of synthesis.

Moreover, ways to achieve the synthesis are not limited to the LSI, and a special circuit or a general purpose processor and so forth can also achieve the synthesis. Field Programmable Gate Array (FPGA) that can be programmed after manufacturing LSI or a reconfigurable processor that allows re-configuration of the connection or configuration of an LSI can be used for the same purpose.

In the future, with advancement in semiconductor technology, a brand-new technology may replace LSI. The functional blocks can be synthesized using such a technology. One such possibility is that the present invention is applied to biotechnology.

Although the coding method, the coding apparatus, the decoding method, and the decoding apparatus are described based on Embodiments according to the present invention, the present invention is not limited to these Embodiments. Without departing from the scope of the present invention, the present invention includes an embodiment with some modifications on Embodiments that are conceived by a person skilled in the art, and an embodiment obtained through combinations of the constituent elements of different Embodiments.

[Industrial Applicability]

The present invention produces effects of suppressing an increase in the amount of computation in the coding process and an increase in the amount of data of the transform coefficients and is applicable to a coding apparatus which codes audio, still images, and video and to a decoding apparatus which decodes data coded by the coding apparatus. For example, the present invention is applicable to various audio-visual devices such as audio devices, cellular phones, digital cameras, BD recorders, and digital televisions.

[Reference Signs List]

100, 100a, 100b, 200, 400, 1000 Coding apparatus
110 First transform unit
120, 520, 520a Dividing unit
130, 130b, 330, 830 Second transform unit
131, 131a, 831 Scale modifying unit
132 Second transform processing unit
140, 140a, 140b, 1020 Quantization unit
141 Modification-absent quantization unit
142 Modification-inclusive quantization unit
150, 150ab, 550 Synthesizing unit
160, 1030 Entropy coding unit
211 First memory
212 First transform coefficient deriving unit
221 Second memory
222 Division and synthesis information generation unit
231 Third memory
232 Second transform coefficient deriving unit
331, 642 Modified coefficient deriving unit
410 Subtractor
420 Transform/quantization unit
430, 720 Inverse quantization/inverse transform unit
440, 730 Adder
450, 740 Memory
460, 750 Prediction unit
500, 500a, 500b, 700 Decoding apparatus
510 Entropy decoding unit
530, 530a, 530b Inverse quantization unit
531 Modification-absent inverse quantization unit
532 Modification-inclusive inverse quantization unit
540, 540b, 640, 940 Second inverse transform unit
541 Second inverse transform processing unit
542, 542a, 942 Scale inverse modifying unit
560 First inverse transform unit
833 Post scale modifying unit

943 Post scale inverse modifying unit
1010 Transform unit
ex100 Content providing system
ex101 Internet
ex102 Internet service provider
ex103 Streaming server
ex104 Telephone network
ex106, ex107, ex108, ex109, ex110 Base station
ex111 Computer
ex112 PDA
ex113, ex116 Camera
ex114 Cellular phone equipped with camera (cellular phone)
ex115 Game machine
ex117 Microphone
ex200 Digital broadcasting system
ex201 Broadcast station
ex202 Broadcast satellite (Satellite)
ex203 Cable
ex204, ex205, ex601 Antenna
ex210 Car
ex211 Car navigation system
ex212 Reproduction apparatus
ex213, ex219 Monitor
ex214, ex215, ex216, ex607 Recoding medium
ex217 Set top box (STB)
ex218 Reader/recorder
ex220 Remote controller
ex230 Information track
ex231 Recoding blocks
ex232 Inner circumference area
ex233 Data recording area
ex234 Outer circumference area
ex300 Television
ex301 Tuner
ex302 Modulation/demodulation unit
ex303 Multiplexing/demultiplexing unit
ex304 Audio signal processing unit
ex305 Video signal processing unit
ex306, ex507 Signal processing unit
ex307 Speaker
ex308, ex602 Display unit
ex309 Output unit
ex310, ex501 Control unit
ex311, ex505, ex710 Power supply circuit unit
ex312 Operation input unit
ex313 Bridge
ex314, ex606 Slot unit
ex315 Driver
ex316 Modem
ex317 Interface unit
ex318, ex319, ex320, ex321, ex404, ex508 Buffer
ex400 Information reproducing/recording unit
ex401 Optical head
ex402 Modulation recording unit
ex403 Reproduction demodulating unit
ex405 Disk motor
ex406 Servo control unit
ex407 System control unit

ex500 LSI
ex502 CPU
ex503 Memory controller
ex504 Stream controller
ex506 Stream I/O
ex509 AV I/O
ex510 Bus
ex511 Memory
ex603 Camera unit
ex604 Operation keys
ex605 Audio input unit
ex608 Audio output unit
ex701 Transmitting and receiving circuit unit
ex702 LCD control unit
ex703 Camera interface unit (camera I/F unit)
ex704 Operation input control unit
ex705 Audio processing unit
ex706 Modem circuit unit
ex707 Recording/reproducing unit
ex708 Multiplexing/demultiplexing unit
ex709 Image decoding unit
ex711 Main control unit
ex712 Image coding unit
ex713 Synchronous bus

**Claims**

1. A coding method comprising:

   transforming an input signal using a first transform coefficient to generate a first transformed output signal;
   transforming, using a second transform coefficient, a first partial signal that is a part of the first transformed output signal, to generate a second transformed output signal, the second transform coefficient being determined based on a statistical property of a set including the first partial signal;
   quantizing the second transformed output signal and a second partial signal that is a part of the first transformed output signal other than the first partial signal, to generate a quantized coefficient; and
   entropy coding the quantized coefficient to generate a coded signal,
   wherein said transforming of a first partial signal includes:

      modifying the first partial signal or the second transform coefficient using a predetermined scaling parameter to generate a modified first partial signal or a modified second transform coefficient; and
      generating the second transformed output signal by transforming the modified first partial signal using the second transform coefficient or transforming the first partial signal using the modified second transform coefficient.

2. The coding method according to Claim 1,
   wherein, in said quantizing, the quantized coefficient is generated by (i) quantizing the second transformed output signal without using the scaling parameter and (ii) quantizing the second partial signal using the scaling parameter.

3. The coding method according to Claim 1,
   wherein, in said modifying, the second partial signal is further modified using the scaling parameter to generate a modified second partial signal, and
   in said quantizing, the second transformed output signal and the modified second partial signal are quantized.

4. The coding method according to any one of Claims 1 to 3,
   wherein, in said modifying, a norm calculated from the first transform coefficient is used as the scaling parameter.

5. The coding method according to Claim 4,

wherein, in said modifying, the modified first partial signal is generated by multiplying the first partial signal by a reciprocal of the norm, and

in said generating of the second transformed output signal, the second transformed output signal is generated by transforming the modified first partial signal using the second transform coefficient.

6.  The coding method according to Claim 4,
    wherein, in said modifying, the modified second transform coefficient is generated by multiplying the second transform coefficient by a reciprocal of the norm, and
    in said generating of the second transformed output signal, the second transformed output signal is generated by transforming the first partial signal using the modified second transform coefficient.

7.  The coding method according to any one of Claims 1 to 3,
    wherein, in said modifying, a quantization matrix is used as the scaling parameter.

8.  The coding method according to Claim 7,
    wherein, in said modifying, the modified first partial signal is generated by multiplying the first partial signal by a reciprocal of the quantization matrix,
    in said generating of the second transformed output signal, the modified first partial signal is transformed using the second transform coefficient to generate a transformed first partial signal, and
    said transforming of a first partial signal further includes multiplying the transformed first partial signal by a modification coefficient calculated from the quantization matrix, to generate the second transformed output signal.

9.  The coding method according to Claim 7,
    wherein, in said modifying, the modified second transform coefficient is generated by multiplying the second transform coefficient by a reciprocal of the quantization matrix and a modification coefficient calculated from the quantization matrix, and
    in said generating of the second transformed output signal, the second transformed output signal is generated by transforming the first partial signal using the modified second transform coefficient.

10. The coding method according to any one of Claims 1 to 9,
    wherein the second transform coefficient is a coefficient determined in the Karhunen Loeve transform (KLT).

11. A decoding method comprising:

    entropy decoding a coded signal to generate a decoded quantized coefficient;
    inverse quantizing the decoded quantized coefficient to generate a decoded transformed output signal;
    inverse transforming, using a second inverse transform coefficient, a second decoded transformed output signal that is a part of the decoded transformed output signal, to generate a first decoded partial signal; and
    inverse transforming, using a first inverse transform coefficient, a first decoded transformed output signal that includes the first decoded partial signal and a second decoded partial signal corresponding to a part of the decoded transformed output signal other than the second decoded transformed output signal, to generate a decoded signal,
    wherein, in said inverse transforming of a second decoded transformed output signal, the first decoded partial signal is generated by (i) inverse transforming the second decoded transformed output signal and modifying an inverse-transformed second decoded transformed output signal using a predetermined scaling parameter or (ii) modifying the second inverse transform coefficient using the predetermined scaling parameter and inverse transforming the second decoded transformed output signal using a modified second inverse transform coefficient.

12. The decoding method according to Claim 11,
    wherein, in said inverse quantizing, the second decoded transformed output signal is generated by inverse quantizing, without using the scaling parameter, a first decoded quantized coefficient that is a part of the decoded quantized coefficient, and the second decoded partial signal is generated by inverse quantizing, using the scaling parameter, a second decoded quantized coefficient that is a part of the decoded quantized coefficient other than the first decoded quantized coefficient.

13. The decoding method according to Claim 11, further comprising
    generating the second partial signal by modifying, using the scaling parameter, the part of the decoded transformed output signal other than the second decoded transformed output signal.

14. The decoding method according to any one of Claims 11 to 13,
wherein, in said inverse transforming of a second decoded transformed output signal, a norm calculated from the first inverse transform coefficient is used as the scaling parameter.

15. The decoding method according to Claim 14,
wherein, in said inverse transforming of a second decoded transformed output signal, the first decoded partial signal is generated by (i) inverse transforming the second decoded transformed output signal using the second inverse transform coefficient to generate the inverse-transformed second decoded transformed output signal and (ii) multiplying the inverse-transformed second decoded transformed output signal by the norm.

16. The decoding method according to Claim 14,
wherein, in said inverse transforming of a second decoded transformed output signal, the first decoded partial signal is generated by (i) multiplying the second inverse transform coefficient by the norm to generate the modified second inverse transform coefficient and (ii) inverse transforming the second decoded transformed output signal using the modified second inverse transform coefficient.

17. The decoding method according to any one of Claims 11 to 13,
wherein, in said inverse transforming of a second decoded transformed output signal, a quantization matrix is used as the scaling parameter.

18. The decoding method according to Claim 17,
wherein, in said inverse transforming of a second decoded transformed output signal, the first decoded partial signal is generated by (i) multiplying the second decoded transformed output signal by a reciprocal of a modification coefficient calculated from the quantization matrix, to generate a post-inverse-modified second decoded transformed output signal, (ii) inverse transforming the post-inverse-modified second decoded transformed output signal using the second inverse transform coefficient to generate the inverse-transformed second decoded transformed output signal, and (iii) multiplying the inverse-transformed second decoded transformed output signal by the quantization matrix.

19. The decoding method according to Claim 17,
wherein, in said inverse transforming of a second decoded transformed output signal, the first decoded partial signal is generated by (i) multiplying the second inverse transform coefficient by the quantization matrix and a reciprocal of a modification coefficient calculated from the quantization matrix, to generate the modified second inverse transform coefficient, and (ii) inverse transforming the second decoded transformed output signal using the modified second inverse transform coefficient.

20. The decoding method according to any one of Claims 11 to 19,
wherein the second inverse transform coefficient is a coefficient determined by the KLT.

21. A coding apparatus comprising:

a first transform unit configured to transform an input signal using a first transform coefficient to generate a first transformed output signal;
a second transform unit configured to transform, using a second transform coefficient, a first partial signal that is a part of the first transformed output signal, to generate a second transformed output signal, the second transform coefficient being determined based on a statistical property of a set including the first partial signal;
a quantization unit configured to quantize the second transformed output signal and a second partial signal that is a part of the first transformed output signal other than the first partial signal, to generate a quantized coefficient; and
an entropy coding unit configured to entropy code the quantized coefficient to generate a coded signal,
wherein said second transform unit is configured to: modify the first partial signal or the second transform coefficient using a predetermined scaling parameter to generate a modified first partial signal or a modified second transform coefficient; and generate the second transformed output signal by transforming the modified first partial signal using the second transform coefficient or transforming the first partial signal using the modified second transform coefficient.

**22.** A decoding apparatus comprising:

an entropy decoding unit configured to entropy decode a coded signal to generate a decoded quantized coefficient;

an inverse quantization unit configured to inverse quantize the decoded quantized coefficient to generate a decoded transformed output signal;

a second inverse transform unit configured to inverse transform, using a second inverse transform coefficient, a second decoded transformed output signal that is a part of the decoded transformed output signal, to generate a first decoded partial signal; and

a first inverse transform unit configured to inverse transform, using a first inverse transform coefficient, a first decoded transformed output signal that includes the first decoded partial signal and a second decoded partial signal corresponding to a part of the decoded transformed output signal other than the second decoded transformed output signal, to generate a decoded signal,

wherein said second inverse transform unit is configured to generate the first decoded partial signal by (i) inverse transforming the second decoded transformed output signal and modifying an inverse-transformed second decoded transformed output signal using a predetermined scaling parameter or (ii) modifying the second inverse transform coefficient using the predetermined scaling parameter and inverse transforming the second decoded transformed output signal using a modified second inverse transform coefficient.

**23.** An integrated circuit comprising:

a first transform unit configured to transform an input signal using a first transform coefficient to generate a first transformed output signal;

a second transform unit configured to transform, using a second transform coefficient, a first partial signal that is a part of the first transformed output signal, to generate a second transformed output signal, the second transform coefficient being determined based on a statistical property of a set including the first partial signal;

a quantization unit configured to quantize the second transformed output signal and a second partial signal that is a part of the first transformed output signal other than the first partial signal, to generate a quantized coefficient; and

wherein said second transform unit is configured to: modify the first partial signal or the second transform coefficient using a predetermined scaling parameter to generate a modified first partial signal or a modified second transform coefficient; and generate the second transformed output signal by transforming the modified first partial signal using the second transform coefficient or transforming the first partial signal using the modified second transform coefficient.

**24.** An integrated circuit comprising:

an entropy decoding unit configured to entropy decode a coded signal to generate a decoded quantized coefficient;

an inverse quantization unit configured to inverse quantize the decoded quantized coefficient to generate a decoded transformed output signal;

a second inverse transform unit configured to inverse transform, using a second inverse transform coefficient, a second decoded transformed output signal that is a part of the decoded transformed output signal, to generate a first decoded partial signal; and

a first inverse transform unit configured to inverse transform, using a first inverse transform coefficient, a first decoded transformed output signal that includes the first decoded partial signal and a second decoded partial signal corresponding to a part of the decoded transformed output signal other than the second decoded transformed output signal, to generate a decoded signal,

wherein said second inverse transform unit is configured to generate the first decoded partial signal by (i) inverse transforming the second decoded transformed output signal and modifying an inverse-transformed second decoded transformed output signal using a predetermined scaling parameter or (ii) modifying the second inverse transform coefficient using the predetermined scaling parameter and inverse transforming the second decoded transformed output signal using a modified second inverse transform coefficient.

**25.** A program for causing a computer to execute a coding method which includes:

transforming an input signal using a first transform coefficient to generate a first transformed output signal;

transforming, using a second transform coefficient, a first partial signal that is a part of the first transformed output signal, to generate a second transformed output signal, the second transform coefficient being determined based on a statistical property of a set including the first partial signal;

quantizing the second transformed output signal and a second partial signal that is a part of the first transformed output signal other than the first partial signal, to generate a quantized coefficient; and

entropy coding the quantized coefficient to generate a coded signal,

wherein said transforming of a first partial signal includes:

modifying the first partial signal or the second transform coefficient using a predetermined scaling parameter to generate a modified first partial signal or a modified second transform coefficient; and

generating the second transformed output signal by transforming the modified first partial signal using the second transform coefficient or transforming the first partial signal using the modified second transform coefficient.

**26.** A program for causing a computer to execute a decoding method which includes:

entropy decoding a coded signal to generate a decoded quantized coefficient;

inverse quantizing the decoded quantized coefficient to generate a decoded transformed output signal;

inverse transforming, using a second inverse transform coefficient, a second decoded transformed output signal that is a part of the decoded transformed output signal, to generate a first decoded partial signal; and

inverse transforming, using a first inverse transform coefficient, a first decoded transformed output signal that includes the first decoded partial signal and a second decoded partial signal corresponding to a part of the decoded transformed output signal other than the second decoded transformed output signal, to generate a decoded signal,

wherein, in said inverse transforming of a second decoded transformed output signal, the first decoded partial signal is generated by (i) inverse transforming the second decoded transformed output signal and modifying an inverse-transformed second decoded transformed output signal using a predetermined scaling parameter or (ii) modifying the second inverse transform coefficient using the predetermined scaling parameter and inverse transforming the second decoded transformed output signal using a modified second inverse transform coefficient.

EP 2 464 017 A1

## FIG. 1

1000

Transform target input signal → [1010 Transform unit] → Transformed output signal → [1020 Quantization unit] → Quantized coefficients → [1030 Entropy coding unit] → Coded signal

FIG. 2

| The number of dimensions of input signal | DCT | KLT | Ratio |
|---|---|---|---|
| 4 | 8 | 16 | 2.0 |
| 8 | 24 | 64 | 2.6 |
| 16 | 64 | 256 | 4.0 |
| M | $M*\log_2(M)$ | $M*M$ | — |

FIG. 3

$\underline{100}$

Scale from Qmatrix
Norm from
first transform
first transform coefficients $A_1{}^n$

Transform
target input
signal $x^n$

First
transform
unit  110

Dividing
unit  120

First transformed
output signal $y_1{}^n$

First partial
signal $y_{1L}{}^m$

Division and
synthesis
information

Second
transform
coefficients $A_2{}^m$

Second partial
signal $y_{1H}{}^{n-m}$

Second
transform
unit  130

Second
transformed
output
signal $y_2{}^m$

Modification-inclusive
quantization unit  142

Modification-absent
quantization unit  141

Quantization unit
140

First
quantized
coefficients $C_1{}^m$

Second quantized
coefficients $C_2{}^{n-m}$

Synthesizing
unit  150

Entropy
coding unit  160

Coded
signal

Quantized
coefficients $C^n$

EP 2 464 017 A1

# FIG. 4

Norm N
from first transform

130

Second transform unit

Second transformed
output

First partial
signal $y_{1L}{}^m$

Scale
modifying
unit

Second
transform
processing
unit

signal $y_2{}^m$

131        132

Second transform coefficients $A_2{}^m$

# FIG. 5

First partial signal $y_{1L}{}^m$

Norm N(i) from first transform

Modified first partial signal $y'_{1L}{}^m$

132

Second transformed output signal $y_2{}^m$

| $y_{1L}(1)$ |
| $y_{1L}(2)$ |
| $y_{1L}(3)$ |
| $y_{1L}(4)$ |

Scale modifying unit

$$y_{1L}(i)/N(i) = y'_{1L}(i)$$

131

| $y'_{1L}(1)$ |
| $y'_{1L}(2)$ |
| $y'_{1L}(3)$ |
| $y'_{1L}(4)$ |

Second transform processing unit

$$y'_{1L} \times A_2 = y_2$$

| $y_2(1)$ |
| $y_2(2)$ |
| $y_2(3)$ |
| $y_2(4)$ |

Second transform coefficients $A_2{}^m$

EP 2 464 017 A1

# FIG. 6

```
        ┌─────────┐
        │  Start  │
        └────┬────┘
             ▼
  ┌────────────────────┐
  │  First transform   │────S110
  └─────────┬──────────┘
            ▼
  ┌────────────────────┐
  │      Division      │────S120
  └─────────┬──────────┘
            ▼
  ┌────────────────────┐
  │ Modification-inclusive │──S130
  │  second transform  │
  └─────────┬──────────┘
            ▼
  ┌────────────────────┐
  │    Quantization    │────S140
  └─────────┬──────────┘
            ▼
  ┌────────────────────┐
  │     Synthesis      │────S150
  └─────────┬──────────┘
            ▼
  ┌────────────────────┐
  │   Entropy coding   │────S160
  └─────────┬──────────┘
             ▼
        ┌─────────┐
        │   End   │
        └─────────┘
```

# FIG. 7

S130

```
        ┌─────────┐
        │  Start  │
        └────┬────┘
             ▼
  ┌────────────────────┐
  │  Norm modification │────S131
  └─────────┬──────────┘
            ▼
  ┌────────────────────┐
  │  Second transform  │────S132
  └─────────┬──────────┘
             ▼
        ┌─────────┐
        │   End   │
        └─────────┘
```

# FIG. 8

_200_

Scale from Qmatrix

Norm from first transform

Transform target input signal $x^n$ → **First transform unit** → First transformed output signal $y_1^n$ → **Dividing unit** _120_

_110_

Second partial signal $y_{1H}^{n-m}$ → **Modification-inclusive quantization unit** _142_ → Second quantized coefficients $C_2^{n-m}$ → **Synthesizing unit** _150_ → **Entropy coding unit** _160_ → Coded signal

First partial signal $y_{1L}^m$ → **Scale modifying unit** _131_ → **Second transform processing unit** _132_ → Second transformed output signal $y_2^m$ → **Modification-absent quantization unit** _141_

**Second transform unit** _130_

**Quantization unit** _140_

Quantized coefficients $C^n$

First quantized coefficients $C_1^m$

**First memory** _211_

**First transform coefficient deriving unit** _212_

First transform coefficients $A_1^n$

**Second memory** _221_

**Division and synthesis information generation unit** _222_

**Third memory** _231_

**Second transform coefficient deriving unit** _232_

Second transform coefficients $A_2^m$

Division and synthesis information

EP 2 464 017 A1

# FIG. 9

Norm N(i) from
first transform

330

Second transform unit

First partial
signal $y_{1L}{}^m$

Second transformed
output signal $y_2{}^m$

Second transform
processing unit

132

Modified
coefficient
deriving unit

331

Second transform coefficients $A_2{}^m$

# FIG. 10

First partial
signal $y_{1L}{}^m$

Second transformed
output signal $y_2{}^m$

| $y_{1L}(1)$ |
|---|
| $y_{1L}(2)$ |
| $y_{1L}(3)$ |
| $y_{1L}(4)$ |

132

Second transform
processing unit
$y_{1L} \times A'_2 = y_2$

| $y_2(1)$ |
|---|
| $y_2(2)$ |
| $y_2(3)$ |
| $y_2(4)$ |

| $a'_2(1,1)$ | $a'_2(1,2)$ | $a'_2(1,3)$ | $a'_2(1,4)$ |
|---|---|---|---|
| $a'_2(2,1)$ | $a'_2(2,2)$ | $a'_2(2,3)$ | $a'_2(2,4)$ |
| $a'_2(3,1)$ | $a'_2(3,2)$ | $a'_2(3,3)$ | $a'_2(3,4)$ |
| $a'_2(4,1)$ | $a'_2(4,2)$ | $a'_2(4,3)$ | $a'_2(4,4)$ |

Modified second
transform
coefficients $A'_2{}^m$

Norm N(i)
from first
transform
N(i)

Modified
coefficient
deriving unit
$a'_2(i,j) = a_2(i,j)/N(i)$

331

| $a_2(1,1)$ | $a_2(1,2)$ | $a_2(1,3)$ | $a_2(1,4)$ |
|---|---|---|---|
| $a_2(2,1)$ | $a_2(2,2)$ | $a_2(2,3)$ | $a_2(2,4)$ |
| $a_2(3,1)$ | $a_2(3,2)$ | $a_2(3,3)$ | $a_2(3,4)$ |
| $a_2(4,1)$ | $a_2(4,2)$ | $a_2(4,3)$ | $a_2(4,4)$ |

Second
transform
coefficients $A_2{}^m$

# FIG. 11

S130

Start

Derive modified coefficients — S231

Second transform — S132

End

FIG. 12

## FIG. 13

```
        ┌─────────┐
        │  Start  │
        └────┬────┘
             ↓
   ┌───────────────────┐  ─S300
   │ Generate prediction│
   │ signal            │
   └────────┬──────────┘
            ↓
   ┌───────────────────┐  ─S305
   │ Generate prediction│
   │ error signal      │
   └────────┬──────────┘
            ↓
   ┌───────────────────┐  ─S110
   │  First transform  │
   └────────┬──────────┘
            ↓
   ┌───────────────────┐  ─S120
   │     Division      │
   └────────┬──────────┘
            ↓
   ┌───────────────────┐  ─S130
   │Modification-inclusive│
   │ second transform  │
   └────────┬──────────┘
            ↓
   ┌───────────────────┐  ─S140
   │   Quantization    │
   └────────┬──────────┘
            ↓
   ┌───────────────────┐  ─S150
   │     Synthesis     │
   └────────┬──────────┘
            ↓
   ┌───────────────────┐  ─S160
   │   Entropy coding  │
   └────────┬──────────┘
            ↓
   ┌───────────────────┐  ─S370
   │ Inverse quantization│
   └────────┬──────────┘
            ↓
   ┌───────────────────┐  ─S380
   │  Inverse transform│
   └────────┬──────────┘
            ↓
   ┌───────────────────┐  ─S390
   │ Storage onto memory│
   └────────┬──────────┘
            ↓
        ┌─────────┐
        │   End   │
        └─────────┘
```

FIG. 14

$\underline{100a}$

Norm from first transform

First transform coefficients $A_1^n$

Transform target input signal $x_n$

Second partial signal $y_{1H}^{n-m}$

Modified second partial signal $y'_{1H}^{n-m}$

110

120

131a

150a

140a

160

First transform unit

Dividing unit

Scale modifying unit

Synthesizing unit

Quantization unit

Entropy coding unit

Coded signal

First transformed output signal $y_1^n$

First partial signal $y_{1L}^m$

Second transform unit

Second transformed output signal $y_2^m$

Transformed output signal $y^n$

Quantized coefficients $C^n$

130

Division and synthesis information

Second transform coefficients $A_2^m$

EP 2 464 017 A1

FIG. 15

FIG. 16

EP 2 464 017 A1

100b

Transform target input signal → First transform unit (110) → First transformed output signal → Second transform unit (130b) → Transformed output signal (including second transformed output signal) → Quantization unit (140b) → Quantized coefficients → Entropy coding unit (160) → Coded signal

FIG. 17

Start

First transform — S110

Second transform — S130b

Quantization — S150b

Entropy coding — S160

End

## FIG. 18

First inverse transform coefficients $A_1^{-1n}$

Scale from Qmatrix
Norm from first transform

Coded signal → Entropy decoding unit (510) → Dividing unit (520)

Decoded quantized coefficients $\hat{C}^n$

Second decoded quantized coefficients $\hat{C}_2^{n-m}$

First decoded quantized coefficients $\hat{C}_1^m$

Inverse quantization unit (530)

Modification-inclusive inverse quantization unit (532)

Modification-absent inverse quantization unit (531)

Second inverse transform unit (540)

Second decoded transformed output signal $\hat{y}_2^m$

Second decoded partial signal $\hat{y}_{1H}^{n-m}$

First decoded partial signal $\hat{y}_{1L}^m$

Synthesizing unit (550)

First decoded transformed output signal $\hat{y}_1^n$

First inverse transform unit (560) → Decoded signal $\hat{x}^n$

Division and synthesis information

Second inverse transform coefficients $A_2^{-1m}$

500

FIG. 19

Norm N from
first transform

Second decoded
transformed
output
signal $\hat{y}_2^m$

Second
inverse
transform
processing
unit

Scale inverse
modifying unit

First decoded
partial
signal $\hat{y}_{1L}^m$

Second inverse
transform unit

541

542

540

Second transform
coefficients $A_2^{-1m}$

FIG. 20

EP 2 464 017 A1

Second decoded transformed output signal $\hat{y}_2{}^m$

$\hat{y}_2(1)$
$\hat{y}_2(2)$
$\hat{y}_2(3)$
$\hat{y}_2(4)$

Second inverse transform processing unit
$\hat{y}_2 \times A_2{}^{-1} = \hat{y}'_{1L}$
541

Second inverse transform coefficients $A_2^{-1}{}^m$

Second decoded transformed output signal after inverse transform $\hat{y}'_{1L}{}^m$

$\hat{y}'_{1L}(1)$
$\hat{y}'_{1L}(2)$
$\hat{y}'_{1L}(3)$
$\hat{y}'_{1L}(4)$

Norm N(i) from first transform

Scale inverse modifying unit
$\hat{y}'_{1L}(i) \times N(i) = \hat{y}_{1L}(i)$
542

First decoded partial signal $\hat{y}_{1L}{}^m$

$\hat{y}_{1L}(1)$
$\hat{y}_{1L}(2)$
$\hat{y}_{1L}(3)$
$\hat{y}_{1L}(4)$

# FIG. 21

```
        ┌─────────┐
        │  Start  │
        └─────────┘
             │
             ▼
    ┌──────────────────┐
    │ Entropy decoding │───S410
    └──────────────────┘
             │
             ▼
    ┌──────────────────┐
    │     Division     │───S420
    └──────────────────┘
             │
             ▼
    ┌──────────────────┐
    │ Inverse quantization │───S430
    └──────────────────┘
             │
             ▼
    ┌──────────────────┐
    │ Modification-inclusive │───S440
    │ second inverse   │
    │ transform        │
    └──────────────────┘
             │
             ▼
    ┌──────────────────┐
    │    Synthesis     │───S450
    └──────────────────┘
             │
             ▼
    ┌──────────────────┐
    │  First inverse   │───S460
    │   transform      │
    └──────────────────┘
             │
             ▼
        ┌─────────┐
        │   End   │
        └─────────┘
```

# FIG. 22

S440

```
        ┌─────────┐
        │  Start  │
        └─────────┘
             │
             ▼
    ┌──────────────────┐
    │  Second inverse  │───S441
    │   transform      │
    └──────────────────┘
             │
             ▼
    ┌──────────────────┐
    │ Norm modification │───S442
    └──────────────────┘
             │
             ▼
        ┌─────────┐
        │   End   │
        └─────────┘
```

FIG. 23

Norm N(i) from
first transform

640

Second decoded
transformed
output signal $\hat{y}_2{}^m$

Second inverse
transform unit

First decoded
transformed
partial signal $\hat{y}_{1L}{}^m$

Second inverse
transform
processing
unit

541

Modified
coefficient
deriving
unit

642

Second inverse transform
coefficients $A_2^{-1}{}^m$

## FIG. 24

Second decoded transformed output signal $\hat{y}_2 m$

| $\hat{y}_2(1)$ |
| $\hat{y}_2(2)$ |
| $\hat{y}_2(3)$ |
| $\hat{y}_2(4)$ |

541

Second inverse transform processing unit $\hat{y}_2 \times A_2^{-1} = \hat{y}_{1L}$

First decoded partial signal $\hat{y}_{1L} m$

| $\hat{y}_{1L}(1)$ |
| $\hat{y}_{1L}(2)$ |
| $\hat{y}_{1L}(3)$ |
| $\hat{y}_{1L}(4)$ |

| $a'_2(1,1)$ | $a'_2(1,2)$ | $a'_2(1,3)$ | $a'_2(1,4)$ |
|---|---|---|---|
| $a'_2(2,1)$ | $a'_2(2,2)$ | $a'_2(2,3)$ | $a'_2(2,4)$ |
| $a'_2(3,1)$ | $a'_2(3,2)$ | $a'_2(3,3)$ | $a'_2(3,4)$ |
| $a'_2(4,1)$ | $a'_2(4,2)$ | $a'_2(4,3)$ | $a'_2(4,4)$ |

Modified second inverse transform coefficients $A'_2^{-1} m$

Norm N(i) from first transform

Modified coefficient deriving unit $a'_2(i,j) = a_2(i,j) \times N(i)$

642

| $a_2(1,1)$ | $a_2(1,2)$ | $a_2(1,3)$ | $a_2(1,4)$ |
|---|---|---|---|
| $a_2(2,1)$ | $a_2(2,2)$ | $a_2(2,3)$ | $a_2(2,4)$ |
| $a_2(3,1)$ | $a_2(3,2)$ | $a_2(3,3)$ | $a_2(3,4)$ |
| $a_2(4,1)$ | $a_2(4,2)$ | $a_2(4,3)$ | $a_2(4,4)$ |

Second inverse transform coefficients $A_2^{-1} m$

## FIG. 25

S440

Start

Derive modified coefficients — S541

Second inverse transform — S542

End

FIG. 26

700

Coded signal → **Entropy decoding unit** (510) → Decoded quantized coefficients → **Inverse quantization/inverse transform unit** (720) → Decoded transformed input signal → (+) 730 → Decoded signal ○

Prediction signal

**Prediction unit** (750) ← **Memory** (740)

EP 2 464 017 A1

FIG. 27

```
                    ┌─────────────┐
                    │    Start    │
                    └──────┬──────┘
                           ▼
              ┌────────────────────┐
              │ Generate prediction│─── S600
              │ signal             │
              └──────────┬─────────┘
                         ▼
              ┌────────────────────┐
              │  Entropy decoding   │─── S410
              └──────────┬─────────┘
                         ▼
              ┌────────────────────┐
              │      Division       │─── S420
              └──────────┬─────────┘
                         ▼
              ┌────────────────────┐
              │ Inverse quantization│─── S430
              └──────────┬─────────┘
                         ▼
              ┌────────────────────┐
              │Modification-inclusive│─── S440
              │second inverse       │
              │transform            │
              └──────────┬─────────┘
                         ▼
              ┌────────────────────┐
              │      Synthesis      │─── S450
              └──────────┬─────────┘
                         ▼
              ┌────────────────────┐
              │   First inverse     │─── S460
              │   transform         │
              └──────────┬─────────┘
                         ▼
              ┌────────────────────┐
              │      Addition       │─── S670
              └──────────┬─────────┘
                         ▼
              ┌────────────────────┐
              │ Storage onto memory │─── S680
              └──────────┬─────────┘
                         ▼
                    ┌─────────────┐
                    │     End     │
                    └─────────────┘
```

FIG. 28

First inverse transform coefficients

Scale from Qmatrix
Norm from first transform

Coded signal → 510 Entropy decoding unit → 530a Inverse quantization unit → 520a Dividing unit → 542a Scale inverse modifying unit → 540 Second inverse transform unit → 550 Synthesizing unit → 560 First inverse transform unit → Decoded signal

500a

Decoded quantized coefficients $\hat{C}^n$

Decoded transformed output signal $\hat{y}^n$

Second decoded transformed output signal $\hat{y}_2^m$

Second decoded partial signal $\hat{y}_{1H}^{n-m}$

First decoded partial signal $\hat{y}_{1L}^m$

First decoded transformed output signal $\hat{y}_1$

Division and synthesis information

Second inverse transform coefficients

EP 2 464 017 A1

EP 2 464 017 A1

FIG. 29

```
        ┌──────────┐
        │  Start   │
        └────┬─────┘
             ▼
   ┌────────────────────┐──── S410
   │  Entropy coding    │
   └─────────┬──────────┘
             ▼
   ┌────────────────────┐──── S420a
   │ Inverse quantization│
   └─────────┬──────────┘
             ▼
   ┌────────────────────┐──── S430a
   │     Division       │
   └─────────┬──────────┘
             ▼
   ┌────────────────────┐──── S440a
   │  Scale inverse     │
   │  modification and  │
   │  second inverse    │
   │  transform         │
   └─────────┬──────────┘
             ▼
   ┌────────────────────┐──── S450
   │    Synthesis       │
   └─────────┬──────────┘
             ▼
   ┌────────────────────┐──── S460
   │  First inverse     │
   │  transform         │
   └─────────┬──────────┘
             ▼
        ┌──────────┐
        │   End    │
        └──────────┘
```

FIG. 30

EP 2 464 017 A1

500b

Coded signal → Entropy decoding unit (510) → Decoded quantized coefficients → Inverse quantization unit (530b) → Decoded transformed output signal (including second decoded transformed output signal) → Second inverse transform unit (540b) → First decoded transformed output signal → First inverse transform unit (560) → Decoded signal

# FIG. 31

Start

Entropy decoding —S410

Inverse quantization —S420b

Second inverse transform —S440b

First inverse transform —S460

End

# FIG. 32

Scale from Qmatrix

830

First partial signal $y_{1L}{}^m$

Scale modifying unit

Second transform processing unit

Post scale modifying unit

Second transform unit

Second transform output signal $y_2{}^m$

831    132       833

second transform coefficients $A_2{}^m$

FIG. 33

Scale mf on Qmatrix

First partial signal $y_{1L}^{m}$

| $y_{1L}(1)$ |
| $y_{1L}(2)$ |
| $y_{1L}(3)$ |
| $y_{1L}(4)$ |

Scale modifying unit
$y_{1L}(i) \times mf(i) = y'_{1L}(i)$

831

Modified first partial signal $y'_{1L}^{m}$

| $y'_{1L}(1)$ |
| $y'_{1L}(2)$ |
| $y'_{1L}(3)$ |
| $y'_{1L}(4)$ |

132

Second transform processing unit
$y'_{1L} \times A_2 = y'_2$

Second transform coefficients $A_2^{m}$

Transformed first partial signal $y'_2^{m}$

| $y'_2(1)$ |
| $y'_2(2)$ |
| $y'_2(3)$ |
| $y'_2(4)$ |

833

Post scale modifying unit
$y'_2(i) \times mf\_2(j) = y_2(i)$

Second transform output signal $y_2^{m}$

| $y_2(1)$ |
| $y_2(2)$ |
| $y_2(3)$ |
| $y_2(4)$ |

## FIG. 34

S130

$$\downarrow$$

```
        Start
          │
          ▼
  ┌──────────────────┐ ── S731
  │ Qmat modification│
  └──────────────────┘
          │
          ▼
  ┌──────────────────┐ ── S732
  │ Second transform │
  └──────────────────┘
          │
          ▼
  ┌───────────────────────┐ ── S733
  │ Qmat post modification│
  └───────────────────────┘
          │
          ▼
        End
```

## FIG. 35

Scale from
Qmatrix

940

Second
decoded
transformed
output
signal $\hat{y}_2{}^m$

Second
inverse
transform
unit

First
decoded
partial
signal $\hat{y}_{1L}{}^m$

Post scale
inverse
modifying
unit

Second
inverse
transform
processing
unit

Scale inverse
modifying unit

943    132    942

Second inverse transform
coefficients $A_2^{-1}{}^m$

## FIG. 36

Scale mf on
Qmatrix

Second decoded
transformed
output
signal $\hat{y}_2{}^m$

| $\hat{y}_2(1)$ |
| $\hat{y}_2(2)$ |
| $\hat{y}_2(3)$ |
| $\hat{y}_2(4)$ |

943

Post scale
inverse
modifying unit

$\hat{y}_2(i)/mf\_2(j)$
$= \hat{y}'_2(i)$

Second decoded transform
output signal after
inverse
modification $\hat{y}'_2{}^m$

| $\hat{y}'_2(1)$ |
| $\hat{y}'_2(2)$ |
| $\hat{y}'_2(3)$ |
| $\hat{y}'_2(4)$ |

541

Second inverse
transform
processing
unit

$\hat{y}'_2 \times A_2{}^{-1}$
$= \hat{y}'_{1L}$

Second decoded
transformed output
signal after inverse
transform $\hat{y}'_{1L}{}^m$

| $\hat{y}'_{1L}(1)$ |
| $\hat{y}'_{1L}(2)$ |
| $\hat{y}'_{1L}(3)$ |
| $\hat{y}'_{1L}(4)$ |

Scale inverse
modifying unit

$\hat{y}'_{1L}(i)/mf(i)$
$= \hat{y}_{1L}(i)$

942

First decoded
partial signal $\hat{y}_{1L}{}^m$

| $\hat{y}_{1L}(1)$ |
| $\hat{y}_{1L}(2)$ |
| $\hat{y}_{1L}(3)$ |
| $\hat{y}_{1L}(4)$ |

Second inverse
transform coefficients $A_2^{-1m}$

FIG. 37

S440

Start

Qmat post
inverse modification — S841

Second inverse
transform — S842

Qmat inverse
modification — S843

End

# FIG. 38

Streaming server ex103

LSI ex500

Camera ex116

Computer ex111

ex106

Internet ex101

ex107 Game machine ex115

Telephone network ex104

ex108

PDA ex112

ex109

Camera ex113

Internet service provider ex102

ex110

ex100

Cellular phone ex114

EP 2 464 017 A1

FIG. 39

ex601

ex608

ex602

ex603

ex604

ex606

ex607

SD

ex605

ex114

FIG. 40

ex114

EP 2 464 017 A1

FIG. 41

ex214

Monitor ex213

Reproduction apparatus ex212

Broadcast satellite ex202

Cellular phone ex114

Antenna ex204

Antenna ex205

Car ex210

Broadcast station ex201

Cable ex203

Car navigation system ex211

Monitor ex219

ex215

STB ex217

SD

ex216

Reader/recorder ex218

Television ex300

ex200

EP 2 464 017 A1

FIG. 42

ex220
ex218
ex216
SD
ex215
Telephone
network
ex104

ex317

| Operation input unit | Bridge | Slot unit | Driver | Modem |

ex310
ex312
ex313
ex314
ex315
ex316

Control unit

ex306
ex309

ex320
ex318

Buffer
Audio signal
processing
unit
Buffer

ex301
ex302
ex303

ex321
ex304
ex319
ex307

ex204
Tuner
Modulation/
demodulation
unit
Multiplexing/
demultiplexing
unit
Buffer
Video signal
processing
unit
Buffer
Display
unit

ex203
ex305
ex308

Power supply circuit unit

ex311
ex500

ex300

EP 2 464 017 A1

FIG. 43

ex400

EP 2 464 017 A1

# FIG. 44

Optical disk
ex215

Recording blocks
ex231

Information track
ex230

Inner
circumference area — ex232

Data recording
area — ex233

Outer
circumference area — ex234

FIG. 45

ex500

**INTERNATIONAL SEARCH REPORT**

| International application No. |
| --- |
| PCT/JP2010/004958 |

A. CLASSIFICATION OF SUBJECT MATTER
*H03M7/30*(2006.01)i, *H04N7/30*(2006.01)i, *H04N7/32*(2006.01)i

According to International Patent Classification (IPC) or to both national classification and IPC

B. FIELDS SEARCHED

Minimum documentation searched (classification system followed by classification symbols)
H03M7/30, H04N7/30, H04N7/32

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 9-200762 A  (Daewoo Electronics Co., Ltd.), 31 July 1997 (31.07.1997), entire text; all drawings & US 5724096 A         & GB 2308771 A & KR 10-0255746 B1 | 1-26 |
| A | WO 2006/006564 A1  (Sony Corp.), 19 January 2006 (19.01.2006), entire text; all drawings & JP 2006-54846 A       & JP 2010-119153 A & JP 2010-136454 A       & JP 2010-141926 A & EP 1662801 A1         & CN 1860796 A | 1-26 |

☒ Further documents are listed in the continuation of Box C.　　☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 21 October, 2010 (21.10.10) | 02 November, 2010 (02.11.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/004958

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2004-46499 A  (Matsushita Electric Industrial Co., Ltd.), 12 February 2004 (12.02.2004), entire text; all drawings & US 2005/0080784 A1    & CN 1472964 A | 1-26 |
| A | JP 3-85080 A  (NEC Corp.), 10 April 1991 (10.04.1991), entire text; all drawings (Family: none) | 1-26 |

Form PCT/ISA/210 (continuation of second sheet) (July 2009)